# EUROPÄISCHE PATENTSCHRIFT

(11) **EP 3 587 536 B1**
(45) Veröffentlichungstag und Bekanntmachung des Hinweises auf die Patenterteilung: **24.03.2021**
(21) Anmeldenummer: 19180473.1
(22) Anmeldetag: 17.06.2019
(51) Int. Cl.: C09K 19/06, C09K 19/34, C09K 19/30, C09K 19/12

(54) **FLÜSSIGKRISTALLINES MEDIUM**
LIQUID CRYSTALLINE MEDIUM
MILIEU À BASE DE CRISTAUX LIQUIDES

(30) Priorität: 21.06.2018 DE 102018005326
(43) Veröffentlichungstag der Anmeldung: 01.01.2020
(73) Patentinhaber: Merck Patent GmbH, 64293 Darmstadt (DE)
(72) Erfinder: Hirschmann, Harald, 64291 DARMSTADT (DE); Schoen, Sabine, 45701 HERTEN (DE)

(56) Entgegenhaltungen:
- EP-A1- 2 937 401
- EP-A1- 2 957 618
- EP-A1- 2 985 334
- EP-A1- 3 067 406
- EP-A2- 3 235 894
- WO-A1-2016/146245

## Beschreibung

Die vorliegende Erfindung betrifft ein flüssigkristallines Medium (FK-Medium), dessen Verwendung für elektrooptische Zwecke, insbesondere für elektrooptische Anzeigen mit einer Aktivmatrix-Adressierung basierend auf dem ECB-Effekt sowie für IPS-Anzeigen (In Plane Switching) oder FFS-Anzeigen (Fringe Field Switching) und dieses Medium enthaltende FK-Anzeigen.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten K₃/K₁, hohe Werte für die optische Anisotropie Δn und Werte für die dielektrische Anisotropie von Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf (VA-Technologie = Vertical Aligned). Auch bei Anzeigen, die den sogenannten IPS- oder FFS-Effekt verwenden, können dielektrisch negative Flüssigkristallmedien zum Einsatz kommen.

Anzeigen, die den ECB-Effekt verwenden, haben sich als sogenannte VAN-(Vertically Aligned Nematic) Anzeigen beispielsweise in den Bauformen MVA (Multi-Domain Vertical Alignment, z.B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technnology ...", SID 2004 International Symposium, Digest of Technical Papers, XXXV, Buch II, S. 750 bis 753), PVA (Patterned Vertical Alignment, z.B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763), ASV- (Advanced Super View, z.B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757) Anzeigen, neben IPS (In Plane Switching) (z.B.: Yeo, S.D., Vortrag 15.3: "A LC Display for the TV Application", SID 2004 International Symposium, Digest of Technical Papers, XXXV, Buch II, S. 758 & 759) den lange bekannten TN- (Twisted Nematic) Anzeigen, als eine der drei zur Zeit wichtigsten neueren Typen von Flüssigkristallanzeigen, insbesondere für Fernsehanwendungen, etabliert. In allgemeiner Form werden die Technologien z.B. in Souk, Jun, SIDSeminar 2004, Seminar M-6: "Recent Advances in LCD Technology", Seminar Lecture Notes, M-6/1 bis M-6/26 und Miller, Ian, SIDSeminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten, insbesondere beim Schalten von Graustufen, immer noch ein noch nicht zufriedenstellend gelöstes Problem.

Für die technische Anwendung dieses Effektes in elektrooptischen Anzeigeelementen werden FK-Medien benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Medien eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Medien verwendbare Materialien zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor)-Transistoren auf Silizium-Wafer als Substrat.
2. Dünnfilm-Transistoren (TFT) auf einer Glasplatte als Substrat.

Bei Typ 1 wird als elektrooptischer Effekt üblicherweise die dynamische Streuung oder der Guest-Host-Effekt verwendet. Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet.

Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Der Begriff MFK-Anzeigen umfaßt hier jedes Matrix-Display mit integrier-ten nichtlinearen Elementen, d.h. neben der aktiven Matrix auch Anzeigen mit passiven Elementen wie Varistoren oder Dioden (MIM = Metall-Isola-tor-Metall).

Derartige MFK-Anzeigen eignen sich insbesondere für TV-Anwendungen (z.B. Taschenfernseher) oder für hochinformative Displays in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen. Es besteht somit immer noch ein großer Bedarf nach MFK-Anzeigen mit schnellen Schaltzeiten bei gleichzeitig großem Arbeitstemperaturbereich, und niedriger Schwellenspannung, mit deren Hilfe verschiedene Graustufen erzeugt werden können.

Der Nachteil der häufig verwendeten MFK-TN-Anzeigen beruht in ihrem vergleichsweise niedrigen Kontrast, der relativ hohen Blickwinkelabhängigkeit und der Schwierigkeit in diesen Anzeigen Graustufen zu erzeugen.

Wesentlich bessere Blickwinkelabhängigkeiten weisen VA-Displays auf und werden daher hauptsächlich für Fernseher und Monitore verwendet. Hier besteht jedoch weiterhin der Bedarf die Schaltzeiten zu verbessern, insbesondere im Hinblick auf die Verwendung für Fernseher mit "Frame Rates" (Bildwechselfrequenz/Wiederholraten) von mehr als 60 Hz. Dabei dürfen allerdings die Eigenschaften, wie beispielsweise die Tieftemperaturstabilität nicht verschlechtert werden.

Der Erfindung liegt die Aufgabe zugrunde, Flüssigkristall-Mischungen, insbesondere für Monitor- und TV-Anwendungen, welche auf dem ECB- oder auf dem IPS- oder FFS-Effekt beruhen, bereitzustellen, die die oben angegebenen Nachteile nicht oder nur in geringerem Maße aufweisen. Insbesondere muß für Monitore und Fernseher gewährleistet sein, daß diese auch bei extrem hohen und extrem niedrigen Temperaturen arbeiten und gleichzeitig sehr niedrige Schaltzeiten aufweisen und gleichzeitig ein verbessertes Reliability-Verhalten, insbesondere kein oder ein deutlich verringertes Image-Sticking nach langen Laufzeiten aufweisen.

Überraschenderweise ist es möglich das Verhältnis aus Rotationsviskosität γ₁ und der elastischen Konstante K₃₃ zu verringern (γ₁ / K₃₃) und damit die Schaltzeiten zu verbessern, und gleichzeitig eine hohe Reliability und eine hohe Tieftemperaturstabilität (LTS) zu erreichen, wenn man jeweils eine Verbindung der untenstehenden Formeln IA und/oder IB sowie eine oder mehrere Verbindungen der untenstehenden Formel EY in Flüssigkristallmischungen verwendet, insbesondere in LC-Mischungen mit negativer dielektrischer Anisotropie, vorzugsweise für VA-, IPS- und FFS-Displays, ferner für PM (passive matrix)-VA-Displays.

Die Kombination der Verbindungen der Formeln IA und/oder IB mit den Verbindungen der Formel EY führt überraschenderweise zu flüssigkristallinen Medien, die gleichzeitig eine sehr niedrige Rotationsviskosität und einen hohen Absolutwert der dielektrischen Anisotropie sowie hohe Reliability und hohe LTS aufweisen. Daher können Flüssigkristallmischungen, vorzugsweise VA-, IPS- und FFS-Mischungen, hergestellt werden, die sehr niedrige Schaltzeiten, gleichzeitig gute Phaseneigenschaften und ein gutes Tieftemperaturverhalten aufweisen.

Gegenstand der Erfindung ist somit ein flüssigkristallines Medium, vorzugsweise mit negativer dielektrischer Anisotropie (Δε), welches eine oder mehrere Verbindungen der Formel EY 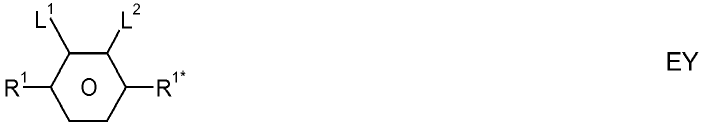 und
eine oder mehrere Verbindungen ausgewählt aus der Gruppe der Verbindungen der Formeln IA und IB 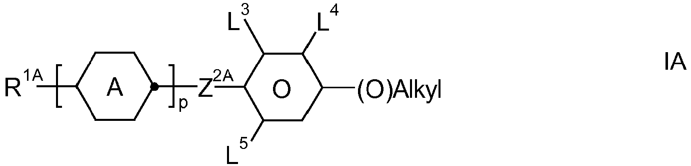 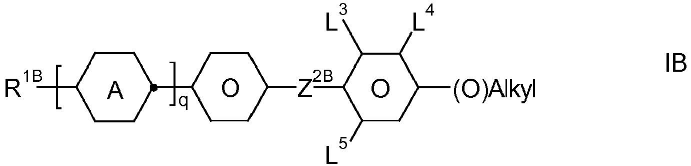 und/oder eine oder mehrere Verbindungen ausgewählt aus der Gruppe der Verbindungen der Formeln BF-1, BF-2, BS-1 und BS-2: 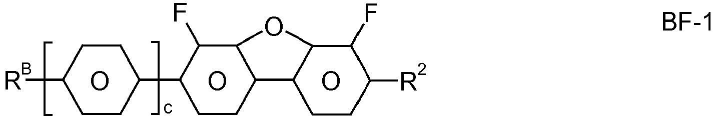 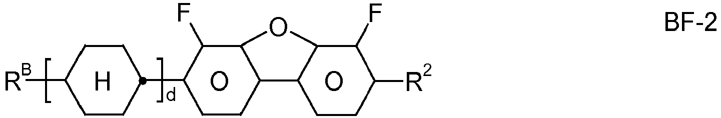 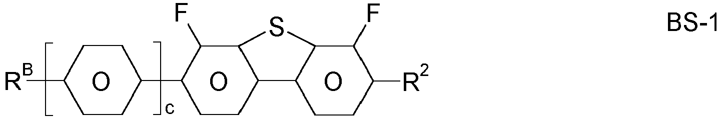 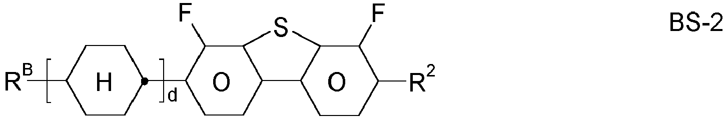 enthält,
worin die einzelnen Reste jeweils unabhängig voneinander, und bei jedem Auftreten gleich oder verschieden, eine der folgenden Bedeutungen besitzen:
- R¹: einen Alkenyloxyrest mit 2 bis 7 C-Atomen,
- R^{1*}: einen Alkyloxyrest mit 1 bis 6 C-Atomen oder einen Alkenyloxyrest mit 2 bis 7 C-Atomen,
- R^{1A} , R^{1B}, und R^{B}: H, einen unsubstituierten, einen einfach durch CN oder CF₃ oder einen mindestens einfach durch Halogen substituierten Alkyl- oder Alkenylrest mit bis zu 15 C-Atomen, wobei in diesen Resten auch eine oder mehrere CH₂-Gruppen durch -O-, -S-, 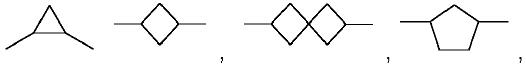 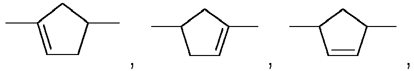 -C≡C-, -CF₂O-, -OCF₂-, -OC-O- oder -O-CO- so ersetzt sein können, daß O-Atome nicht direkt miteinander verknüpft sind, 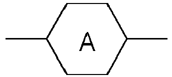 bei jedem Auftreten, gleich oder verschieden, 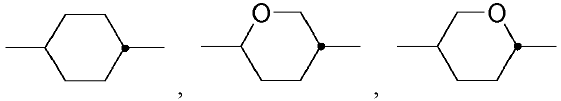 oder 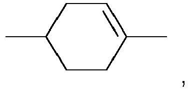 bevorzugt 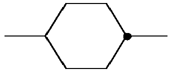
- L¹, L²: unabhängig voneinander F oder Cl, bevorzugt F,
- L³, L⁴: jeweils unabhängig voneinander F, Cl, CF₃ oder CHF₂, bevorzugt F,
- L⁵: H oder Methyl,
- Alkyl: ein geradkettiger Alkylrest mit 1 bis 6 C-Atomen, bevorzugt Methyl, Ethyl, n-Propyl oder n-Butyl,
- (O): O oder eine Einfachbindung,
- Z^{2A} und Z^{2B}: jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, oder -CH=CHCH₂O-,
- p: 1 oder 2,
- q: 0 oder 1,
- c: 0, 1 oder 2, und
- d: 1 oder 2 ist.

Die Verbindungen der Formel EY sind aus EP 3 235 894 A2 grundsätzlich bekannt. Medien mit strukturell ähnlichen Verbindungen, in denen R¹ und R^{1*} beid Alkyl bedeuten, sind in EP 2 985 334 A1, WO 2016/146245 A1, EP 2 937 401 A1, EP 2 957 618 A1 und EP 3 067 406 A1 offengelegt.

Ein weiterer Gegenstand der Erfindung ist eine elektrooptische Anzeige mit einer Aktivmatrix-Adressierung, insbesondere basierend auf dem ECB-, VA-, PS-VA, PVA-, PM-VA, SS-VA, PALC-, IPS-, PS-IPS-, FFS- oder PS-FFS-Effekt, insbesondere auf dem UB-FFS- oder PS-FFS-Effekt, dadurch gekennzeichnet, daß sie als Dielektrikum ein flüssigkristallines Medium wie vor- und nachstehend beschrieben enthält.

Die erfindungsgemäßen flüssigkristallinen Medien zeigen vorzugsweise sehr breite nematische Phasenbereiche mit Klärpunkten ≥ 70 °C, vorzugsweise ≥ 74 °C, sehr günstige Werte für die kapazitive Schwelle, relativ hohe Werte für die Holding Ratio und gleichzeitig sehr gute Tieftemperaturstabilitäten bei -20 °C und -30 °C sowie niedrige Rotationsviskositäten und kurze Schaltzeiten. Die erfindungsgemäßen flüssigkristallinen Medien zeichnen sich weiterhin dadurch aus, daß zusätzlich zur Verbesserung der Rotationsviskosität γ₁, relativ hohe Werte der elastischen Konstanten K₃₃ zur Verbesserung der Schaltzeiten zu beobachten sind, also ein besonders niedriges Verhältnis γ₁ / K₃₃.

In den vor- und nachstehenden Formeln kann ein Alkylrest oder Alkoxyrest geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3- oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Ein Alkenylrest kann geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls ein Alkyl- oder Alkenylrest mindestens einfach durch Halogen substituiert ist, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Besonders bevorzugt sind Verbindungen, worin "Alkenyl" Vinyl, Prop-1-enyl, Prop-2-enyl oder But-3-enyl bedeutet.

Einige bevorzugte Ausführungsformen der erfindungsgemäßen Mischungen werden im Folgenden genannt.

Besonders bevorzugt sind Verbindungen der Formel EY ausgewählt aus der Gruppe bestehend aus den folgenden Unterformeln:

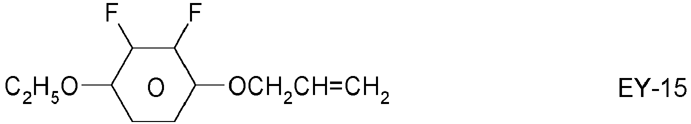

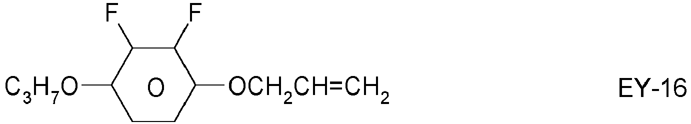

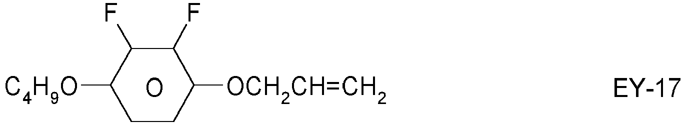

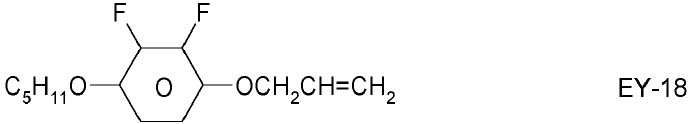

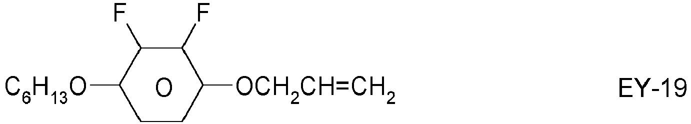

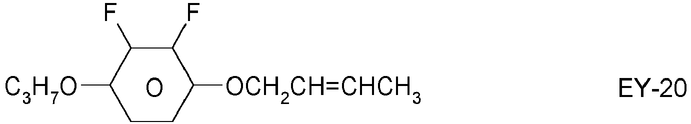

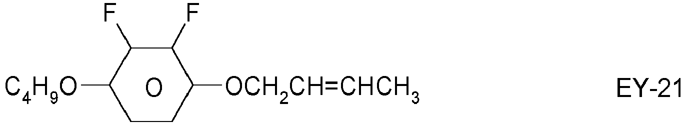

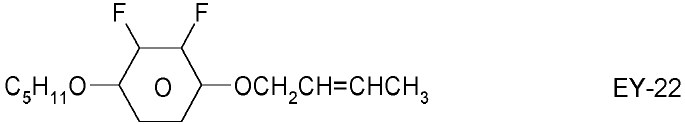

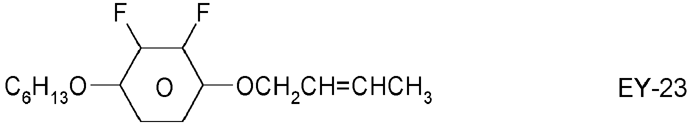

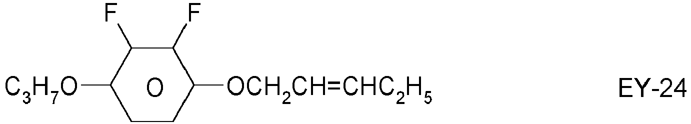

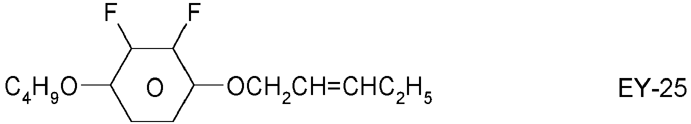

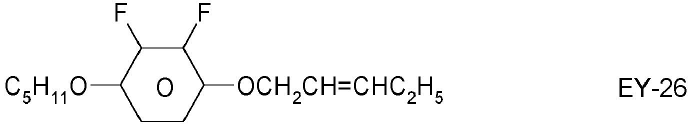

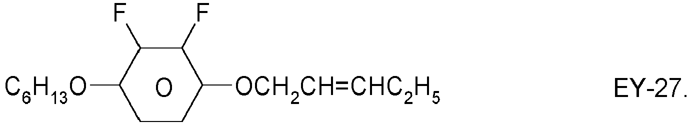

Ganz besonders bevorzugt ist die Verbindung der Formel EY-15.

In einer bevorzugten Ausführungsform der vorliegenden Erfindung enthält das Medium eine oder meherere Verbindungen ausgewählt aus der Gruppe der Verbindungen der Formeln IA und IB, worin Z^{2A} und Z^{2B} unabhängig voneinander -CH₂CH₂-, -CH₂O-, oder -OCH₂- bedeuten, ganz besonders bevorzugt -CH₂O- oder -OCH₂-.

Besonders bevorzugte Verbindungen der Formeln IA und IB sind die Verbindungen der Unterformeln IA-1 bis IA-192: 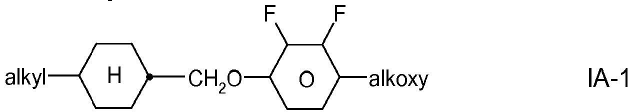 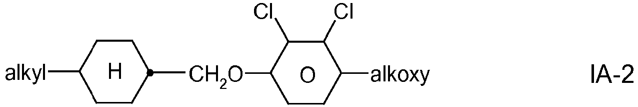 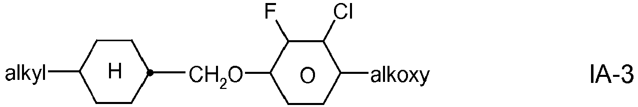 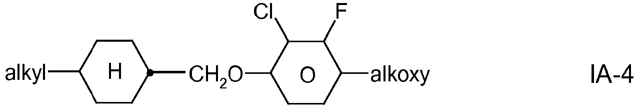 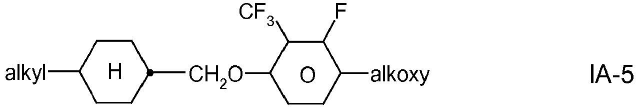 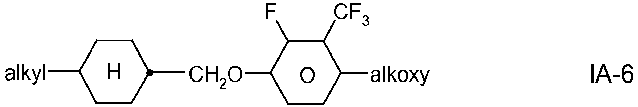 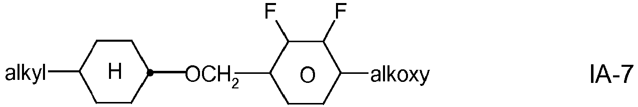 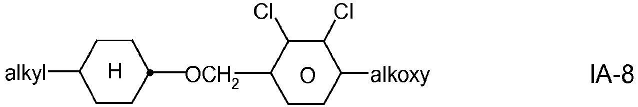 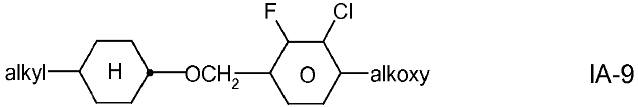 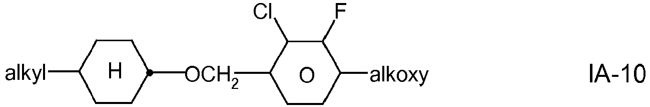 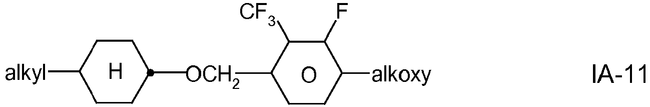 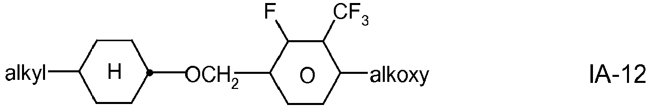 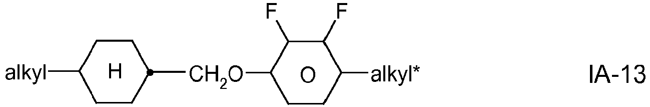 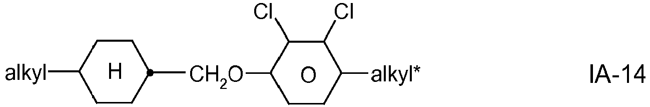 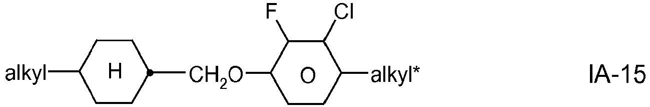 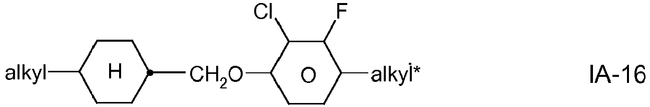 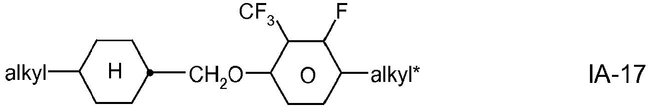 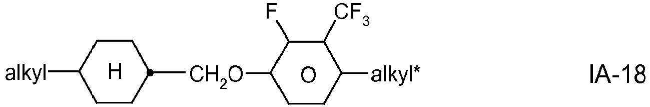 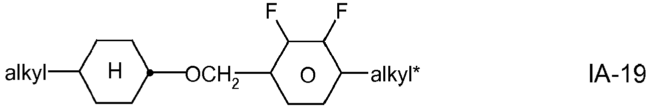 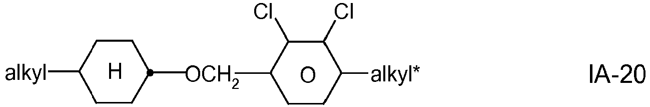 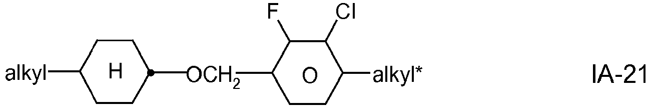 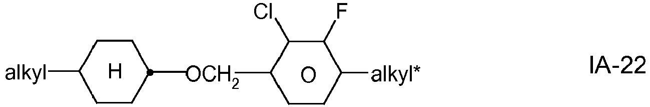 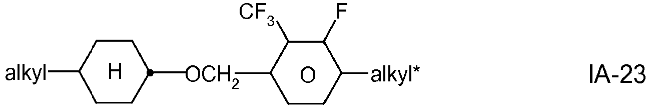 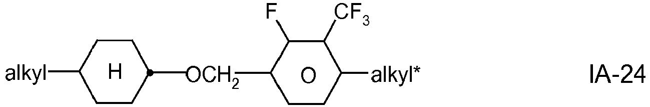 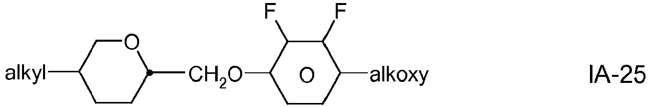 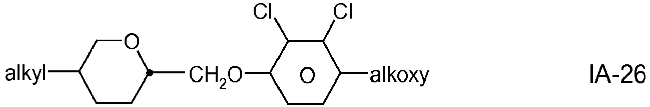 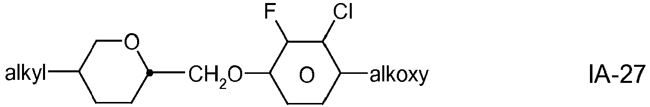 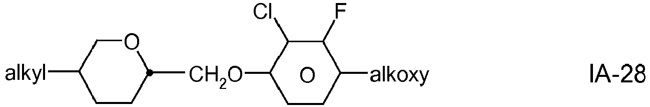 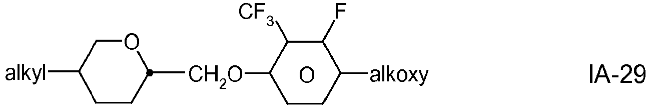 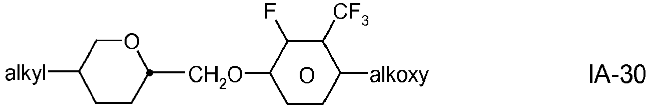 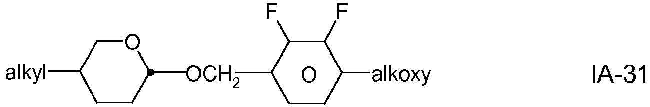 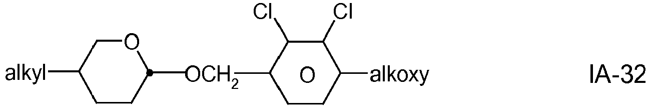 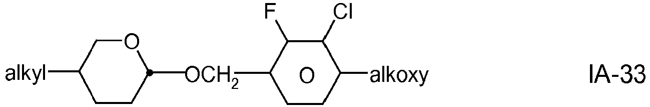 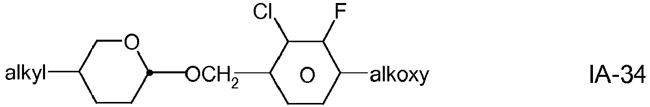 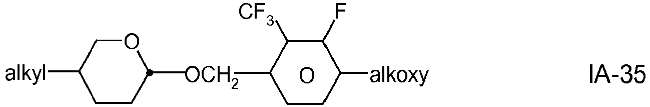 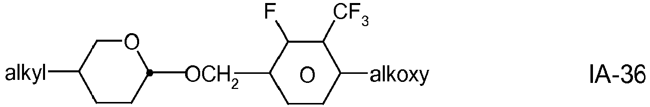 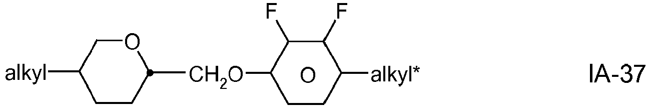 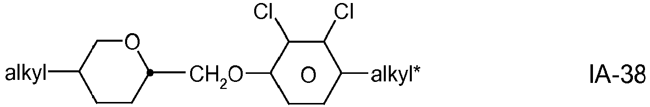 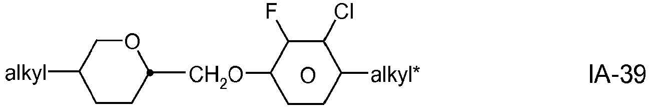 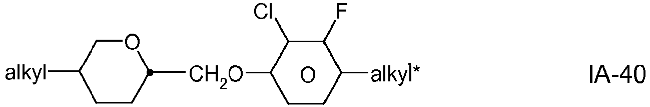 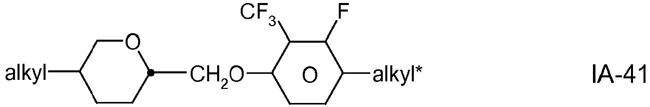 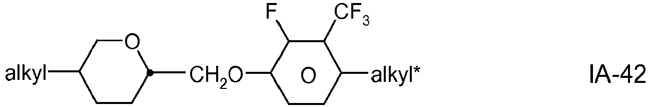 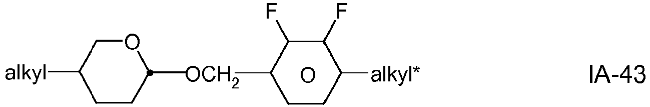 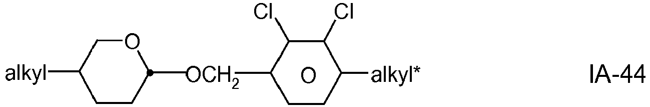 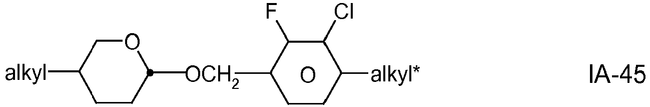 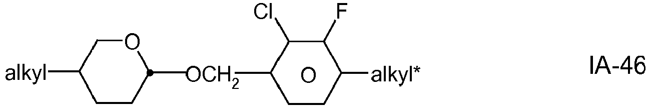 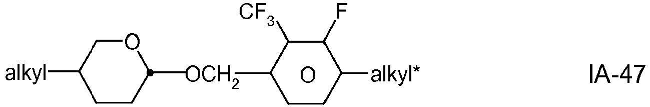 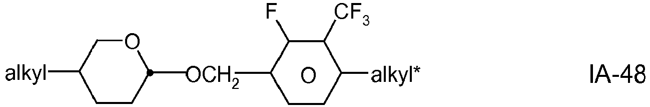 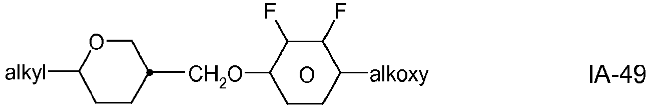 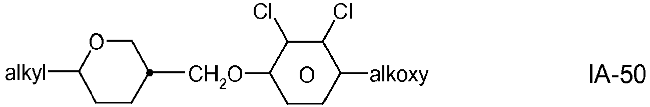 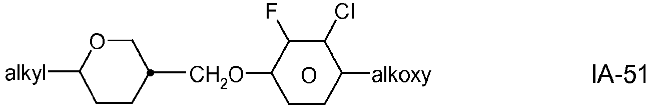 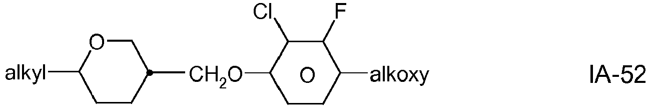 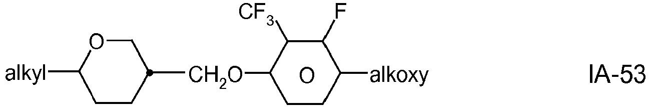 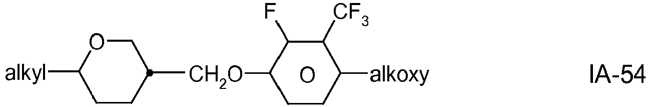 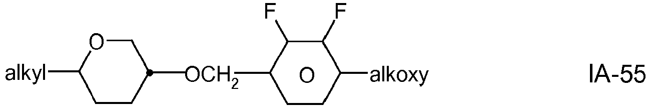 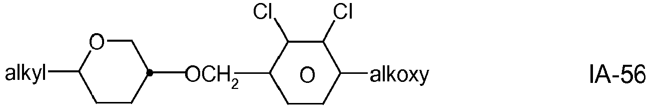 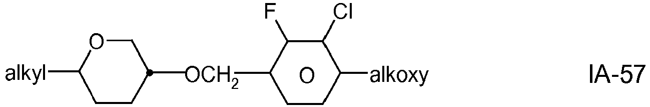 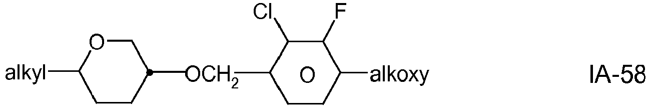 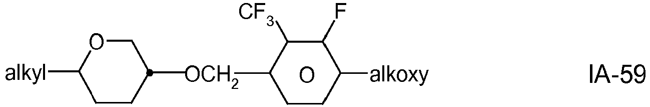 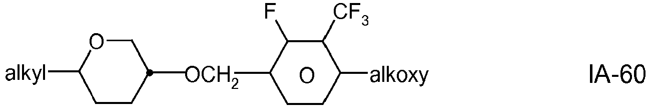 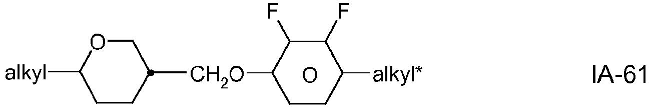 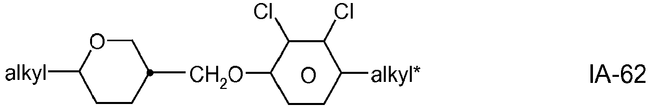 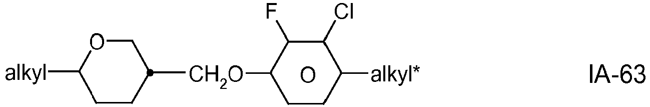 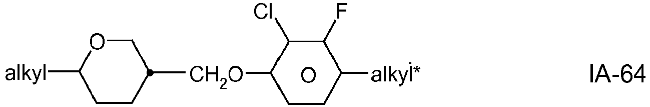 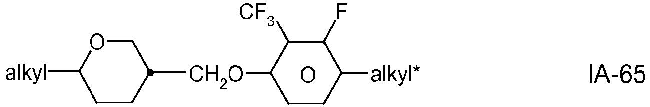 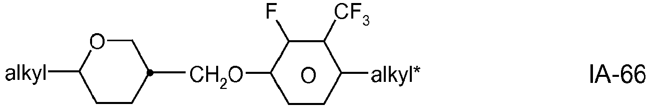 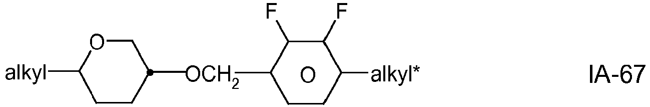 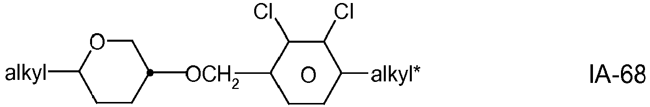 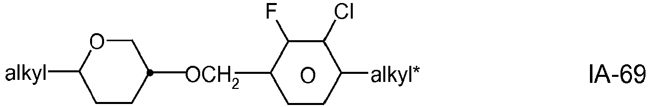 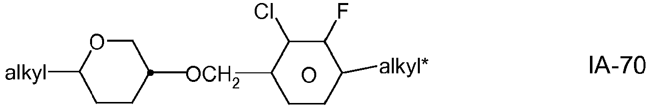 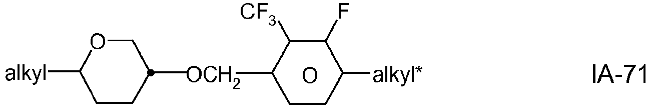 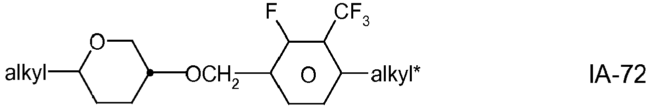 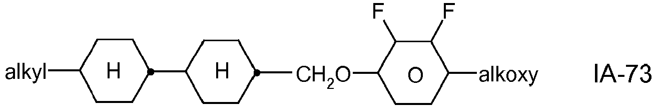 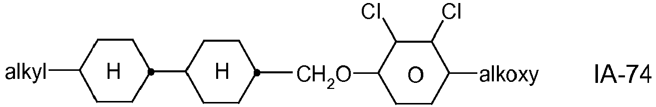 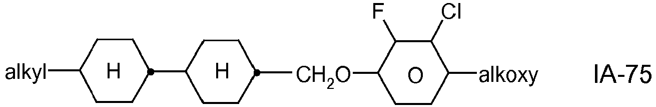 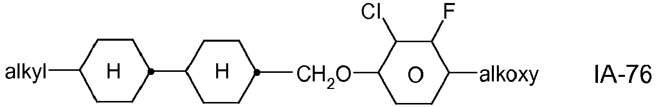 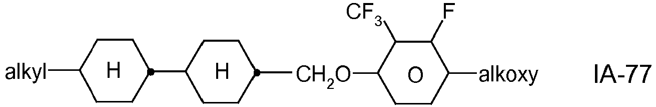 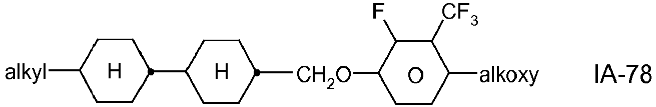 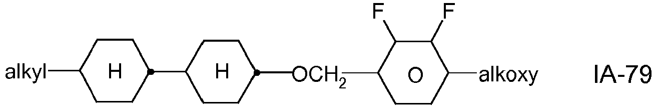 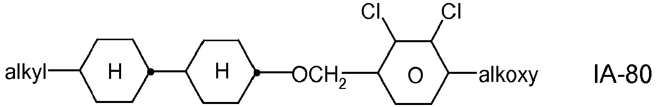 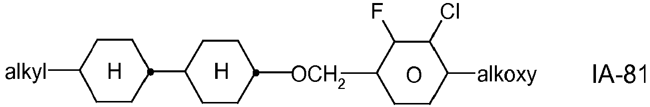 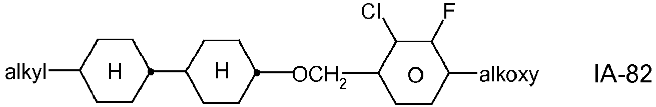 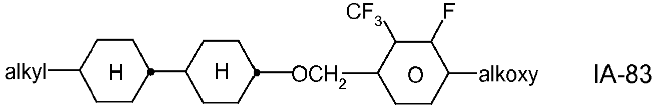 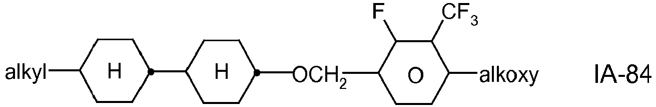 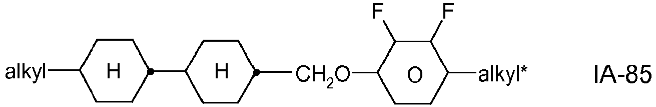 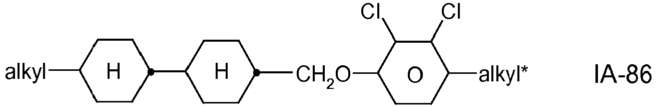 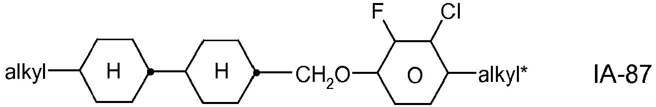 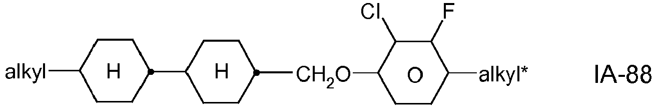 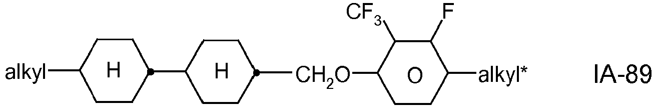 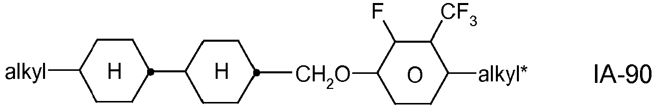 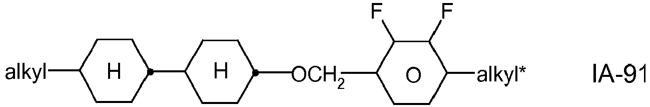 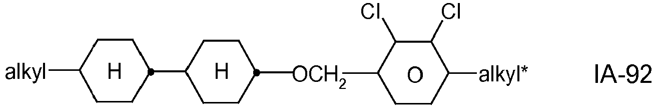 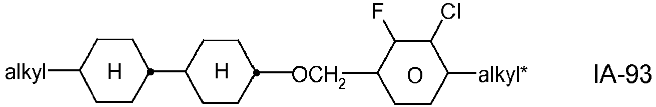 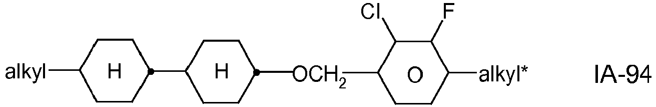 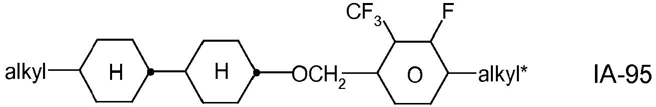 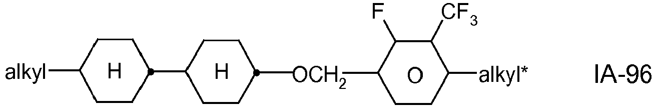 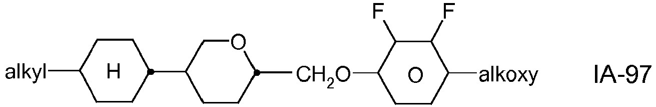 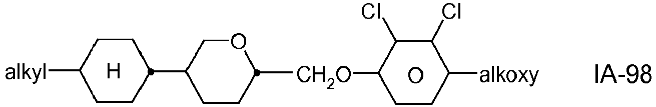 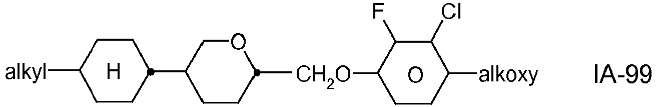 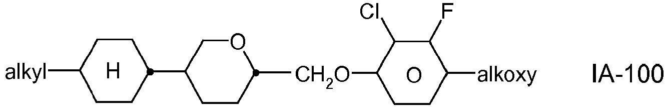 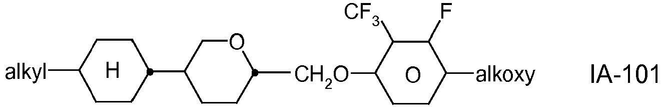 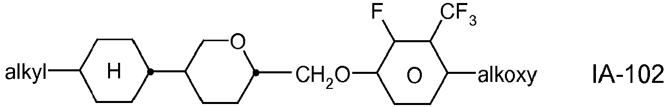 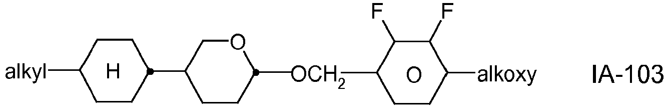 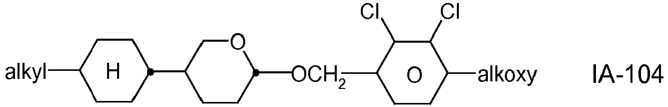 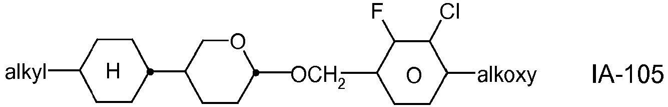 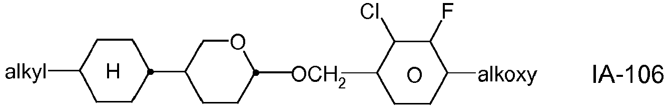 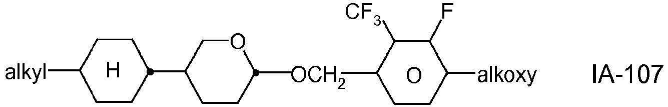 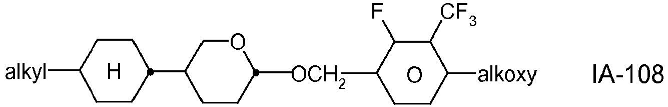 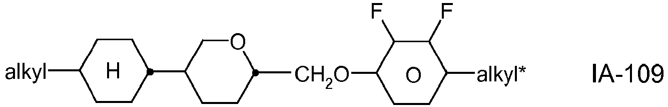 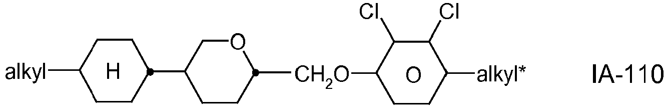 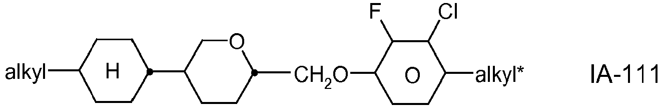 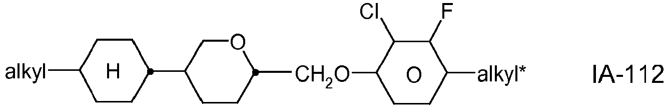 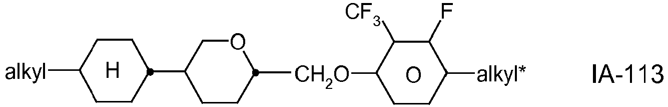 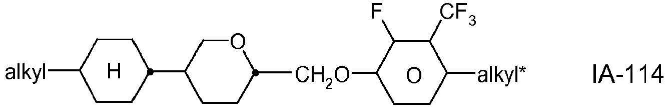 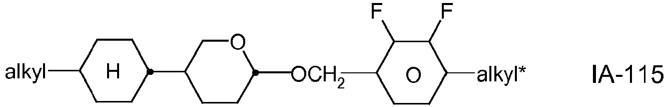 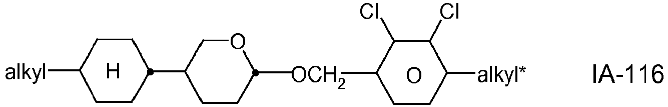 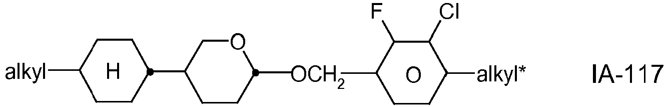 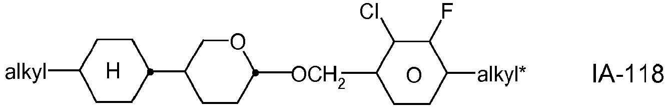 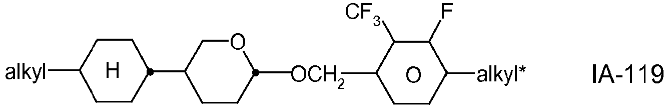 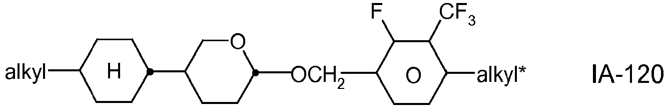 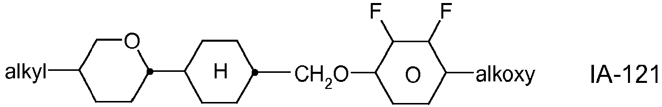 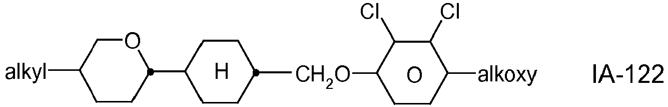 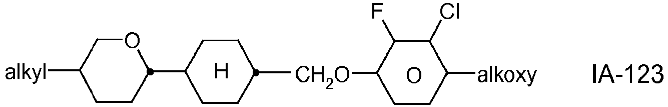 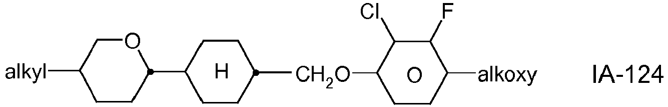 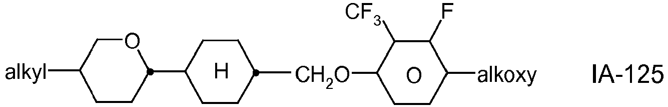 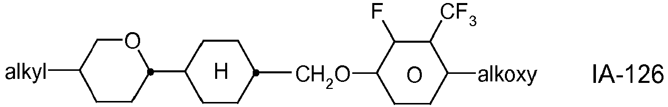 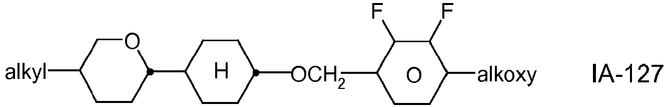 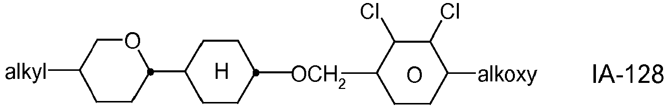 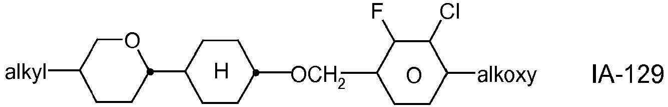 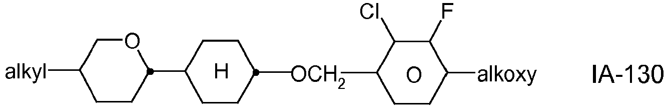 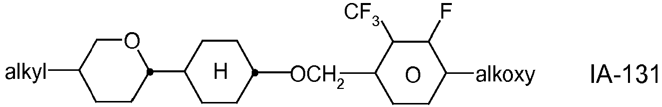 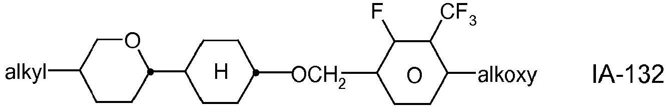 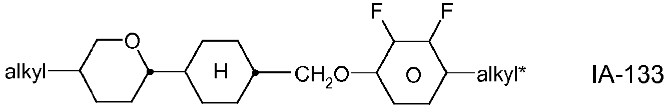 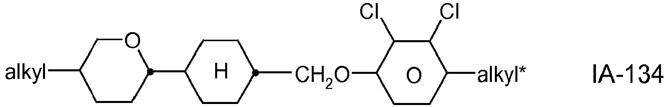 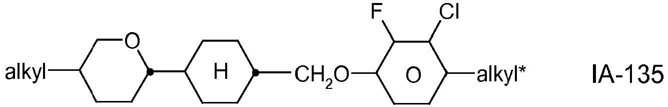 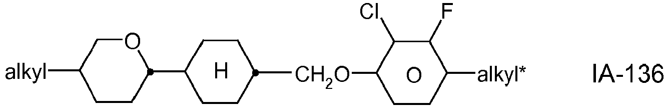 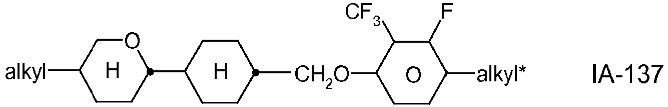 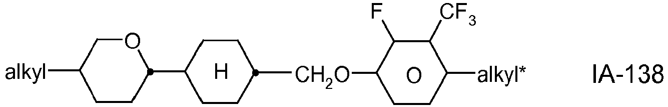 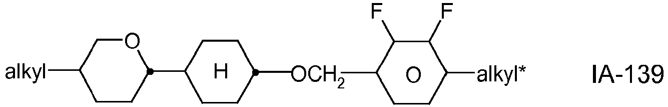 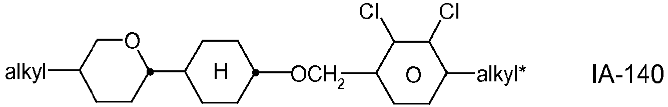 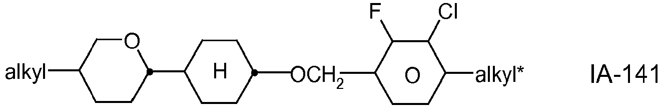 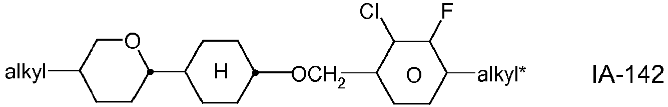 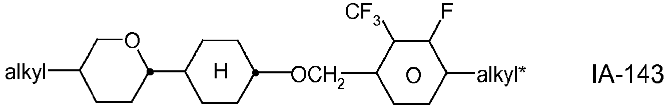 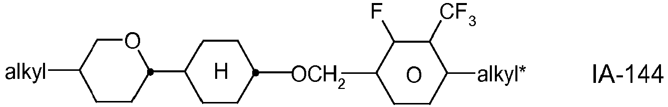 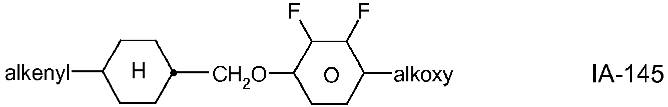 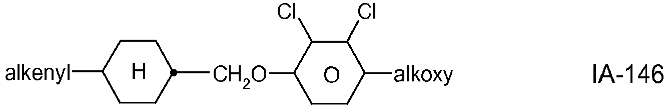 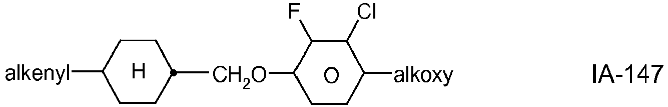 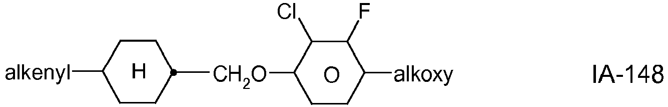 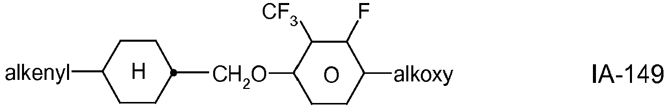 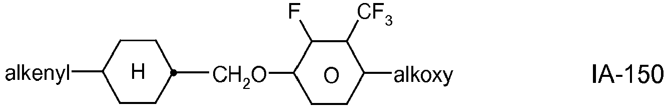 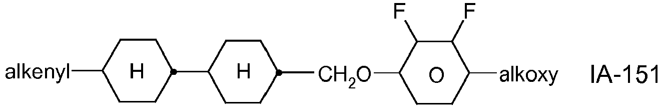 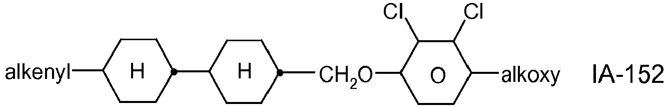 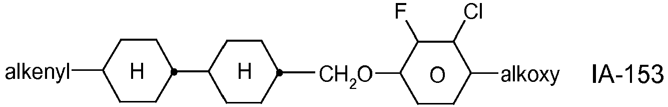 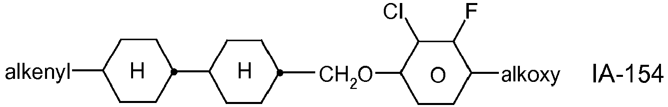 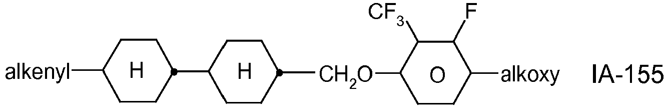 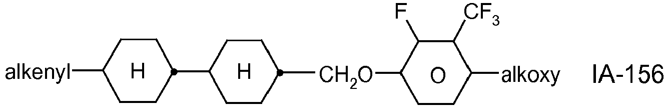 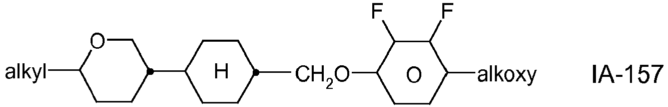 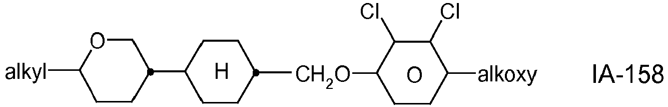 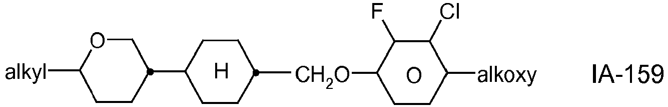 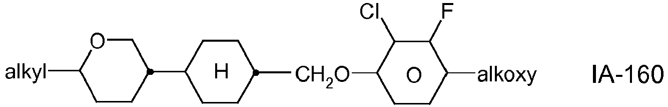 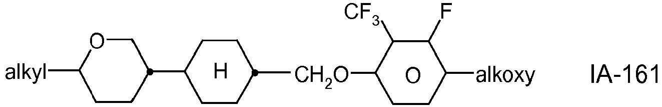 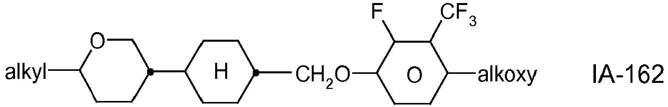 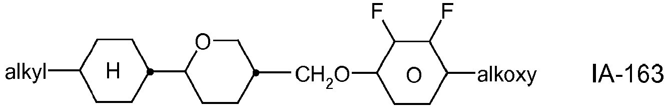 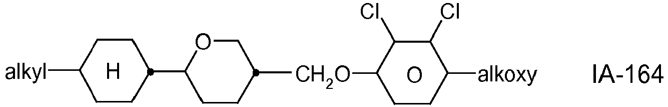 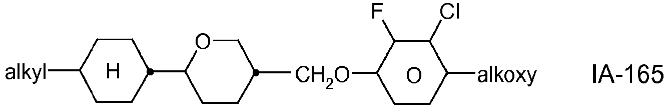 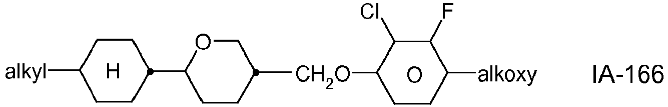 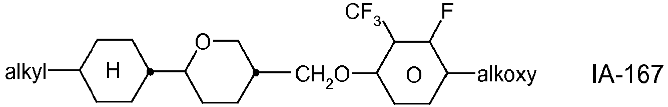 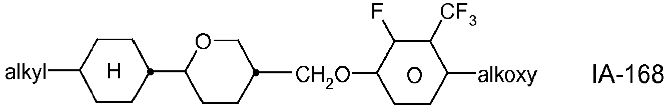 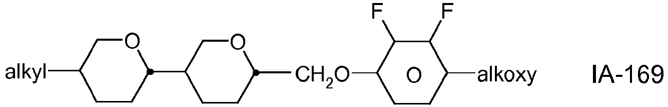 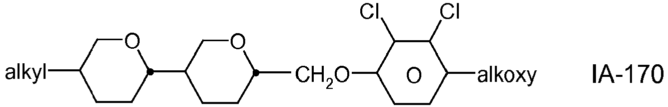 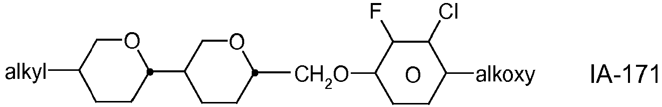 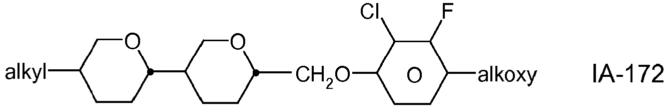 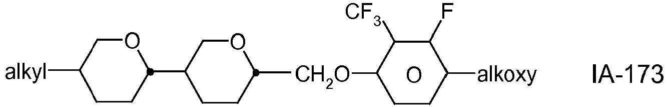 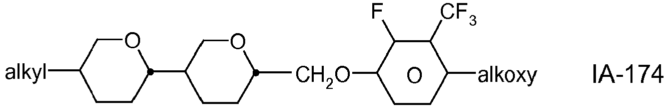 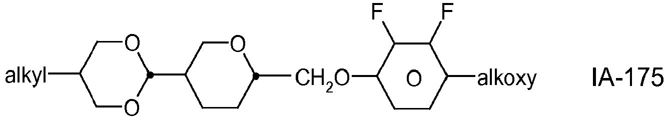 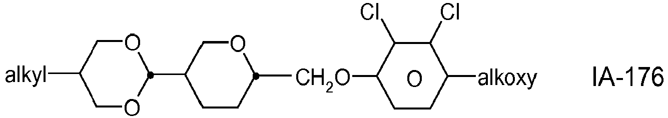 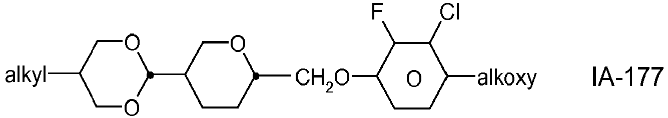 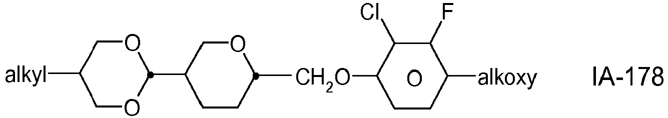 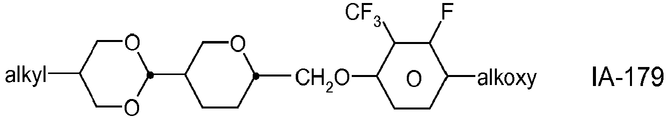 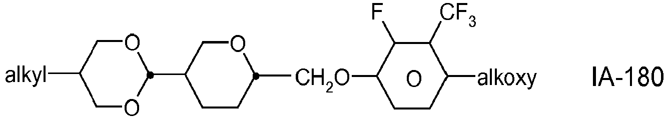 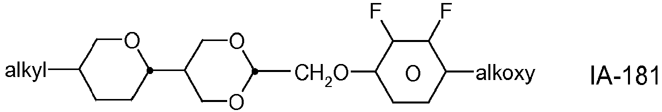 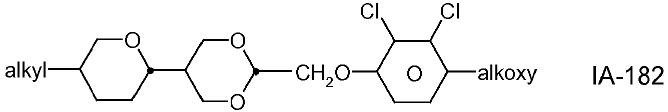 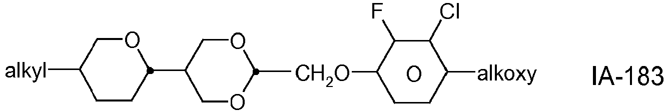 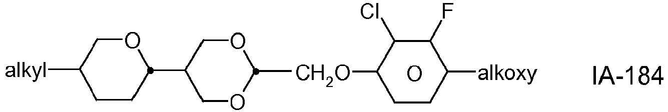 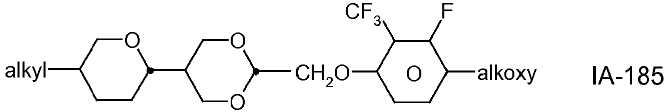 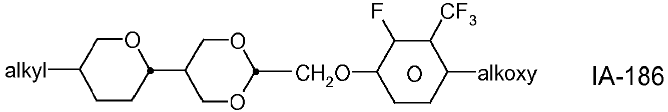 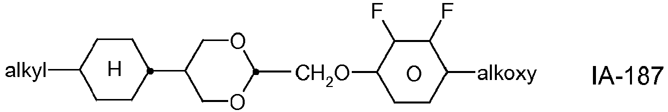 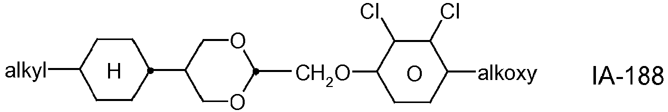 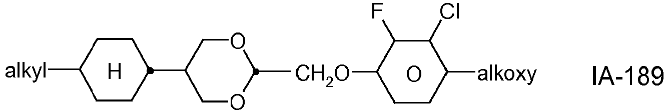 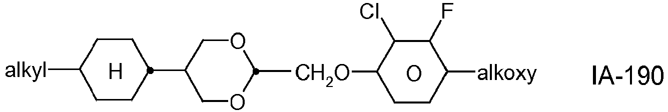 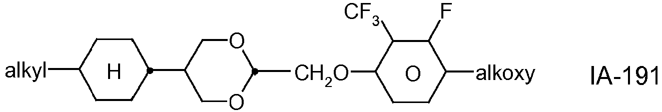 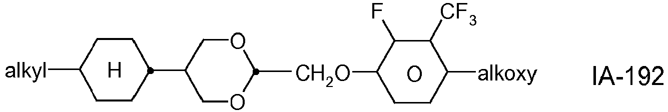 worin
alkyl und alkyl* jeweils unabhängig voneinander einen geradkettigen Alkylrest mit 1-6 C-Atomen, alkoxy einen geradkettigen Alkoxyrest mit 1-6 C-Atome, und alkenyl einen geradkettigen Alkenylrest mit 2-6 C-Atomen bedeuten.

Von den genannten Unterformeln IA-1 bis IA-192 sind besonders die Verbindungen der Formeln IA-1, IA-13, IA-73 und IA-85 bevorzugt, insbesondere die Verbindungen der Formeln IA-1 und IA-73.

In einer ganz besonders bevorzuten Ausführungsform enthalten die erfindungsgemäßen Mischungen eine oder mehrere Verbindungen der Formel IA-1 und eine oder mehrer Verbindungen der Formel IA-73.

Ganz besonders bevorzugt enthalten die erfindungsgemäßen Mischungen mindestens eine Verbindung aus der folgenden Gruppe:

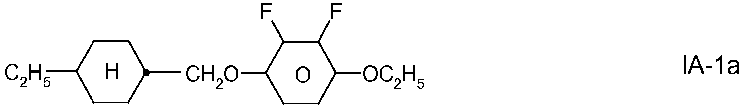

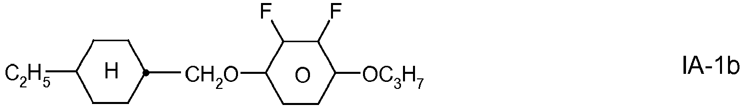

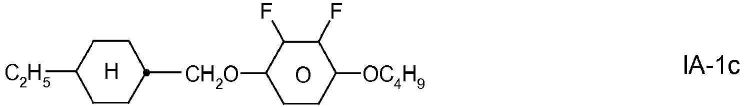

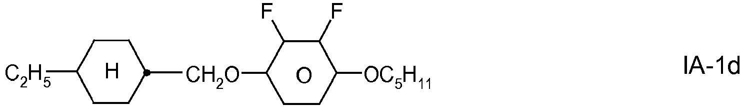

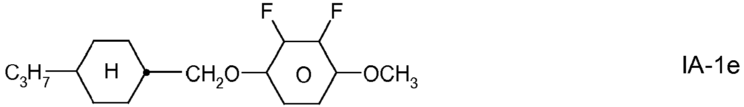

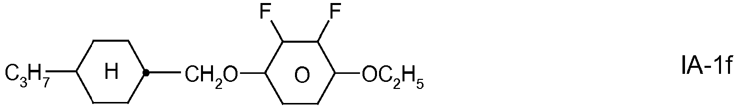

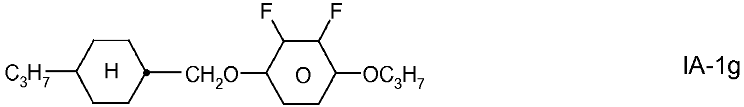

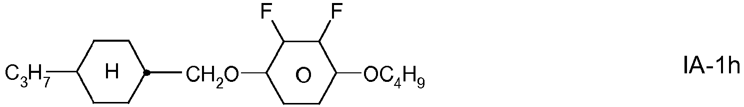

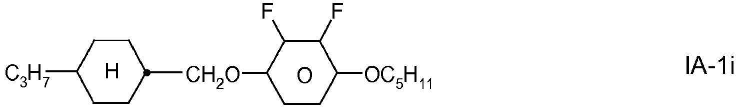

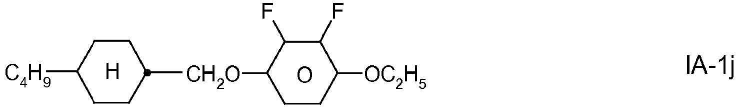

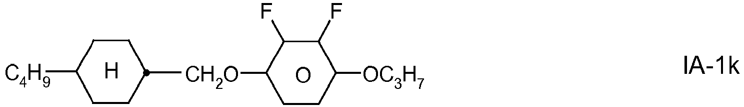

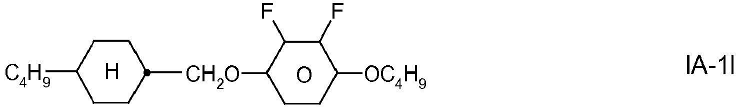

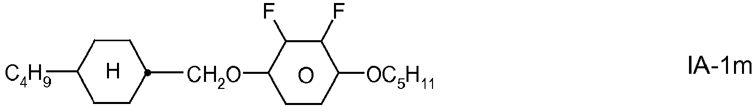

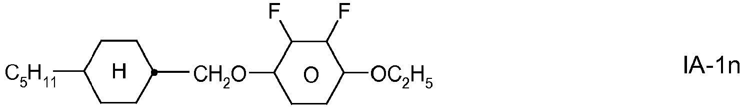

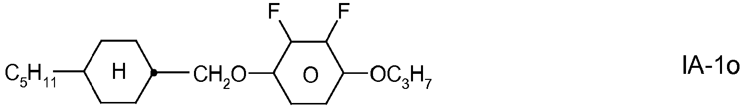

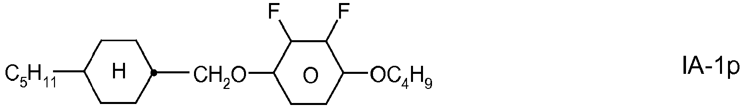

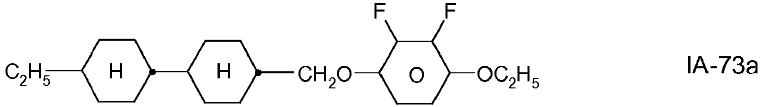

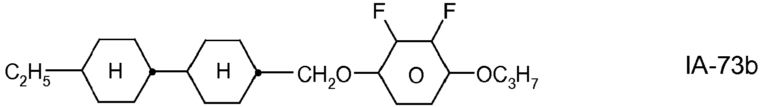

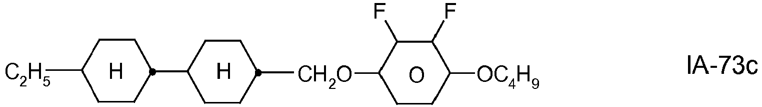

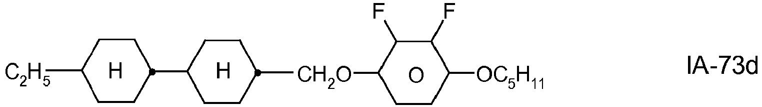

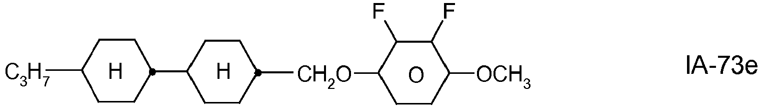

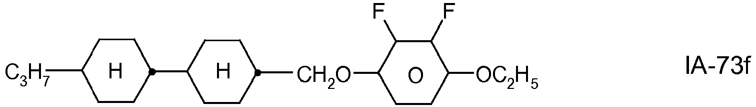

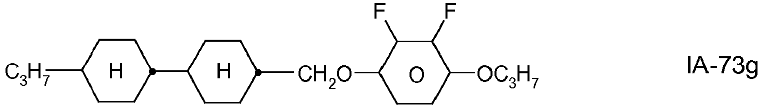

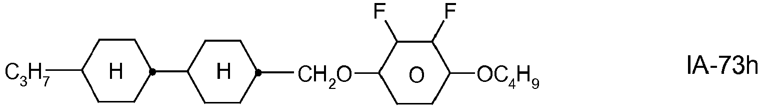

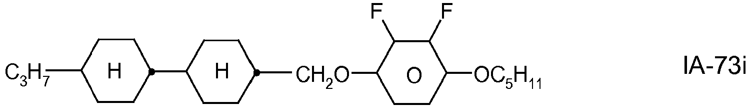

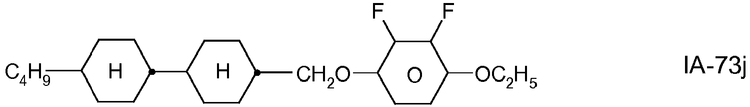

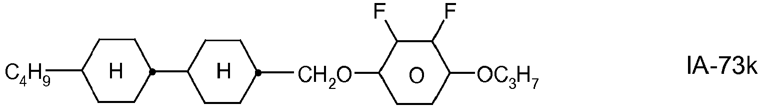

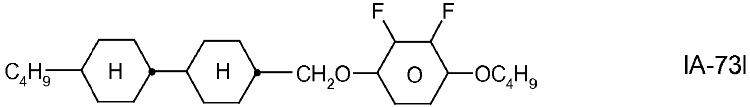

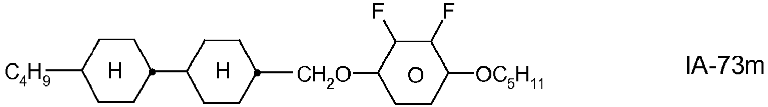

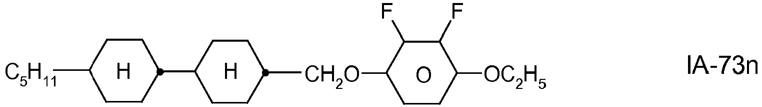

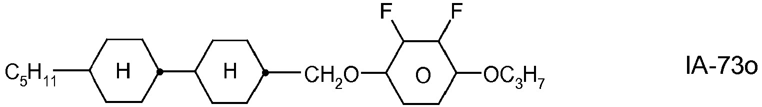

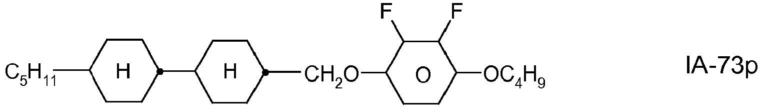

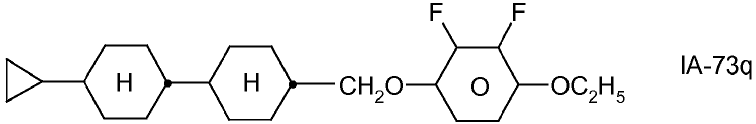

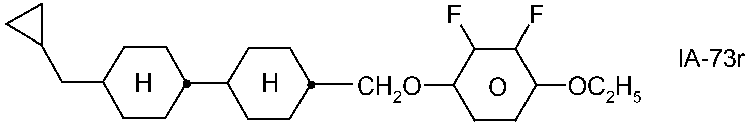

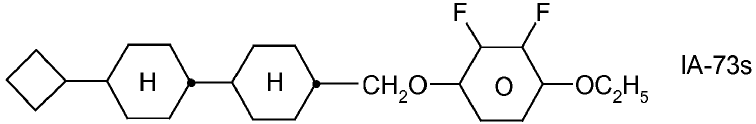

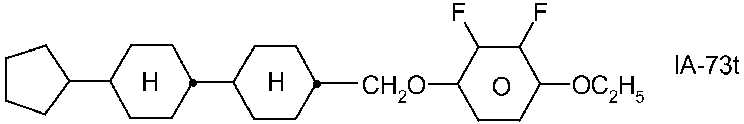

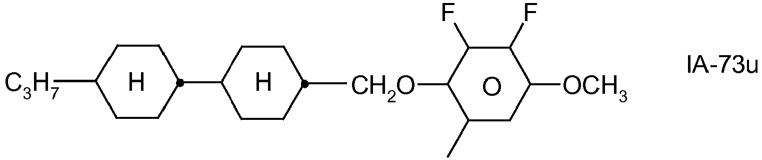

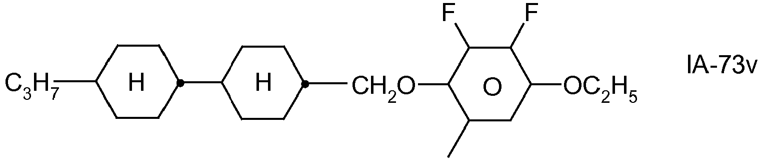

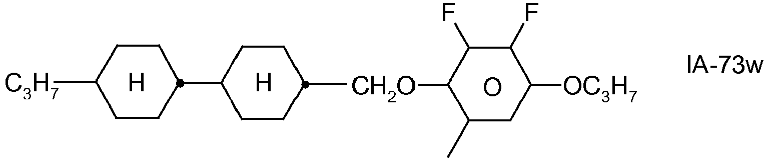

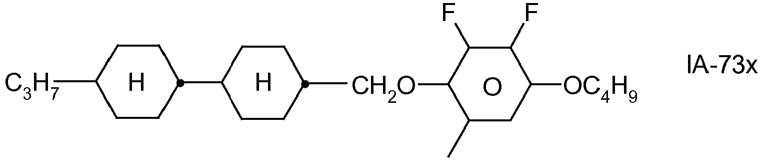

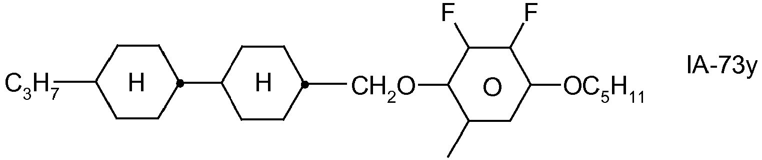

Von den bevorzugten Verbindungen der Formeln IA-1a bis IA-1p und IA-73a bis IA-73y, sind die Verbindungen IA-1f und IA-73f ganz besonders bevorzugt.

Besonders bevorzugt enthalten die erfindungsgemäßen Mischungen die Verbindungen IA-1f oder IA-73f.

Ganz besonders bevorzugt enthalten die erfindungsgemäßen Mischungen die Verbindungen IA-1f und IA-73f.

Bevorzugte Verbindungen der Formeln BF und BS sind ausgewählt aus den Verbindungen der folgenden Unterformeln: 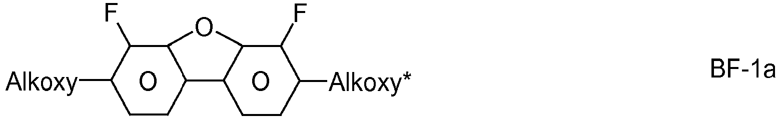 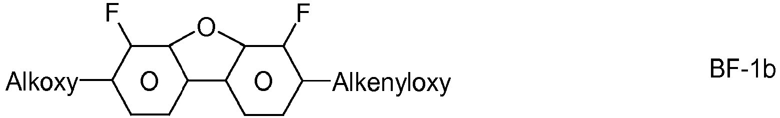 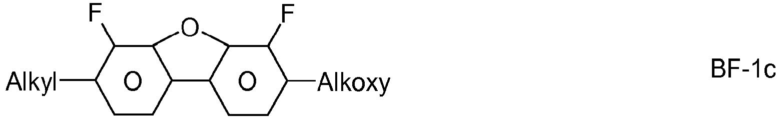 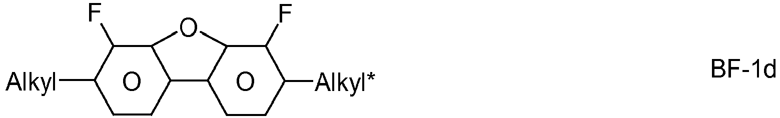 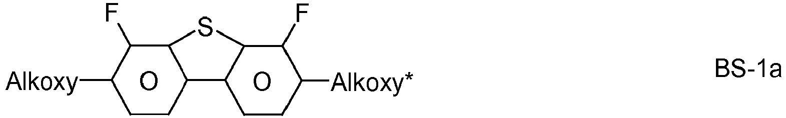 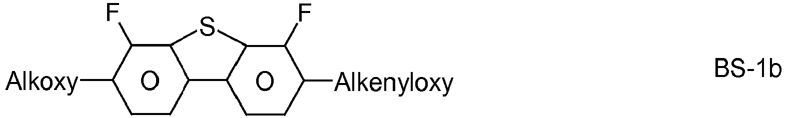 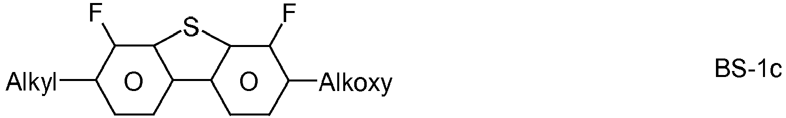 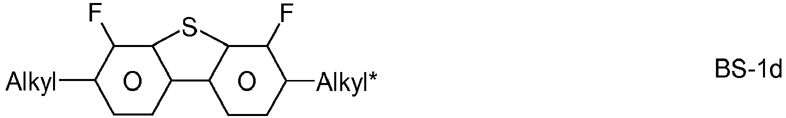 worin
- Alkyl und Alkyl*: jeweils unabhängig voneinander einen geradkettigen Alkylrest mit 1-6 C-Atomen, und
- Alkenyl und Alkenyl*: jeweils unabhängig voneinander einen geradkettigen Alkenylrest mit 2-6 C-Atomen, und
- Alkenyloxy: einen geradkettigen Alkenyloxyrest mit 2-6 C-Atomen
bedeuten.

Im Folgenden werden weitere bevorzugte Ausführungsformen für das erfindungsgemäße flüssigkristalline Medium angeführt:
a) Flüssigkristallines Medium, welches zusätzlich eine oder mehrere Verbindungen ausgewählt aus der Gruppe der Verbindungen der Formeln IIA, IIB und IIC enthält, 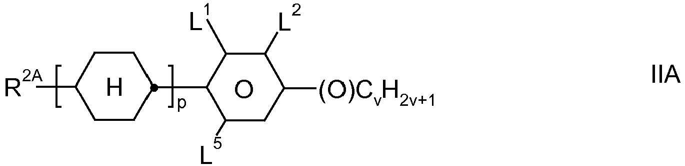 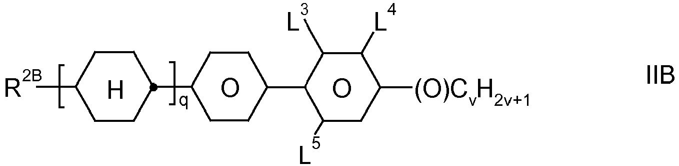 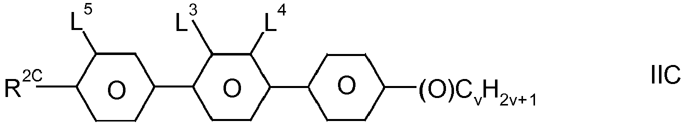 worin
   - R^{2A}, R^{2B} und R^{2C}: jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 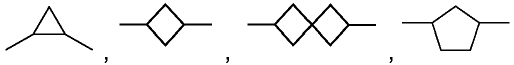 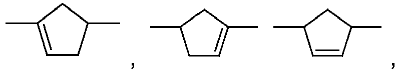 -C≡C-, -CF₂O-, -OCF₂-, -OC-O- oder -O-CO- so ersetzt sein können, daß O-Atome nicht direkt miteinander verknüpft sind,
   - L¹⁻⁴: jeweils unabhängig voneinander F, Cl, CF₃ oder CHF₂,
   - L⁵: H oder Methyl,
   - p: 1 oder 2,
   - q: 0 oder 1,
   - v: eine ganze Zahl von 1 bis 6, und
   - (O): ein Sauerstoffatom oder eine Einfachbindung
   bedeuten.
   In den Verbindungen der Formeln IIA, IIB und IIC bedeuten R^{2A}, R^{2B} und R^{2C} jeweils vorzugsweise Alkyl mit 1-6 C-Atomen, insbesondere CH₃, C₂H₅, n-C₃H₇, n-C₄H₉, n-C₅H₁₁, oder Cyclopropyl, Cyclobutyl, Cyclopentyl oder Cyclopropylmethyl.
   In den Verbindungen der Formeln IIA und IIB bedeuten L¹, L², L³ und L⁴ vorzugsweise L¹ = L² = F und L³ = L⁴ = F, ferner L¹ = F und L² = Cl, L¹ = Cl und L² = F, L³ = F und L⁴ = Cl, L³ = Cl und L⁴ = F. Z² und Z^{2'} bedeuten in den Formeln IIA und IIB vorzugsweise jeweils unabhängig voneinander eine Einfachbindung, ferner eine -C₂H₄- oder-CH₂O-Brücke.
   Sofern in der Formel IIB Z² = -C₂H₄- oder -CH₂O- ist, ist Z^{2'} vorzugsweise eine Einfachbindung bzw. falls Z^{2'} = -C₂H₄- oder -CH₂O-bedeutet, ist Z² vorzugsweise eine Einfachbindung. In den Verbindungen der Formeln IIA und IIB bedeutet (O)CᵥH₂ᵥ₊₁ vorzugsweise OCᵥH₂ᵥ₊₁, ferner CᵥH₂ᵥ₊₁. In den Verbindungen der Formel IIC bedeutet (O)CᵥH₂ᵥ₊₁ vorzugsweise CᵥH₂ᵥ₊₁. In den Verbindungen der Formel IIC bedeuten L³ und L⁴ vorzugsweise jeweils F.
   Bevorzugte Verbindungen der Formeln IIA, IIB und IIC werden nachfolgend genannt: 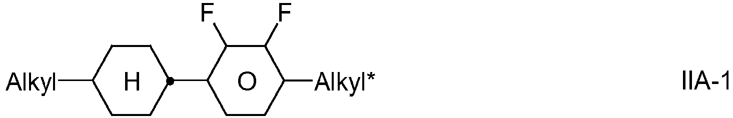 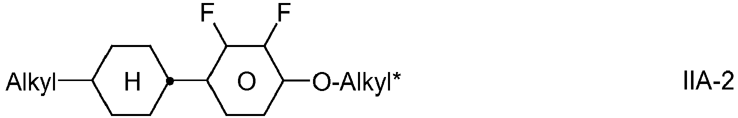 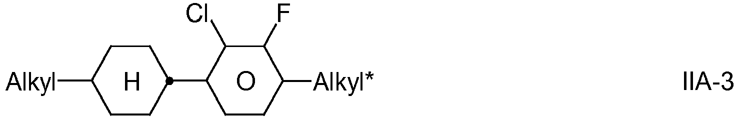 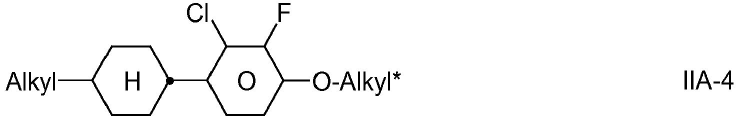 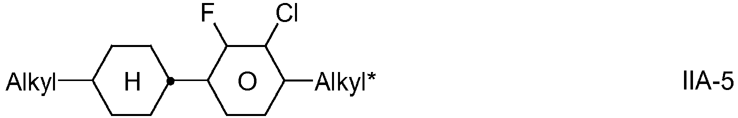 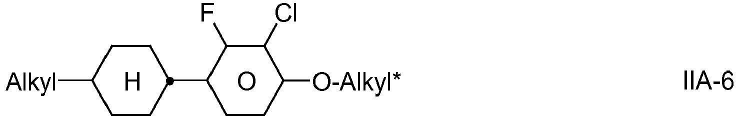 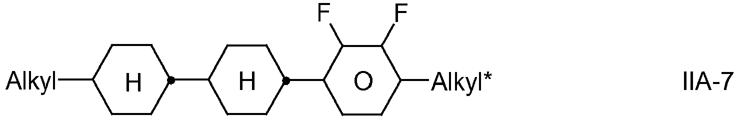 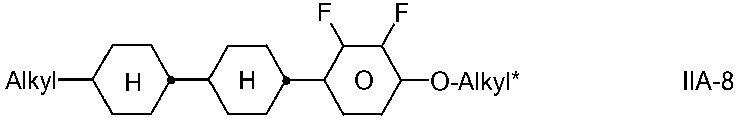 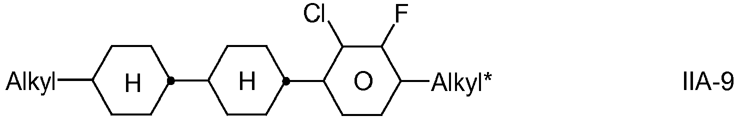 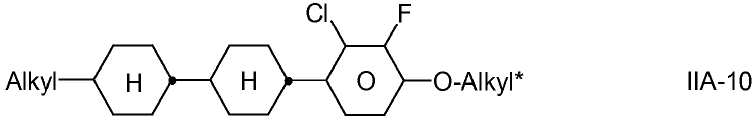 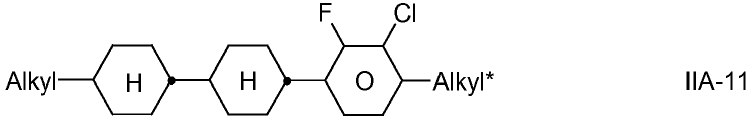 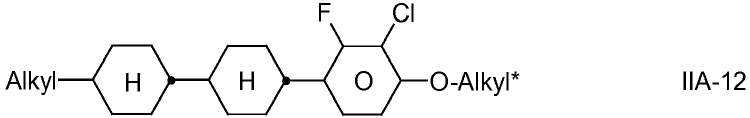 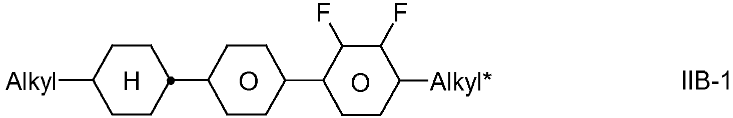 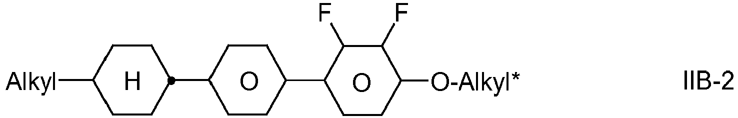 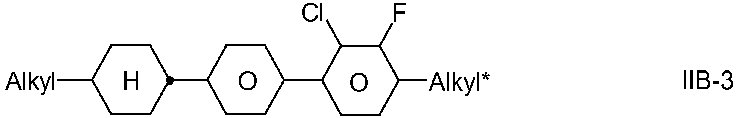 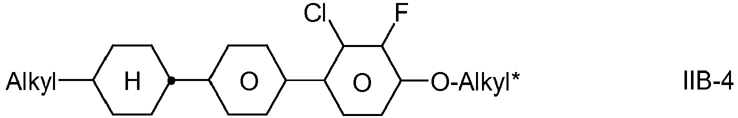 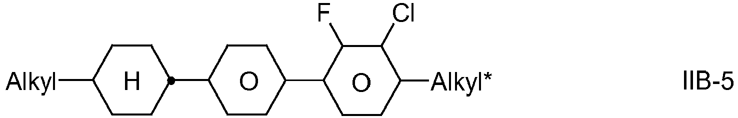 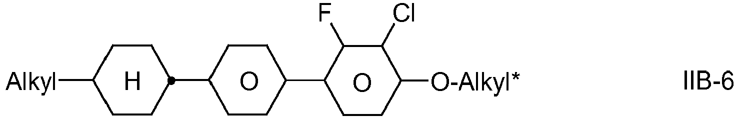 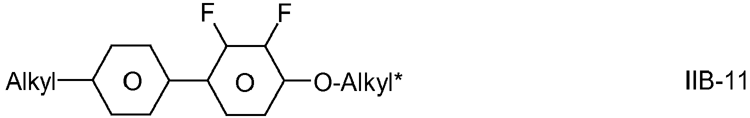 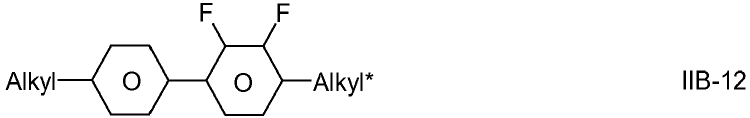 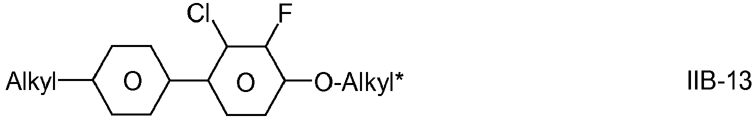 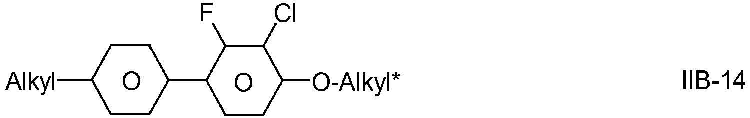 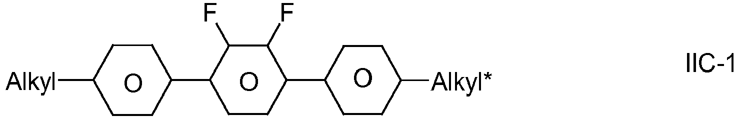 worin Alkyl und Alkyl* jeweils unabhängig voneinander einen geradkettigen Alkylrest mit 1-6 C-Atomen und Alkenyl einen geradkettigen Alkenylrest mit 2-6 C-Atomen bedeuten, und p 1 oder 2 ist.
   Besonders bevorzugte erfindungsgemäße Mischungen enthalten eine oder mehrere Verbindungen ausgewählt aus den Formeln IIA-2, IIA-8, IIB-2, IIB-11, und IIC-1.
   Vorzugsweise beträgt der Anteil an Verbindungen der Formeln IIA und/oder IIB im Gesamtgemisch mindestens 20 Gew.%.
   Besonders bevorzugte erfindungsgemäße Medien enthalten mindestens eine Verbindung der Formel IIC-1 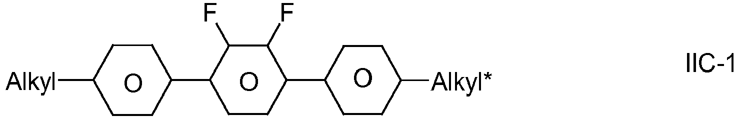 worin Alkyl und Alkyl* die oben angegebenen Bedeutungen haben, vorzugsweise in Mengen von > 3 Gew.%, insbesondere > 5 Gew.% und besonders bevorzugt von 5-25 Gew.%.
b) Flüssigkristallines Medium, welches zusätzlich eine oder mehrere Verbindungen der Formel III 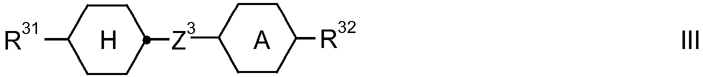 enthält,
   worin
   - R³¹ und R³²: jeweils unabhängig voneinander einen geradkettigen Alkyl-, Alkoxyalkyl- oder Alkoxyrest mit bis zu 12 C-Atomen, 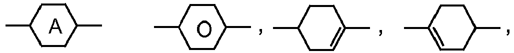 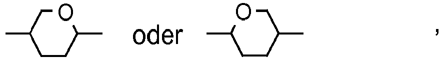 und
   - Z³: Einfachbindung, -CH₂CH₂-, -CH=CH-, -CF₂O-, -OCF₂-,-CH₂O-, -OCH₂-, -COO-, -OCO-, -C₂F₄-, -C₄H₈-, -CF=CF-
   bedeuten.
   Bevorzugte Verbindungen der Formel III werden nachfolgend genannt, 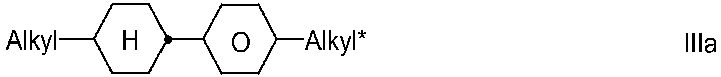 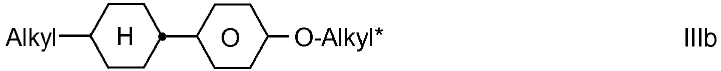 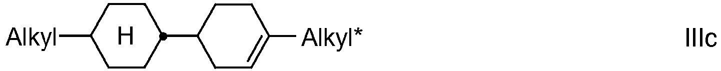 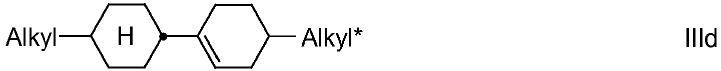 worin
   - Alkyl und Alkyl*: jeweils unabhängig voneinander einen geradkettigen Alkylrest mit 1-6 C-Atomen
   bedeuten.
   Vorzugsweise enthält das erfindungsgemäße Medium mindestens eine Verbindung der Formel IIIa und/oder Formel Illb.
   Der Anteil an Verbindungen der Formel III im Gesamtgemisch beträgt vorzugsweise mindestens 5 Gew.%.
c) Flüssigkristallines Medium, welches zusätzlich eine oder mehrere Vierkernverbindungen der Formeln, 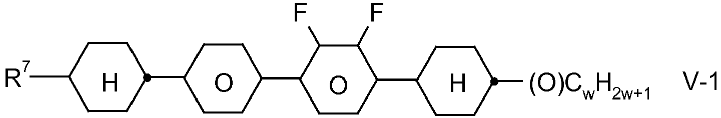 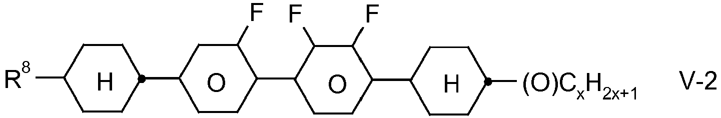 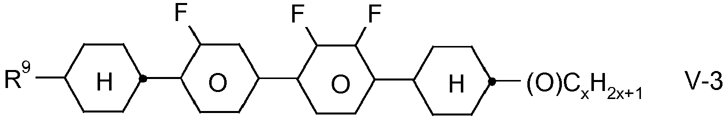 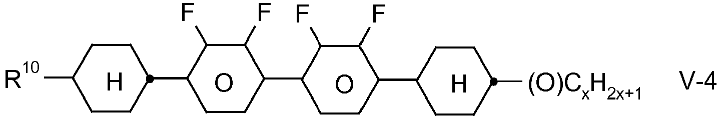 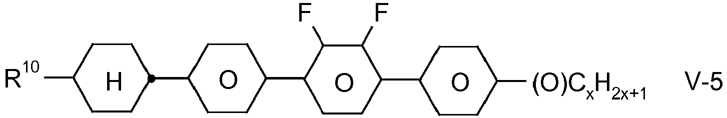 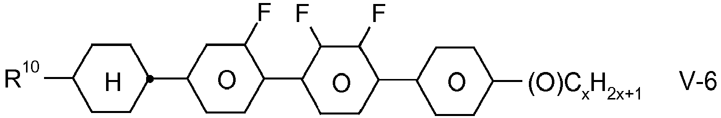 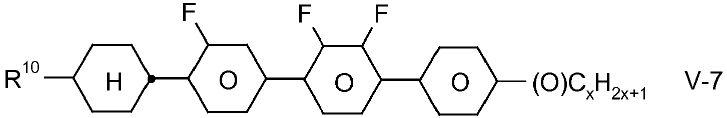 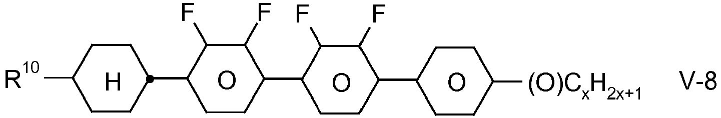 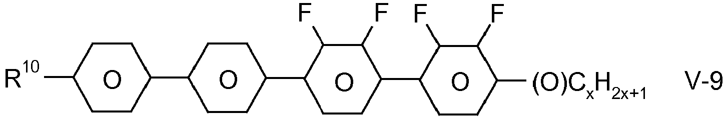 worin
   - R⁷⁻¹⁰: jeweils unabhängig voneinander eine der in Formel IIA für R^{2A} angegebenen Bedeutung haben, und
   - w und x: jeweils unabhängig voneinander eine ganze Zahl von 1 bis 6,
   bedeuten,
   enthält.
   Insbesondere bevorzugt sind Mischungen enthaltend mindestens eine Verbindung der Formel V-9.
d) Flüssigkristallines Medium, welches zusätzlich eine oder mehrere Verbindungen der Formeln Y-1 bis Y-6, 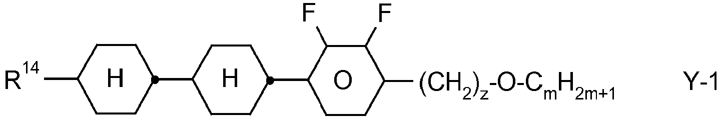 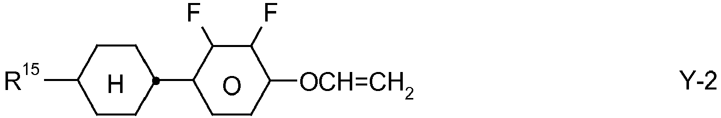 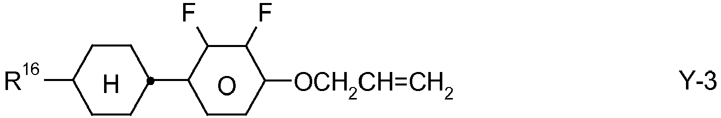 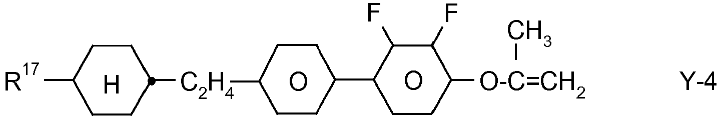 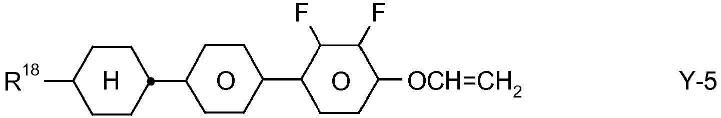 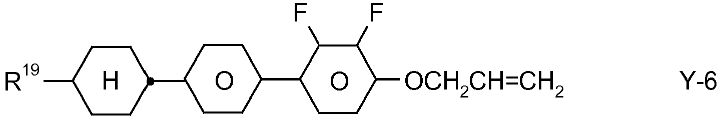 enthält,
   worin R¹⁴-R¹⁹ jeweils unabhängig voneinander einen Alkyl- oder Alkoxyrest mit 1-6 C-Atomen, und z und m jeweils unabhängig voneinander eine ganze Zahl von 1 bis 6 bedeuten.
   Insbesondere bevorzugt enthält das erfindungsgemäße Medium eine oder mehrere Verbindungen der Formel Y-1 bis Y-6, vorzugsweise in Mengen von ≥ 5 Gew.%.
e) Flüssigkristallines Medium enthaltend zusätzlich ein oder mehrere fluorierte Terphenyle der Formeln T-1 bis T-21, 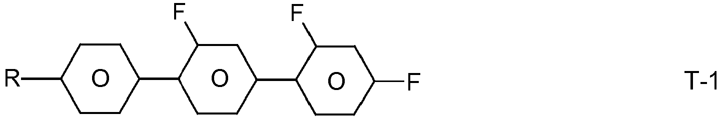 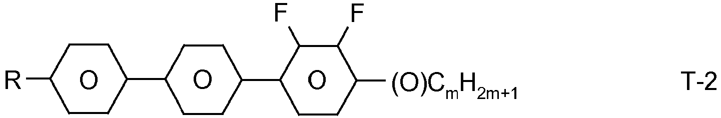 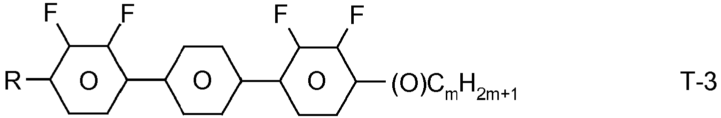 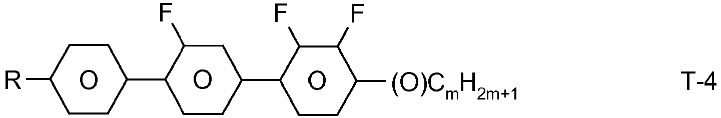 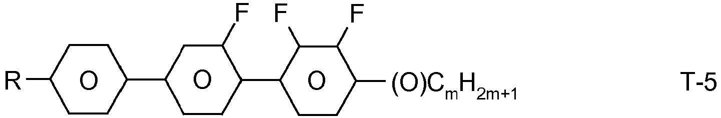 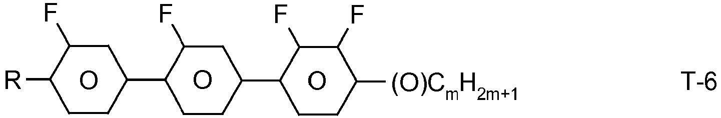 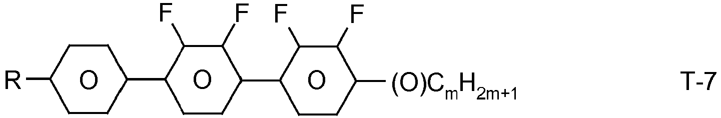 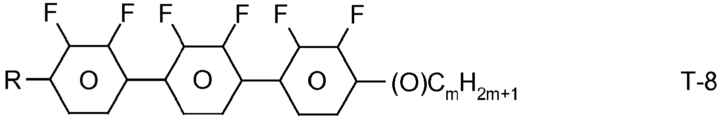 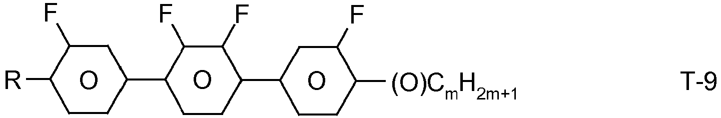 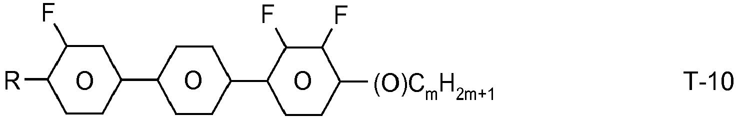 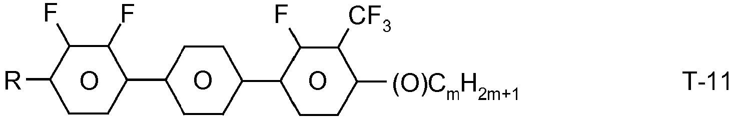 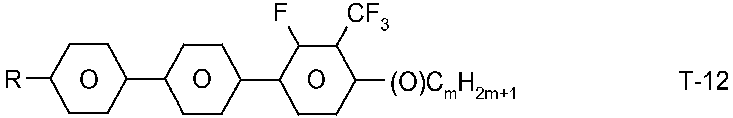 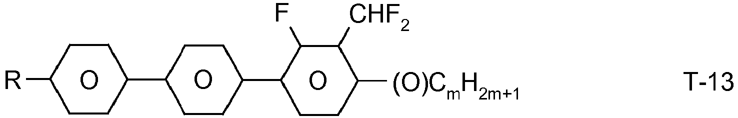 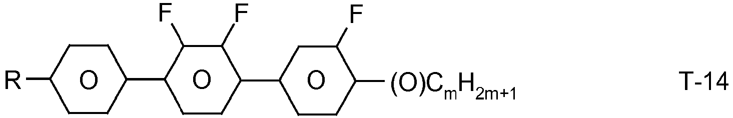 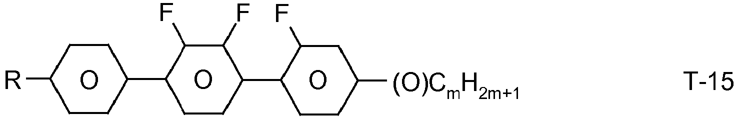 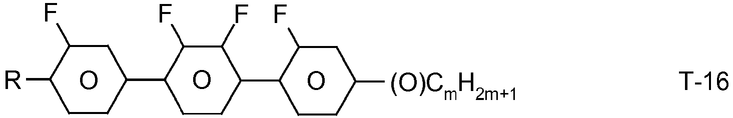 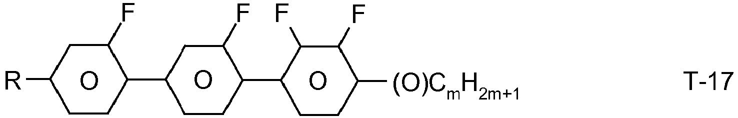 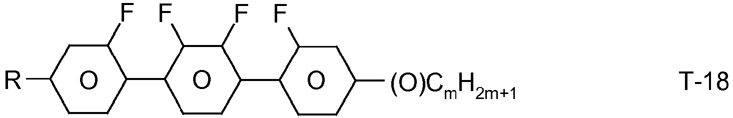 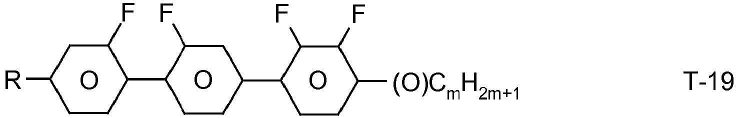 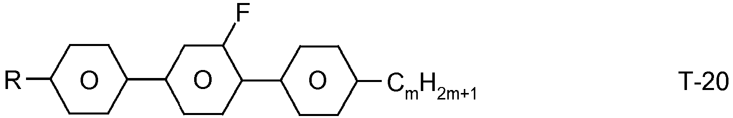 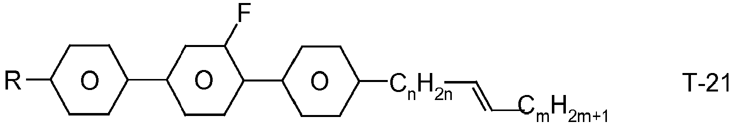 worin
   R einen geradkettigen Alkyl- oder Alkoxyrest mit 1-7 C-Atomen oder Alkenyl mit 2-7 C-Atomen bedeutet, (O) ein Sauerstoffatom oder eine Einfachbindung, und m = 0, 1, 2, 3, 4, 5 oder 6 und n 0, 1, 2, 3 oder 4 bedeuten,
   enthält.
   Vorzugsweise bedeutet R Methyl, Ethyl, Propyl, Butyl, Pentyl, Hexyl, Methoxy, Ethoxy, Propoxy, Butoxy, Pentoxy.
   Das erfindungsgemäße Medium enthält die Terphenyle der Formeln T-1 bis T-21 vorzugsweise in Mengen von 2-30 Gew.%, insbesondere von 5-20 Gew.%.
   Besonders bevorzugt sind Verbindungen der Formeln T-1, T-2, T-20 und T-21. In diesen Verbindungen bedeutet R vorzugsweise Alkyl, ferner Alkoxy jeweils mit 1-5 C-Atomen. In den Verbindungen der Formel T-20 bedeutet R vorzugsweise Alkyl oder Alkenyl, insbesondere Alkyl. In der Verbindung der Formel T-21 bedeutet R vorzugsweise Alkyl.
   Vorzugsweise werden die Terphenyle in den erfindungsgemäßen Mischungen eingesetzt, wenn der Δn-Wert der Mischung ≥ 0,1 sein soll. Bevorzugte Mischungen enthalten 2-20 Gew.% einer oder mehrerer Terphenyl-Verbindungen ausgewählt aus der Gruppe der Verbindungen T-1 bis T-21. Besonders bevorzugt sind Verbindungen der Formel T-4.
f) Flüssigkristallines Medium enthaltend zusätzlich ein oder mehrere Biphenyle der Formeln B-1 bis B-4, 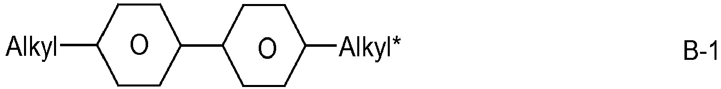 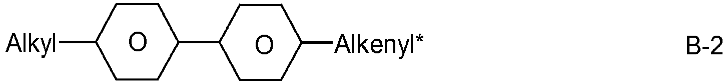 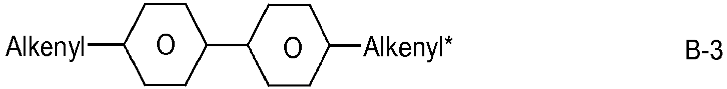 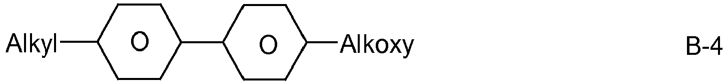 worin
   - Alkyl und Alkyl*: jeweils unabhängig voneinander einen geradkettigen Alkylrest mit 1-6 C-Atomen,
   - Alkenyl und Alkenyl*: jeweils unabhängig voneinander einen geradkettigen Alkenylrest mit 2-6 C-Atomen, und
   - Alkoxy: einen geradkettigen Alkoxyrest mit 1-6 C-Atomen,
   bedeuten.
   Der Anteil der Biphenyle der Formeln B-1 bis B-4 in der Gesamtmischung beträgt vorzugsweise mindestens 3 Gew.%, insbesondere ≥ 5 Gew.%.
   Der Anteil der Biphenyle der Formeln B-1 bis B-4 in der Gesamtmischung liegt vorzugsweise im Bereich von 3 - 15 Gew.%, insbesondere 5 bis 10 Gew.%.
   Von den Verbindungen der Formeln B-1 bis B-4 sind die Verbindungen der Formel B-2 insbesondere bevorzugt.
   Besonders bevorzugte Biphenyle sind 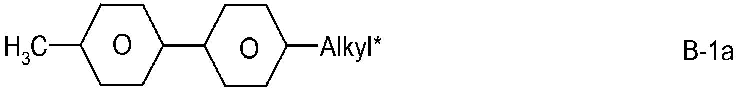 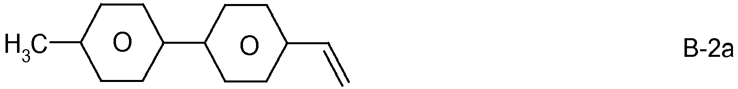 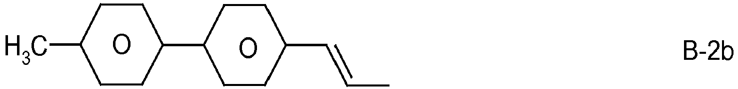 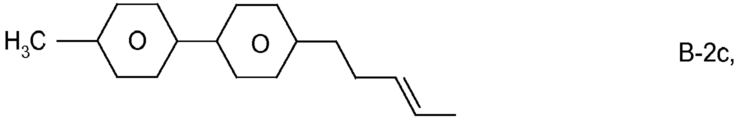 worin Alkyl* einen Alkylrest mit 1-6 C-Atomen bedeutet. Insbesondere bevorzugt enthält das erfindungsgemäße Medium eine oder mehrere Verbindungen der Formeln B-1a und/oder B-2c.
g) Flüssigkristallines Medium enthaltend mindestens eine Verbindung der Formeln Z-1 oder Z-2, 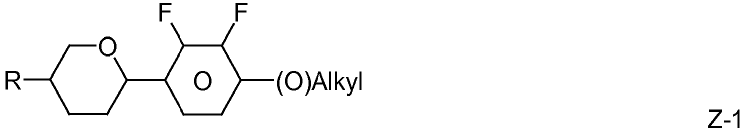 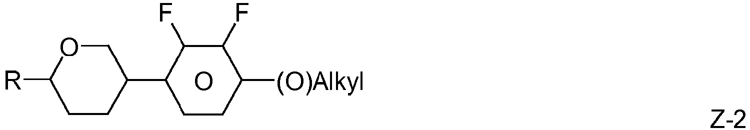 worin
   - R: einen geradkettigen Alkyl- oder Alkoxyrest mit 1-7 C-Atomen oder einen Alkenylrest mit 2-7 C-Atomen,
   - Alkyl: einen Alkylrest mit 1-6 C-Atomen, und
   - (O)Alkyl: Alkyl oder OAlkyl
   bedeuten.
h) Flüssigkristallines Medium enthaltend mindestens eine Verbindung der Formeln O-1 bis O-17, 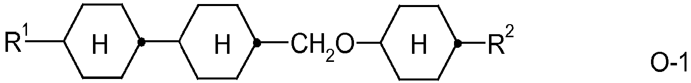 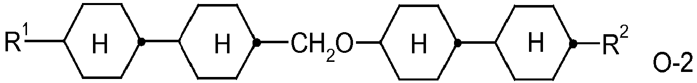 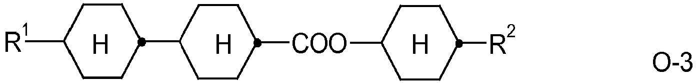 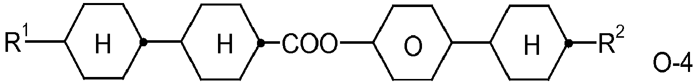 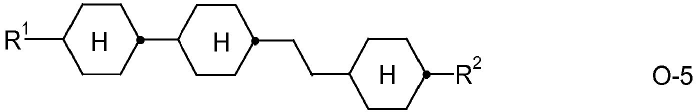 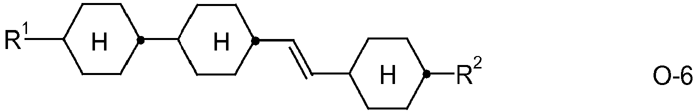 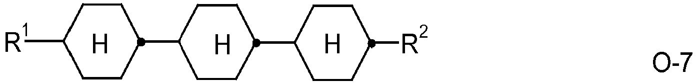 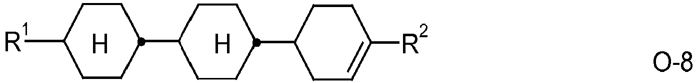 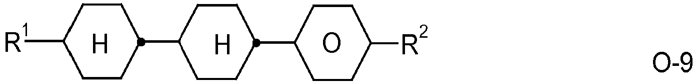 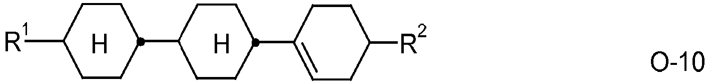 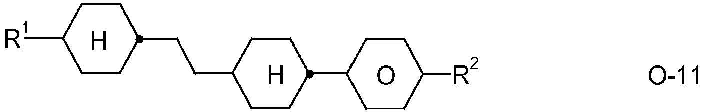 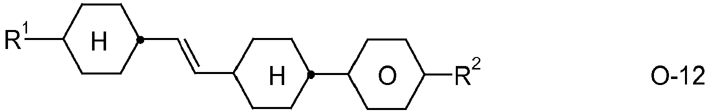 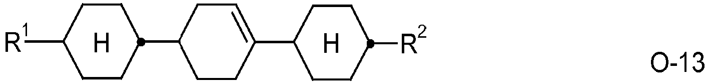 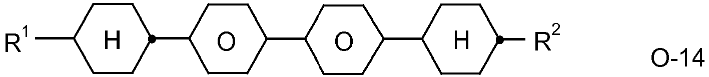 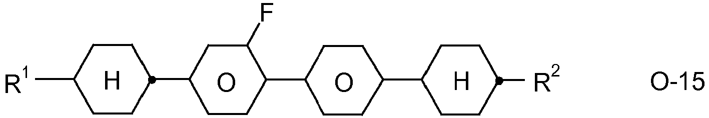 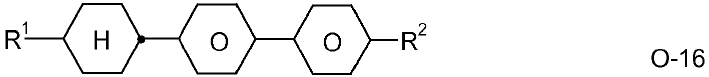 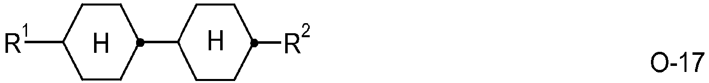 worin R¹ und R² die für R^{2A} in Formel IIA angegebenen Bedeutungen haben. Vorzugsweise bedeuten R¹ und R² jeweils unabhängig voneinander geradkettiges Alkyl mit 1-6 C-Atomen oder R¹ bedeutet geradkettiges Alkyl mit 1-6 C-Atomen und R² bedeutet Alkenyl mit 2-6 C-Atomen.
   Bevorzugte Medien enthalten eine oder mehrere Verbindungen der Formeln O-1, O-3, O-4, O-5, O-9, O-12, O-14, O-15, O-16 und/oder O-17.
   Erfindungsgemäße Mischungen enthalten ganz besonders bevorzugt die Verbindungen der Formel O-9, O-12, O-16 und/oder O-17, inbesondere in Mengen von 5-30 %.
   Bevorzugte Verbindungen der Formeln O-9 und O-17 werden nachfolgend genannt: 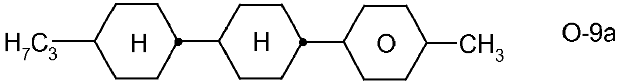 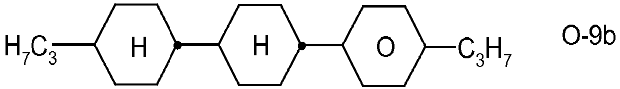 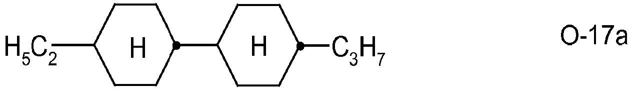 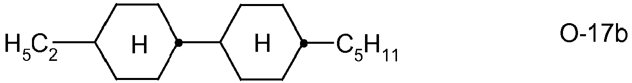
   Besonders bevorzugt enthält das erfindungsgemäße Medium die Dreikern-Verbindungen der Formel O-9a und/oder der Formel O-9b in Kombination mit einer oder mehreren Zweikern-Verbindungen der Formeln O-17a und O-17b. Vorzugsweise beträgt der Gesamtanteil der Verbindungen der Formel O-9a und/oder O-9b in Kombination mit einer oder mehreren Verbindungen ausgewählt aus den Zweikern-verbindungen der Formeln 0-17a und O-17b 5-40 %, ganz besonders bevorzugt 15-35 %.
   Ganz besonders bevorzugte Mischungen enthalten die Verbindungen O-9a und O-17a: 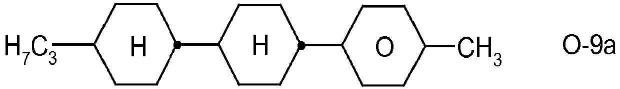 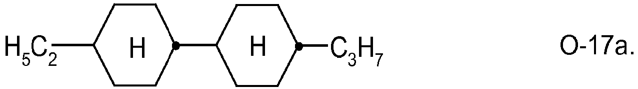
   Vorzugsweise sind die Verbindungen O-9a und O-17a in der Mischung in einer Konzentration von 15-35 %, besonders bevorzugt von 15-25 % und insbesondere bevorzugt von 18-22 % bezogen auf die Gesamtmischung, enthalten.
   Ganz besonders bevorzugte Mischungen enthalten die Verbindungen O-9b und O-17a: 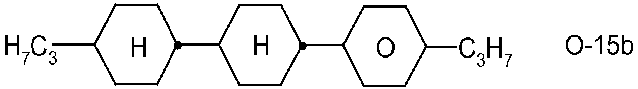 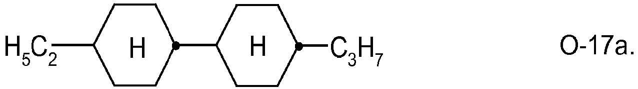
   Vorzugsweise sind die Verbindungen O-9b und O-17a in der Mischung in einer Konzentration von 15-35 %, besonders bevorzugt von 15-25 % und insbesondere bevorzugt von 18-22 % bezogen auf die Gesamtmischung, enthalten.
   Ganz besonders bevorzugte Mischungen enthalten folgende drei Verbindungen: 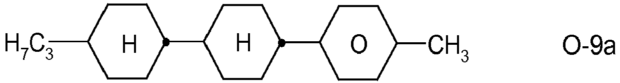 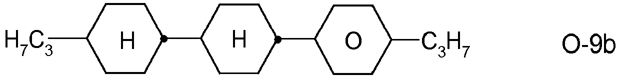 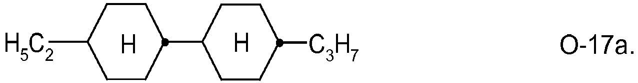
   Vorzugsweise sind die Verbindungen O-9a, O-9b und O-17a in der Mischung in einer Konzentration von 15-35 %, besonders bevorzugt von 15-25 % und insbesondere bevorzugt von 18-22 % bezogen auf die Gesamtmischung, enthalten.
   Bevorzugte Verbindungen der Formel O-17 sind weiterhin die Verbindungen ausgewählt aus der Gruppe der Verbindungen der Formeln 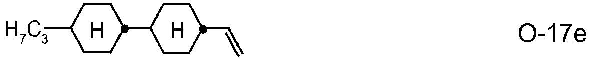 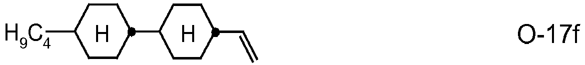 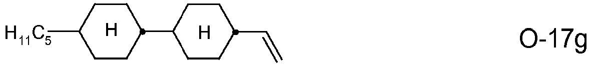 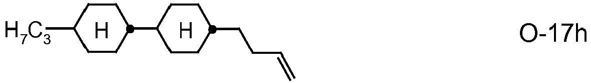 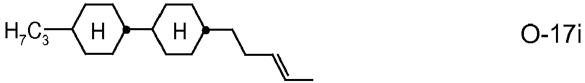 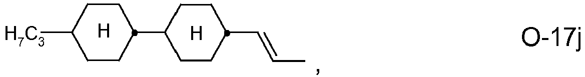 vorzugsweise jeweils in Mengen von ≥ 3 Gew.%, insbesondere ≥ 10 Gew.%.
i) Flüssigkristallines Medium enthaltend eine oder mehrere Verbindungen der Formel BA 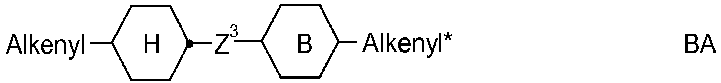 worin
   - Alkenyl und Alkenyl*: jeweils unabhängig voneinander einen geradkettigen Alkenylrest mit 2-12 C-Atomen, 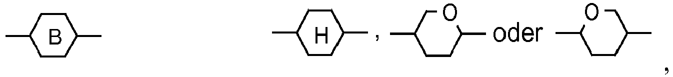
   - Z³: Einfachbindung, -CH₂CH₂-, -CH=CH-, -CF₂O-, -OCF₂-, -CH₂O-, -OCH₂-, -COO-, -OCO-, -C₂F₄-, -C₄H₈-, -CF=CF-
   bedeuten.
   Bevorzugte Verbindungen der Formel BA werden nachfolgend genannt: 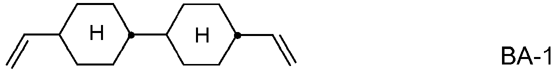 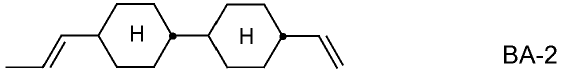 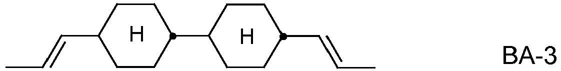 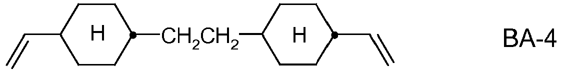 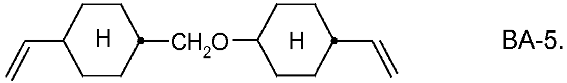
   Bevorzugte Mischungen enthalten 5-60 Gew.%, vorzugsweise 10-55 Gew.%, insbesondere 20-50 Gew.% der Verbindung der Formel O-17e 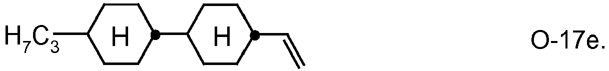
   Weiterhin bevorzugt sind flüssigkristalline Mischungen, die die Verbindung O-17e 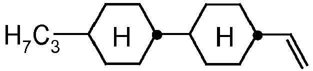 und die Verbindung O-17i 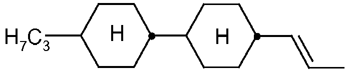 enthalten, vorzugsweise in Mengen von insgesamt 3-60 Gew.%.
j) Bevorzugte erfindungsgemäße flüssigkristalline Medien enthalten eine oder mehrere Substanzen, die eine Tetrahydronaphthyl- oder Naphthyl-Einheit aufweisen, wie z.B. die Verbindungen der Formeln N-1 bis N-5, 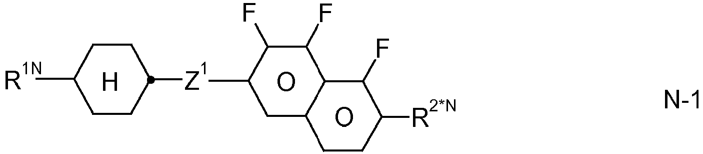 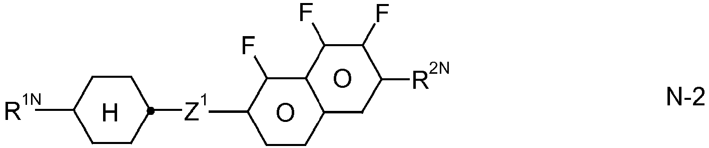 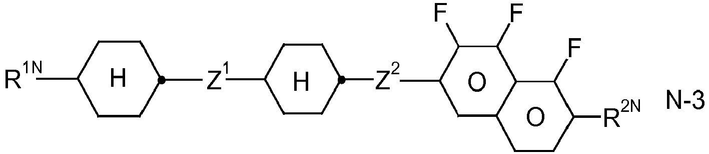 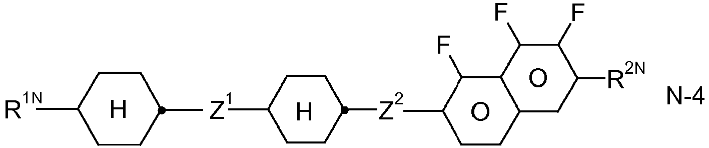 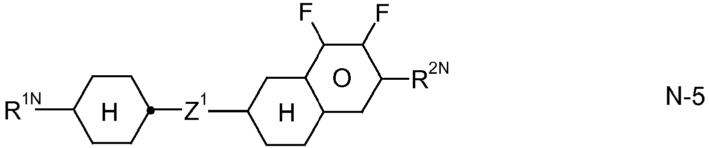
   worin R^{1N} und R^{2N} jeweils unabhängig voneinander die für R^{2A} in Formel IIA angegebenen Bedeutungen haben, vorzugsweise geradkettiges Alkyl, geradkettiges Alkoxy oder geradkettiges Alkenyl bedeuten, und
   Z¹ und Z² jeweils unabhängig voneinander
      -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CF₂O-, -OCF₂-, -CH₂- oder eine Einfachbindung
   bedeuten.
k) Bevorzugte Mischungen enthalten eine oder mehrere Verbindungen ausgewählt aus der Gruppe der Difluordibenzochroman-Verbindungen der Formel BC, Chromane der Formeln CR, fluorierte Phenanthrene der Formeln PH-1 und PH-2, 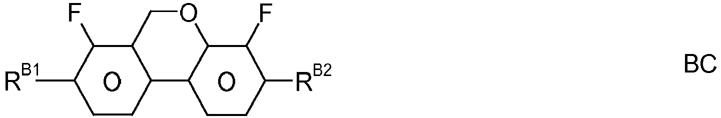 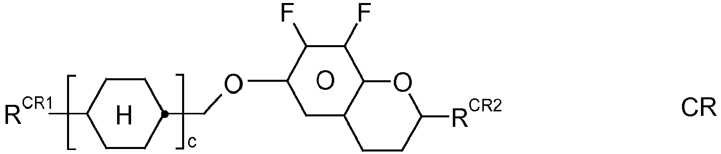 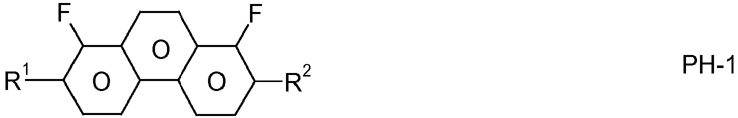 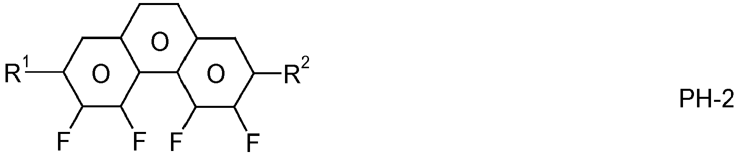 worin
   R^{B1}, R^{B2}, R^{CR1}, R^{CR2}, R¹, R² jeweils unabhängig voneinander die Bedeutung von R^{2A} in Formel IIA aufweisen. c ist 0, 1 oder 2. d ist 1 oder 2. R¹ und R² bedeuten vorzugsweise unabhängig voneinander Alkyl, Alkoxy, Alkenyl oder Alkenyloxy mit 1 bis 6 bzw. 2 bis 6 C-Atomen.
   Die erfindungsgemäßen Mischungen enthalten die Verbindungen der Formeln BC, CR, PH-1, PH-2, BF-1, BF-2, BS-1 und/oder BS-2 vorzugsweise in Mengen von 3 bis 20 Gew.%, insbesondere in Mengen von 3 bis 15 Gew.%.
   Besonders bevorzugte Verbindungen der Formeln BC, CR, BF und BS sind die Verbindungen BC-1 bis BC-7 und CR-1 bis CR-5, 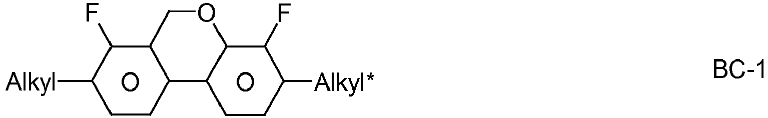 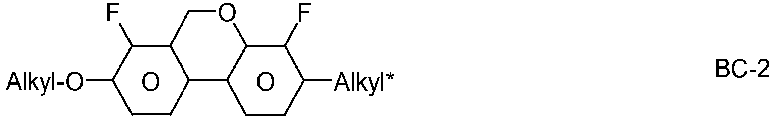 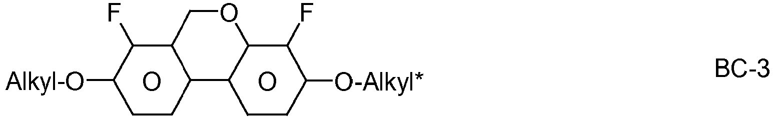 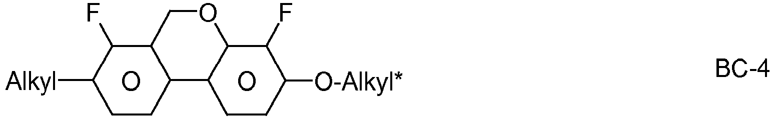 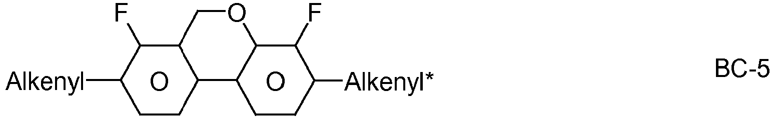 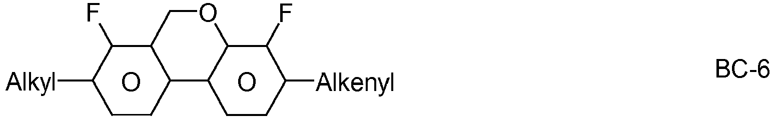 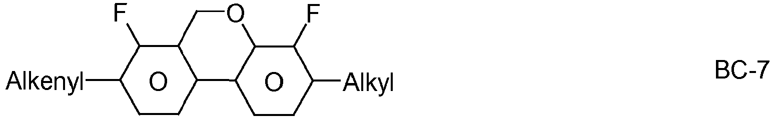 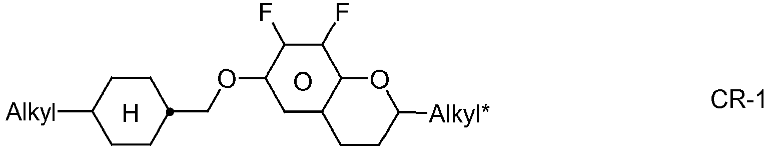 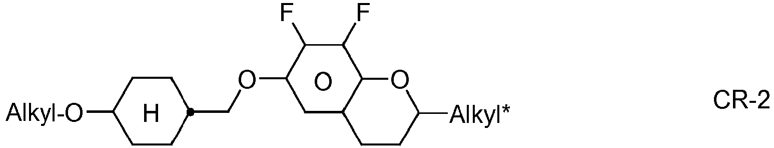 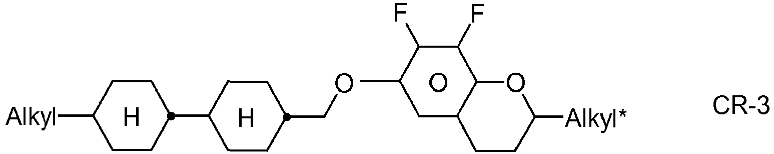 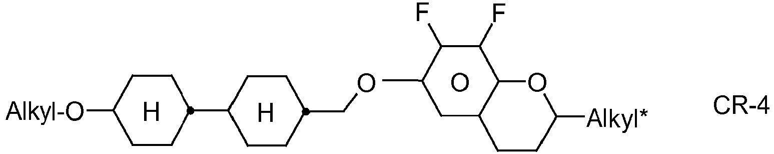 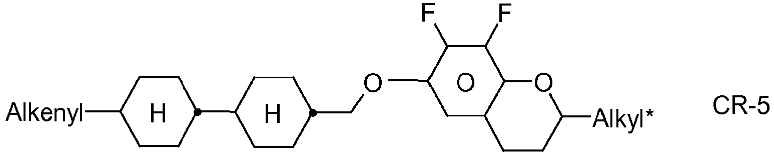 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen, und
   - Alkenyloxy: einen geradkettigen Alkenyloxyrest mit 2-6 C-Atomen
   bedeuten.
l) Bevorzugte Mischungen enthalten eine oder mehrere Indan-Verbindungen der Formeln In, 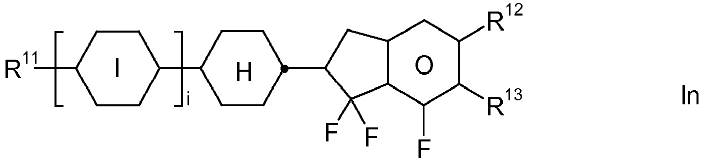 worin
   - R¹¹, R¹², R¹³: jeweils unabhängig voneinander einen geradkettigen Alkyl-, Alkoxy-, Alkoxyalkyl-, Alkenylrest mit 1-6 C-Atomen bzw. 2-6 C-Atomen,
   - R¹² und R¹³: zusätzlich Halogen, vorzugsweise F, 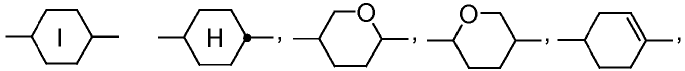 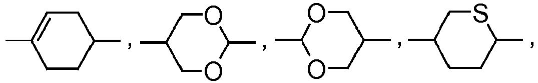 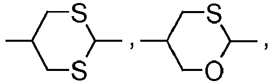
   - i: 0, 1 oder 2
   bedeuten.
   Bevorzugte Verbindungen der Formel In sind die nachfolgend genannten Verbindungen der Formeln In-1 bis In-16, 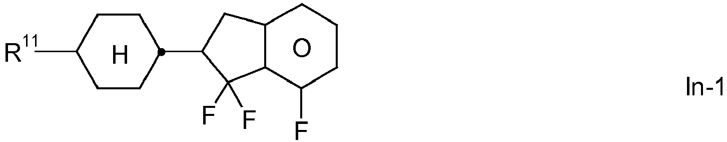 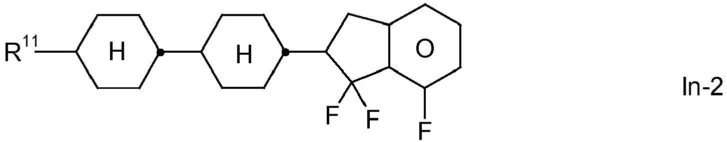 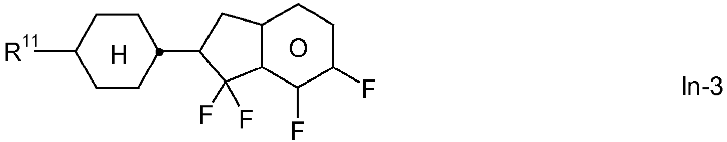 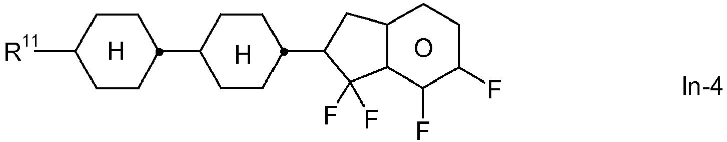 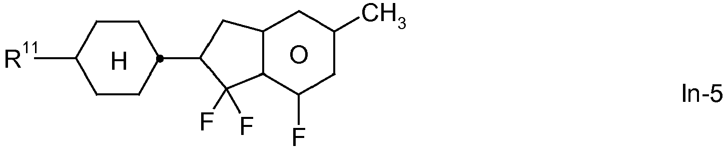 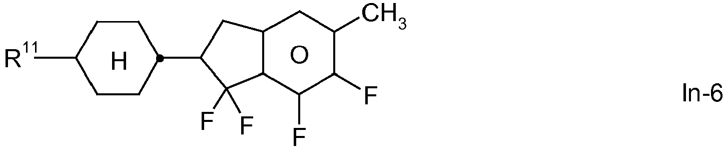 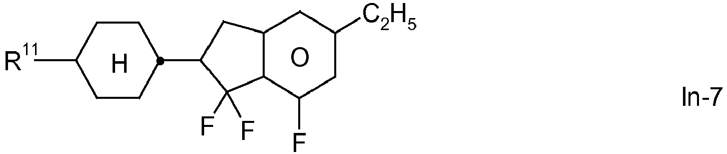 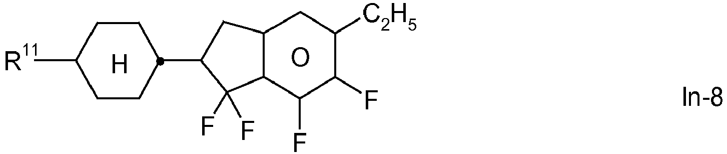 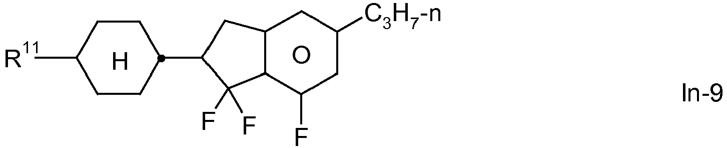 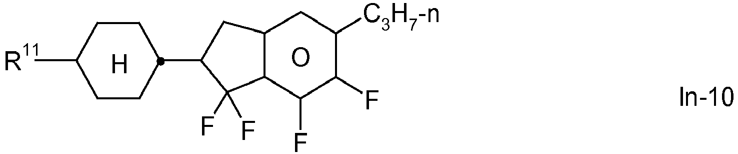 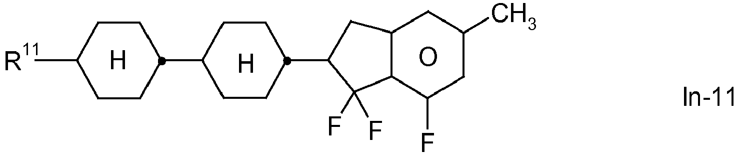 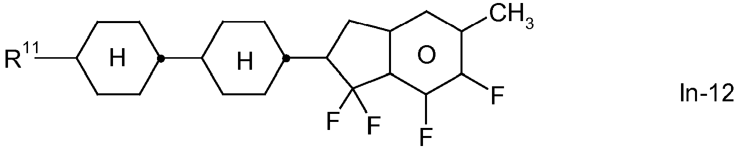 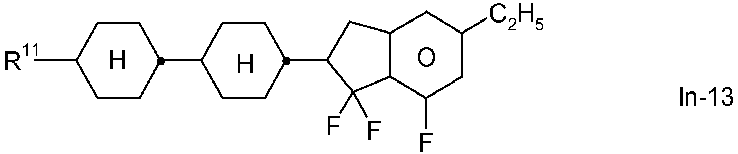 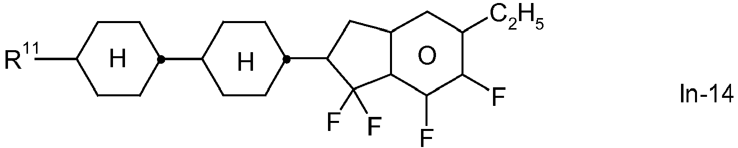 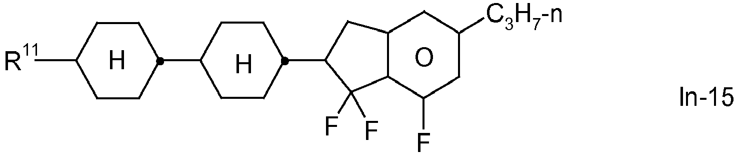 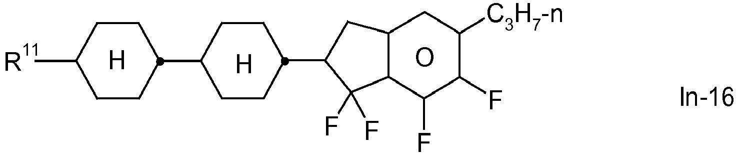
   Besonders bevorzugt sind die Verbindungen der Formeln In-1, In-2, In-3 und In-4.
   Die Verbindungen der Formeln In und der Unterformeln In-1 bis In-16 werden vorzugsweise in Konzentrationen ≥ 5 Gew.%, insbesondere 5 - 30 Gew.% und ganz besonders bevorzugt 5 - 25 Gew.% in den erfindungsgemäßen Mischungen eingesetzt.
m) Bevorzugte Mischungen enthalten zusätzlich eine oder mehrere Verbindungen der Formeln L-1 bis L-11, 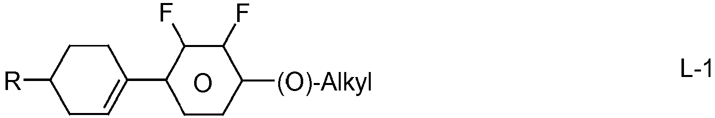 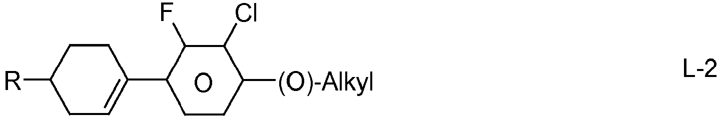 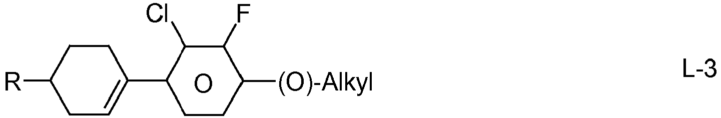 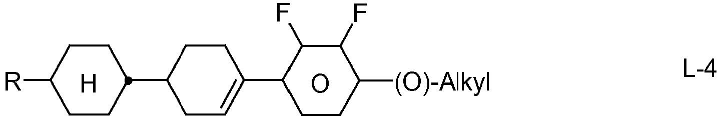 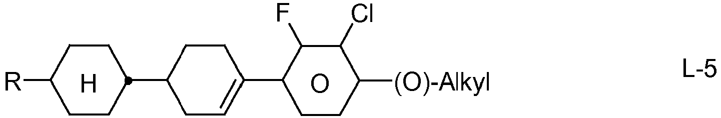 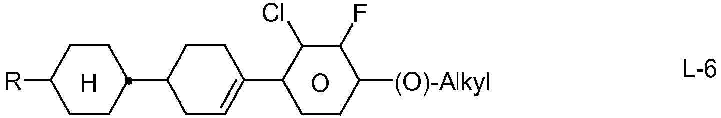 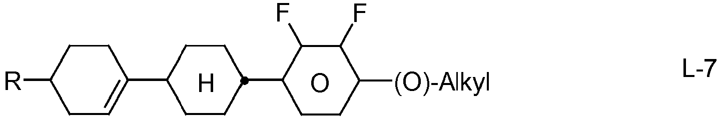 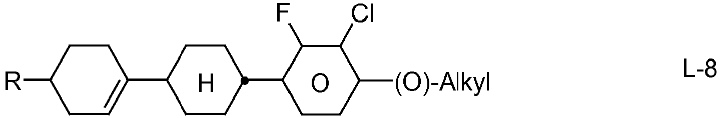 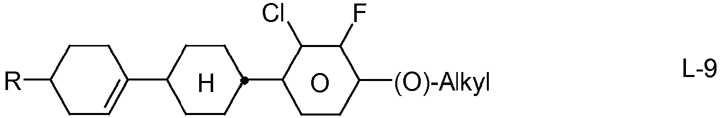 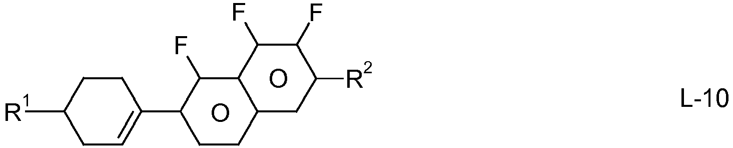 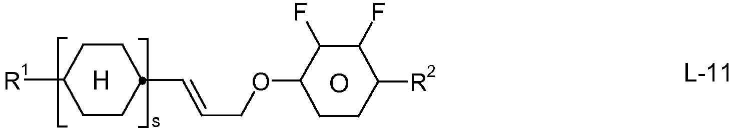 worin
   R, R¹ und R² jeweils unabhängig voneinander die für R^{2A} in Anspruch 2 angegebenen Bedeutungen haben, (O) ein Sauerstoffatom oder eine Einfachbindung bedeutet, und Alkyl ein Alkylrest mit 1-6 C-Atomen bedeutet. s bedeutet 1 oder 2.
   Besonders bevorzugt sind die Verbindungen der Formeln L-1 und L-4, insbesondere L-4.
   Die Verbindungen der Formeln L-1 bis L-11 werden vorzugsweise in Konzentrationen von 5 - 50 Gew.%, insbesondere 5 - 40 Gew.% und ganz besonders bevorzugt 10 - 40 Gew.% eingesetzt.
n) o) Das Medium enthält zusätzlich eine oder mehrere Verbindungen aus-gewählt aus den folgenden Formeln: 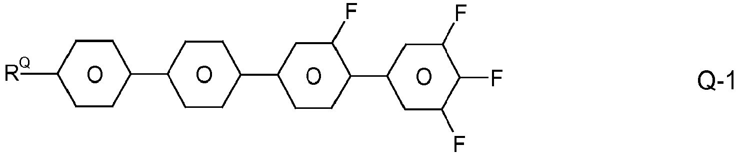 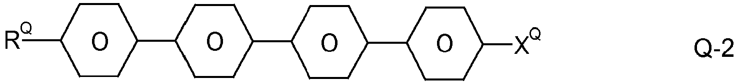 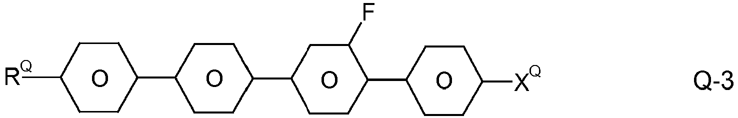 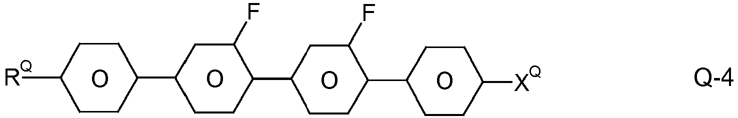 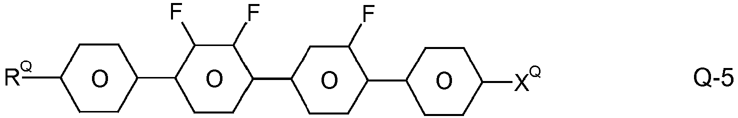 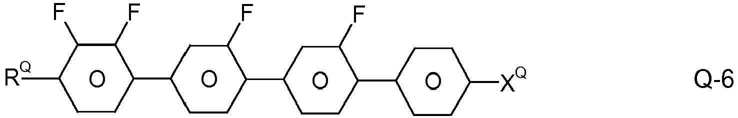 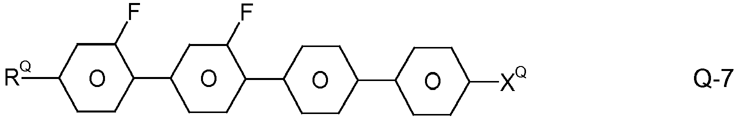 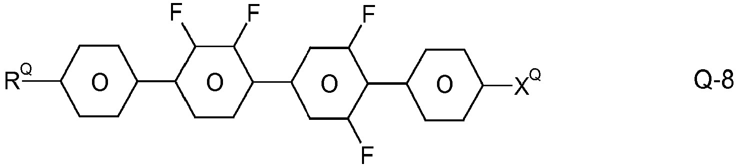 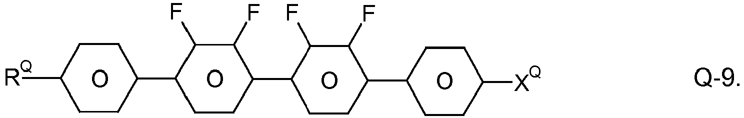
   In den Verbindungen der Formeln Q-1 bis Q-9 besitzen R^{Q} und X^{Q} jeweils unabhängig voneinander die Bedeutungen von R^{2A} in Formel IIA . Vorzugsweise bedeuten R^{Q} und X^{Q} einen geradkettigen Alkylrest mit 1-6 C-Atomen, insbesondere mit 2-5 C-Atomen.

Besonders bevorzugte Mischungskonzepte werden nachfolgend genannt, wobei die bevorzugten Ausführungsformen für sich genommen und in Kombination miteinander gelten. Die verwendeten Akronyme sind in den Tabellen 1-3 und in Tabelle A erklärt. n und m bedeuten hier jeweils unabhängig voneinander 1-6. Alle Prozentangaben sind Gewichtsprozent und bezogen auf die Gesamtmischung.

Die Verbindungen der Formel EY werden vorzugsweise im flüssigkristallinen Medium in Mengen von ≥ 1, vorzugsweise ≥ 2 %, bezogen auf das Gesamtgemisch, eingesetzt. Insbesondere bevorzugt sind flüssigkristalline Medien, die 2 - 15 %, ganz besonders bevorzugt 5 - 10 %, der Verbindungen der Formel EY enthalten.

Die Gesamtkonzentration der Verbindungen der Formeln IA und IB in den erfindungsgemäßen flüssigkristallinen Medien beträgt vorzugsweise 2 - 30 %. Insbesondere bevorzugt sind flüssigkristalline Medien, die 3 - 20 %, ganz besonders bevorzugt 5 - 15 %, der Verbindungen der Formeln IA und IB enthalten.

Die Gesamtkonzentration der Verbindungen der Formeln IA und/oder IB und EY in den erfindungsgemäßen flüssigkristallinen Medien beträgt bevorzugt 5 bis 40 %, besonders bevorzugt 7 bis 20 %, ganz besonders bevorzugt 8 bis 15% %.

Die Gesamtkonzentration der Verbindungen BF-1 und BF-2 und/oder BS-1 und BS-2, bevorzugt B-nO-Om und/oder B(S)-nO-Om, insbesondere B-2O-O5 und/oder B(S)-2O-O5, im Medium beträgt vorzugsweise 1-15%, besonders bevorzugt 5 bis 13%.

Die Gesamtkonzentration der Verbindungen der Formeln EY, IIA und/oder IB und/oder IIC in den erfindungsgemäßen flüssigkristallinen Medien beträgt bevorzugt 20 - 60 %, besonders bevorzugt 30 bis 55 %, ganz besonders bevorzugt 35 bis 50 %.

Bevorzugt enthält das Medium eine oder mehrere Verbindungen der Formel BS-1a.

Bevorzugt enthält das Medium eine oder mehrere Verbindungen der Formel BF-1a und BS-1a.

Bevorzugt enthält das Medium eine oder mehrere Verbindungen der Formel IIA-2, insbesondere die Verbindung CY-3-O2 in einer Gesamtkonzentration von 1 - 20%, besonders bevorzugt 2 bis 15%, ganz besonders bevorzugt 3 -10%.

Bevorzugt enthält das Medium eine oder mehrere Verbindungen der Formel IIB-11, besonders bevorzugt PY-4-O2 und/oder PY-1-O4, in einer Gesamtkonzentration von 1 - 20%, besonders bevorzugt 2 bis 15%, ganz besonders bevorzugt 3-10%.

Gabz besonders bevorzugt enthält das Medium die Verbindung Y-4O-O4 oder Y-2O-O1V.

Bevorzugte erfindungsgemäßen Mischungen enthalten ferner:
- PYP-n-m, insbesondere PYP-2-3 und/oder PYP-2-4, vorzugsweise in Konzentrationen > 5 %, insbesondere 8-30 %,
- CPY-n-Om, insbesondere CPY-2-O2 und/oder CPY-3-O2, vorzugsweise in Konzentrationen > 5 %, insbesondere 10-30 %, bezogen auf die Gesamtmischung,
   und/oder
- CY-n-Om, vorzugsweise CY-3-O2, CY-3-O4, CY-5-O2 und/oder CY-5-O4, insbesondere CY-3-O2, vorzugsweise in Konzentrationen > 2 %, insbesondere 3-20%, besonders bevorzugt 4-10 %,
   und/oder
- CCY-n-Om, vorzugsweise CCY-4-O2, CCY-3-O2, CCY-3-O3, CCY-3-O1 und/oder CCY-5-O2, vorzugsweise in Konzentrationen > 5 %, insbesondere 8-30 % besonders bevorzugt 10-25%,
   und/oder
- CLY-n-Om, vorzugsweise CLY-2-O4, CLY-3-O2 und/oder CLY-3-O3, vorzugsweise in Konzentrationen > 5 %, insbesondere 10-30 %,
   und/oder
- CK-n-F, vorzugsweise CK-3-F, CK-4-F und/oder CK-5-F, vorzugsweise > 5 %, insbesondere 5-25 %,

Weiterhin bevorzugt sind erfindungsgemäße Mischungen, die folgende Mischungskonzepte enthalten:
(n und m bedeuten jeweils unabhängig voneinander 1-6)
- CPY-n-Om und CY-n-Om, vorzugsweise in Konzentrationen von 10-80 % bezogen auf die Gesamtmischung,
   und/oder
- CPY-n-Om und CK-n-F, vorzugsweise in Konzentrationen von 10-70 % bezogen auf die Gesamtmischung,
   und/oder
- CPY-n-Om und PY-n-Om, vorzugsweise CPY-2-O2 und/oder CPY-3-O2 und PY-3-O2, vorzugsweise in Konzentrationen von 10 - 40 % bezogen auf die Gesamtmischung,
   und/oder
- CPY-n-Om und CLY-n-Om, vorzugsweise in Konzentrationen von 10-80 % bezogen auf die Gesamtmischung.
   und/oder
- PP-n-m, bevorzugt PP-1-3 und/oder PP-1-4, vorzugsweise in Mengen von 2 - 10%
- CC-3-V1, vorzugsweise in Mengen von 3 - 15 %
   und/oder
- CC-V-V, vorzugsweise in Mengen von 5 - 60 %
   und/oder
- CC-3-V, vorzugsweise in Mengen von 5 - 60 %
   und/oder
- PGIY-n-Om, vorzugsweise in Mengen von 3 - 15 %,
   und/oder
- CC-n-2V1, vorzugsweise in Mengen von 3 - 20 %.

Das erfindungsgemäße flüssigkristalline Medium weist bevorzugt eine nematische Phase von ≤ -20 °C bis ≥ 70 °C, besonders bevorzugt von ≤ -30 °C bis ≥ 80 °C, ganz besonders bevorzugt von ≤ -40 °C bis ≥ 90 °C auf.

Hierbei bedeutet der Begriff "eine nematische Phase aufweisen" einerseits, daß bei tiefen Temperaturen bei der entsprechenden Temperatur keine smektische Phase und keine Kristallisation beobachtet wird und andererseits, daß beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20 °C in einer entsprechenden Testzelle 1.000 h oder mehr beträgt, wird das Medium als bei dieser Temperatur stabil bezeichnet. Bei Temperaturen von -30 °C bzw. -40 °C betragen die entsprechenden Zeiten 500 h bzw. 250 h. Bei hohen Temperaturen wird der Klärpunkt nach üblichen Methoden in Kapillaren gemessen.

Vorzugsweise weist die Flüssigkristallmischung einen nematischen Phasenbereich von mindestens 60 K und eine Fließviskosität *v*₂₀ von maximal 30 mm²·s⁻¹ bei 20 °C auf.

Die Werte der Doppelbrechung Δn in der Flüssigkristallmischung liegen in der Regel zwischen 0,070 und 0,160, vorzugsweise zwischen 0,080 und 0,130, besonders bevorzugt von 0,090 bis 0,110.

Die erfindungsgemäße Flüssigkristallmischung weist ein Δε von -0,5 bis -8,0, insbesondere von -2,5 bis -6,0 auf, wobei Δε die dielektrische Anisotropie bedeutet. Die Rotationsviskosität γ₁ bei 20 °C ist vorzugsweise ≤ 150 mPa·s, insbesondere ≤ 130 mPa·s.

Die erfindungsgemäßen Flüssigkristallmedien weisen relativ kleine Werte für die Schwellenspannung (Vo) auf. Vorzugsweise sind sie im Bereich von 1,7 V bis 3,0 V, besonders bevorzugt ≤ 2,5 V und ganz besonders bevorzugt ≤ 2,3 V.

Der Begriff "Schwellenspannung" bezieht sich für die vorliegende Erfindung auf die kapazitive Schwelle (Vo), auch Freedericksz-Schwelle genannt, sofern nicht explizit anders angegeben.

Außerdem weisen die erfindungsgemäßen Flüssigkristallmedien hohe Werte für die Voltage Holding Ratio in Flüssigkristallzellen auf.

In der Regel zeigen dabei Flüssigkristallmedien mit einer geringen Ansteuerspannung bzw. Schwellenspannung eine geringere Voltage Holding Ratio als solche mit einer größeren Ansteuerspannung bzw. Schwellenspannung und umgekehrt.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homöotroper und mit homogener Oberflächenorientierung bei 1 kHz bestimmt wird. Die Meßspannung beträgt typischerweise 0,5 V bis 1,0 V, sie ist jedoch stets niedriger als die kapazitive Schwelle der jeweiligen untersuchten Flüssigkristallmischung.

Alle angegebenen Werte für Temperaturen für die vorliegende Erfindung sind in °C.

Die erfindungsgemäßen Mischungen sind für alle VA-TFT-Anwendungen geeignet, wie z.B. VAN, MVA, (S)-PVA, ASV, PSA (polymer sustained VA), SS (surface-stabilized)-VA und PS-VA (polymer stabilized VA). Weiterhin sind sie für IPS (In plane switching) und FFS (Fringe field switching), insbesondere UB-FFS, mit negativem Δε geeignet.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,5. Sie enthält bevorzugt neben einer oder mehreren Verbindungen der Formeln IA, IB und EY, eine oder mehrere Verbindungen der Formeln IIA, IIB und/oder IIC, ferner eine oder mehrere Verbindungen der Formeln III.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muß um so negativer sein, je kleiner der Anteil A an der Gesamtmischung ist.

Die Komponente B weist eine ausgeprägte Nematogenität und eine Fließviskosität von nicht mehr als 30 mm²·s⁻¹, vorzugsweise nicht mehr als 25 mm²·s⁻¹, bei 20 °C auf.

Dem Fachmann sind aus der Literatur eine Vielzahl geeigneter Materialien bekannt. Besonders bevorzugt sind Verbindungen der Formel III.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm²·s⁻¹, bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Optional kann die Mischung auch eine Komponente C enthalten, wobei es sich um Verbindungen mit einer dielektrischen Anisotropie von Δε ≥ 1,5 handelt. Diese sogenannten positiven Verbindungen sind in der Regel in einer Mischung mit negativer dielektrischer Anisotropie in Mengen von ≤ 20 Gew.% bezogen auf die Gesamtmischung enthalten.

Bevorzugt enthalten die erfindungsgemäße Mischung eine oder mehrere Verbindungen mit einer dielektrischen Anisotropie von Δε ≥1,5. Dabei handelt es sich vorzugsweise um eine oder mehrere Verbindungen der Formeln Q-1 wie oben definiert, besonders bevorzugt der Formel 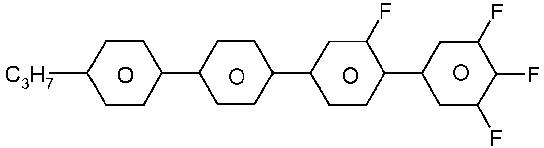 Bevorzugt werden die Verbindungen der Formel Q-1 in Gesamtkonzentrationen von 0,1-10 %, besonders bevorzugt 0,2-5 %, ganz besonders bevorzugt 0,3 bis 2% in den erfindungsgemäßen Mischungen eingesetzt.

Daneben können diese Flüssigkristallphasen auch mehr als 18 Komponenten, vorzugsweise 18 bis 25 Komponenten, enthalten.

Vorzugsweise enthalten die Phasen neben einer oder mehreren Verbindungen der Formel EY, IA und IB 4 bis 15, insbesondere 5 bis 12, und besonders bevorzugt < 10, Verbindungen der Formeln IIA, IIB und/oder IIC und optional III.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclohexylbiphenyle oder Cylohexylpyrimidine, Phenyl- oder Cyclohexyldioxane, gegebenenfalls halogenierten Stilbenen, Benzylphenylether, Tolane und substituierten Zimtsäureestern.

Die wichtigsten als Bestandteile derartiger Flüssigkristallphasen in Frage kommenden Verbindungen lassen sich durch die Formel IV charakterisieren,

R²⁰-L-G-E-R²¹ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH=CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH2)4- | -(CH₂)₃O- |

oder eine C-C-Einfachbindung, Q Halogen, vorzugsweise Chlor oder -CN, und R²⁰ und R²¹ jeweils Alkyl, Alkenyl, Alkoxy, Alkoxyalkyl oder Alkoxycarbonyloxy mit bis zu 18, vorzugsweise bis zu 8 Kohlenstoffatomen, oder einer dieser Reste auch CN, NC, NO₂, NCS, CF₃, SF₅, OCF₃, F, Cl oder Br bedeuten.

Bei den meisten dieser Verbindungen sind R²⁰ und R²¹ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, daß die erfindungsgemäße VA-, IPS- oder FFS- Mischung auch Verbindungen enthalten kann, worin beispielsweise H, N, O, Cl, F durch die entsprechenden Isotope ersetzt sind.

Den erfindungsgemäßen Mischungen können weiterhin polymerisierbare Verbindungen, sogenannte reaktive Mesogene (RMs), beispielsweise wie in U.S. 6,861,107 offenbart, in Konzentrationen von bevorzugt 0,01 - 5 Gew.%, besonders bevorzugt 0,2 - 2 % bezogen auf die Mischung, zugesetzt werden. Optional können diese Mischungen auch einen Initiator enthalten, wie beispielsweise in der U.S 6,781,665 beschrieben. Der Initiator, z.B. Irganox-1076 der Fa. BASF, wird vorzugsweise der Mischung enthaltend polymerisierbare Verbindungen in Mengen von 0-1 % zugesetzt. Derartige Mischungen können für sogenannte Polymer Stabilized VA-Modes (PS-VA) oder PSA-Modes (Polymer sustained alignment), bei denen eine Polymerisierung der reaktiven Mesogene in der flüssigkristallinen Mischung erfolgen soll, verwendet werden. Voraussetzung hierfür ist, daß die Flüssigkristallmischung selbst keine polymerisierbaren Komponenten enthält, die unter den Bedingungen, wo die Verbindungen der Formel M polymerisiert, ebenfalls polymerisieren.

Die Polymerisation wird vorzugsweise unter folgenden Bedingungen durchgeführt: Die polymerisierbaren Komponenten werden in einer Zelle polymerisiert unter Verwendung einer UV-A-Lampe definierter Intensität für einen definierten Zeitraum und angelegter Spannung (typischerweise 10 bis 30 V Wechselspannung, Frequenzen im Bereich von 60 Hz bis 1 kHz). Als UV-A-Lichtquelle wird typischerweise eine Halogenmetalldampflampe oder eine Hochdruckquecksilberlampe mit einer Intensität von 50 mW/cm² eingesetzt. Dies sind Bedingungen, wo beispielsweise flüssigkristalline Verbindungen mit einer Alkenyl- oder Alkenlyoxyseitenkette, wie z. B. die Verbindungen der Formel 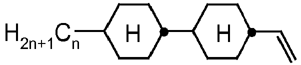 mit n = 2, 3, 4, 5 oder 6
nicht polymerisieren.

In einer bevorzugten Ausführungsform der Erfindung sind die polymerisierbaren Verbindungen ausgewählt aus den Verbindungen der Formel M

R^{Ma}-A^{M1}-(Z^{M1}-A^{M2}₎ₘ₁-R^{Mb} M

worin die einzelnen Reste folgende Bedeutung haben:
- R^{Ma} und R^{Mb}: jeweils unabhängig voneinander P, P-Sp-, H, Halogen, SFs, NO₂, eine Alkyl-, Alkenyl- oder Alkinylgruppe, wobei bevorzugt mindestens einer der Reste R^{Ma} und R^{Mb} eine Gruppe P oder P-Sp- bedeutet oder enthält,
- P: eine polymerisierbare Gruppe,
- Sp: eine Abstandsgruppe oder eine Einfachbindung,
- A^{M1} und A^{M2}: jeweils unabhängig voneinander eine aromatische, heteroaromatische, alicyclische oder heterocyclische Gruppe, vorzugsweise mit 4 bis 25 Ringatomen, bevorzugt C-Atomen, welche auch anellierte Ringe umfaßt oder enthalten kann, und die optional ein- oder mehrfach durch L substitutiert sein kann,
- L: P, P-Sp-, OH, CH₂OH, F, Cl, Br, I, -CN, -NO₂, -NCO, -NCS, -OCN, -SCN, -C(=O)N(R^{x})₂, -C(=O)Y¹, -C(=O)R^{x}, -N(R^{x})2, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F, Cl, P oder P-Sp- ersetzt sein können, bevorzugt P, P-Sp-, H, OH, CH₂OH, Halogen, SFs, NO₂, eine Alkyl-, Alkenyl- oder Alkinylgruppe,
- Y¹: Halogen,
- Z^{M1}: -O-, -S-, -CO-, -CO-O-, -OCO-, -O-CO-O-, -OCH₂-, -CH₂O-, -SCH2-, -CH2S-, -CF₂O-, -OCF2-, -CF2S-, -SCF2-, -(CH2)n1-, -CF2CH2-, -CH2CF2-, -(CF2)ₙ₁-, -CH=CH-, -CF=CF-, -C≡C-, -CH=CH-, -COO-, -OCO-CH=CH-, CR+⁰R⁰⁰ oder eine Einfachbindung,
- R⁰ und R⁰⁰: jeweils unabhängig voneinander H oder Alkyl mit 1 bis 12 C-Atomen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, daß O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
- m1: 0, 1, 2, 3 oder 4 und
- n1: 1, 2, 3 oder 4,
wobei mindestens einer, bevorzugt einer, zwei oder drei, besonders bevorzugt einer oder zwei, aus der Gruppe R^{Ma}, R^{Mb} und der vorhandenen Substituenten L eine Gruppe P oder P-Sp- bedeutet oder mindestens eine Gruppe P oder P-Sp- enthält.

Besonders bevorzugte Verbindungen der Formel M sind solche, worin
- R^{Ma} und R^{Mb}: jeweils unabhängig voneinander P, P-Sp-, H, F, Cl, Br, I, -CN, -NO₂, -NCO, -NCS, -OCN, -SCN, SF₅ oder geradkettiges oder verzweigtes Alkyl mit 1 bis 25 C-Atomen, worin auch eine oder mehrere nicht benachbarte CH₂-Gruppen jeweils unabhängig voneinander durch -C(R⁰)=C(R⁰⁰)-, -C≡C-, -N(R⁰⁰)-, -O-, -S-, -CO-, -CO-O-, -O-CO-, -O-CO-O- so ersetzt sein können, daß O- und/oder S-Atome nicht direkt miteinander verknüpft sind, und worin auch ein oder mehrere H-Atome durch F, Cl, Br, I, CN, P oder P-Sp- ersetzt sein können, wobei bevorzugt mindestens einer der Reste R^{Ma} und R^{Mb} eine Gruppe P oder P-Sp- bedeutet oder enthält,
- A^{M1} und A^{M2}: jeweils unabhängig voneinander 1,4-Phenylen, Naphthalin-1,4-diyl, Naphthalin-2,6-diyl, Phenanthren-2,7-diyl, Anthracen-2,7-diyl, Fluoren-2,7-diyl, Cumarin, Flavon, wobei in diesen Gruppen auch eine oder mehrere CH-Gruppen durch N ersetzt sein können, Cyclohexan-1,4-diyl, worin auch eine oder mehrere nicht-benachbarte CH₂-Gruppen durch O und/oder S ersetzt sein können, 1,4-Cyclohexenylen, Bicyclo[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methano-indan-2,5-diyl, wobei alle diese Gruppen unsubstituiert oder durch L ein- oder mehrfach substituiert sein können,
- L: P, P-Sp-, OH, CH₂OH, F, Cl, Br, I, -CN, -NO₂, -NCO, -NCS,-OCN, -SCN, -C(=O)N(R^{x})2, -C(=O)Y¹, -C(=O)R^{x} -N(R^{x})2, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin auch ein oder mehrere H-Atome durch F, Cl, P oder P-Sp- ersetzt sein können,
- P: eine polymerisierbare Gruppe,
- Y¹: Halogen,
- R^{x}: P, P-Sp-, H, Halogen, geradkettiges, verzweigtes oder cyclisches Alkyl mit 1 bis 25 C-Atomen, worin auch eine oder mehrere nicht benachbarte CH₂-Gruppen durch -O-, -S-, -CO-, -CO-O-, -O-CO-, -O-CO-O- so ersetzt sein können, daß O- und/oder S-Atome nicht direkt miteinander verknüpft sind, und worin auch ein oder mehrere H-Atome durch F, Cl, P oder P-Sp- ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen,
bedeuten.

Ganz besonders bevorzugt sind Verbindungen der Formel M, worin einer von R^{Ma} und R^{Mb} oder beide P oder P-Sp- bedeuten.

Geeignete und bevorzugte RMs für die Verwendung in erfindungsgemäßen flüssigkristallinen Medien und PS-VA-Anzeigen oder PSA-Anzeigen, sind beispielsweise ausgewählt aus den folgenden Formeln: 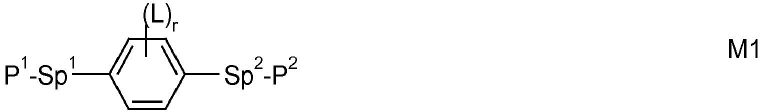 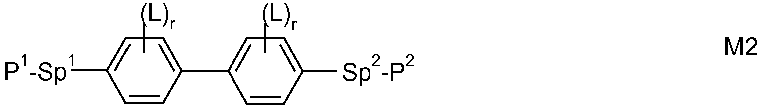 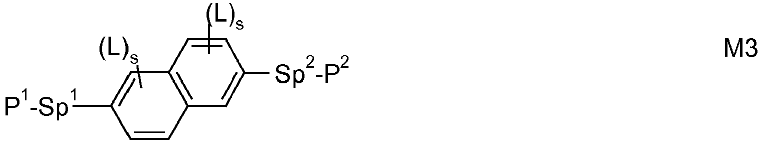 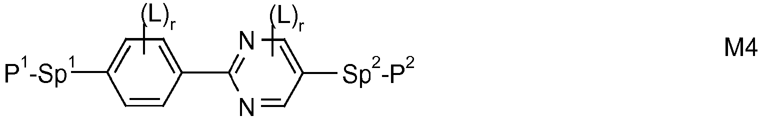 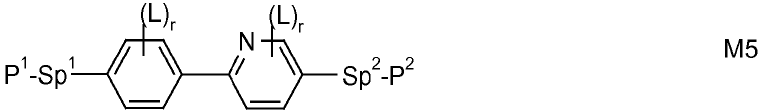 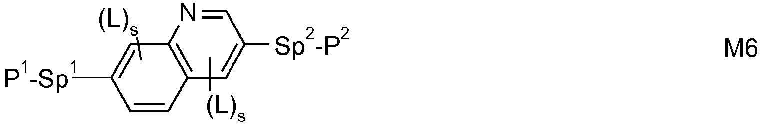 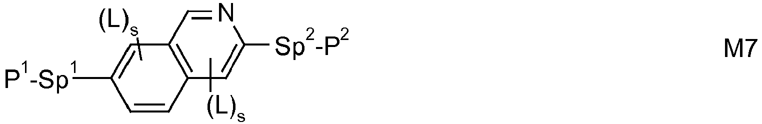 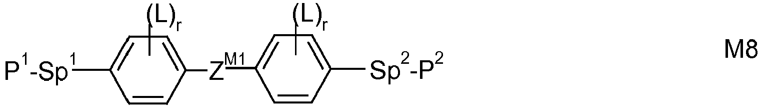 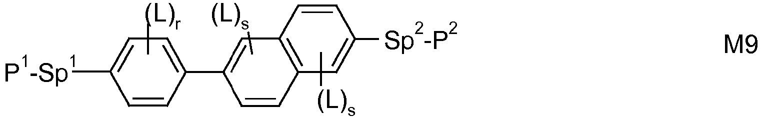 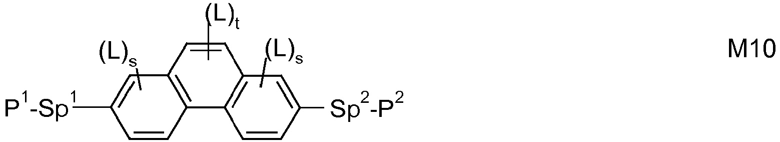 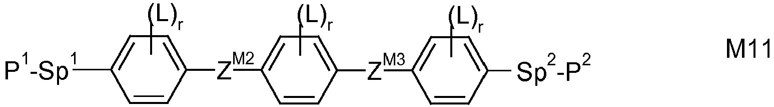 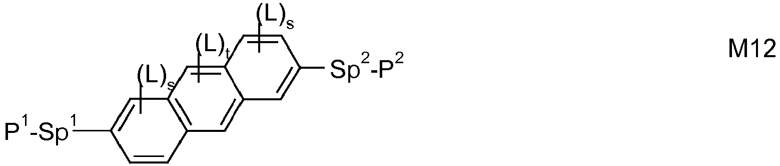 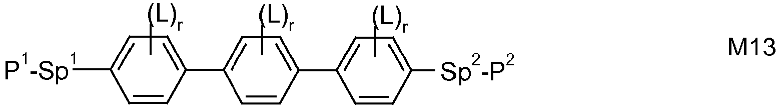 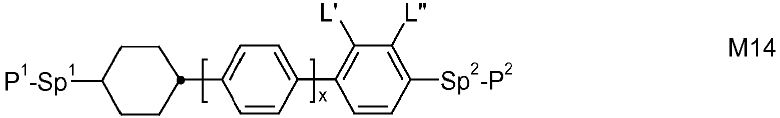 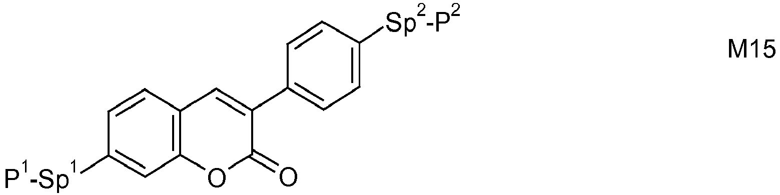 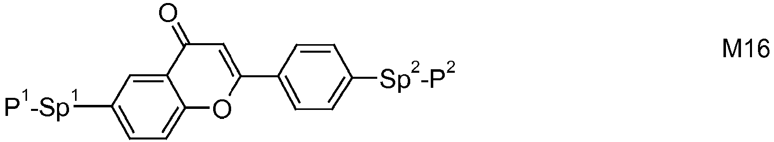 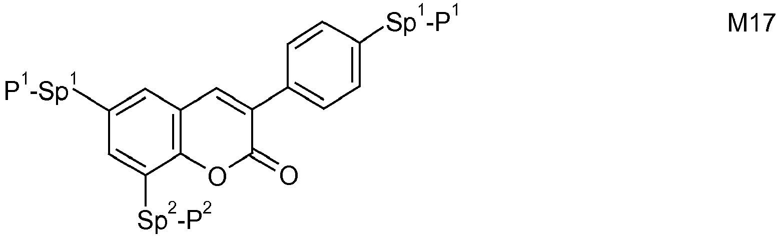 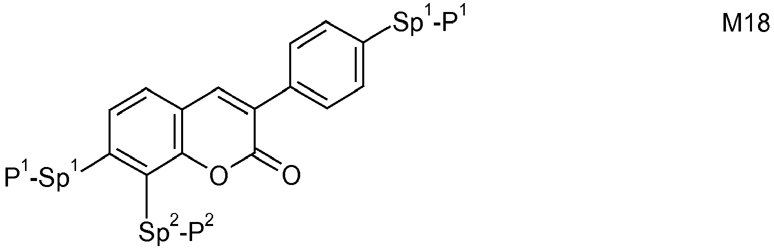 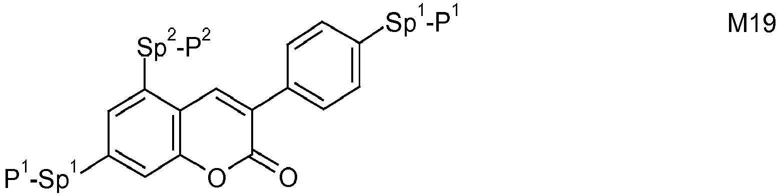 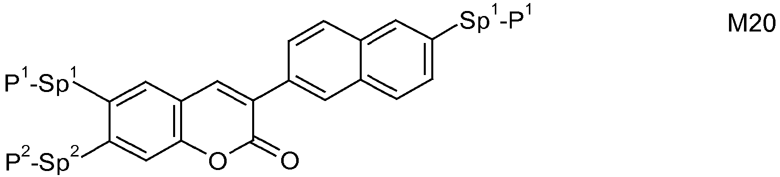 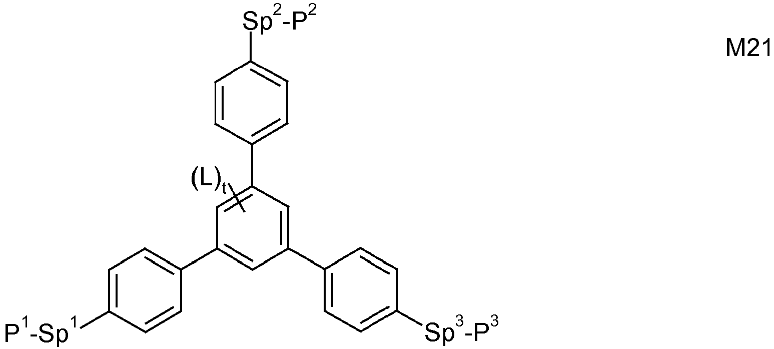 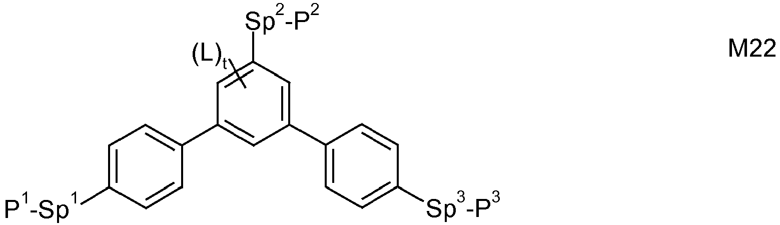 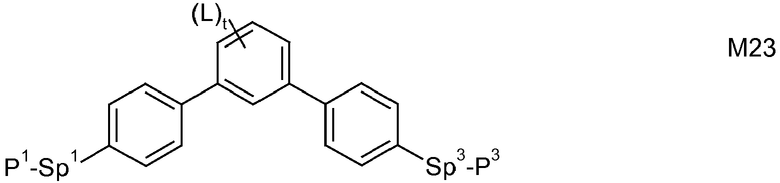 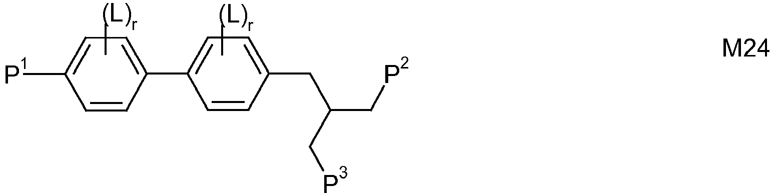 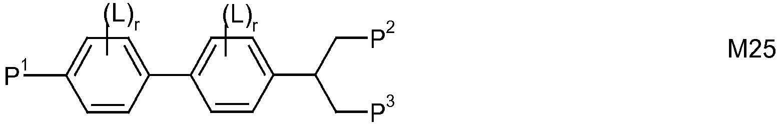 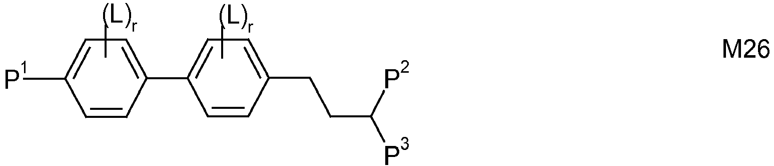 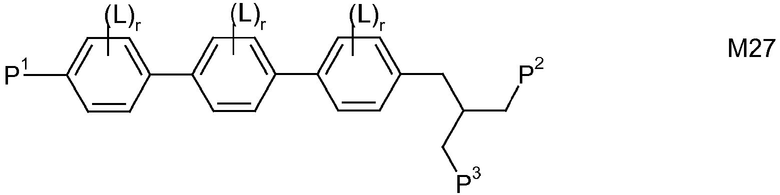 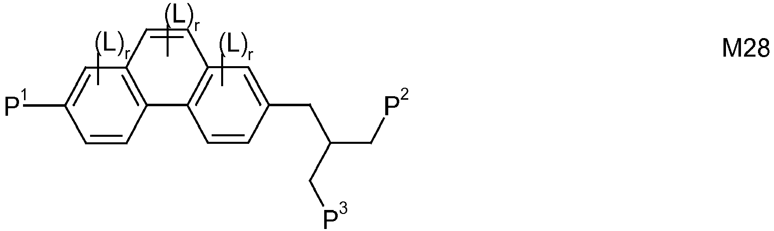 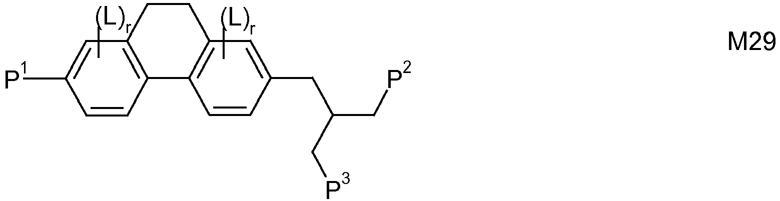 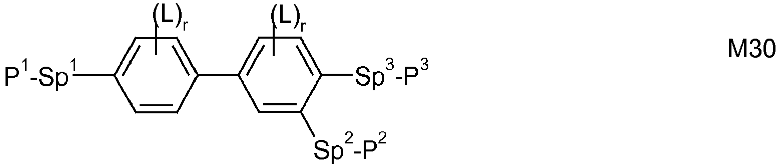 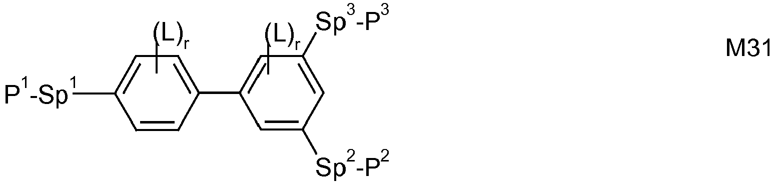 worin die einzelnen Reste folgende Bedeutung besitzen:
- P¹, P² und P³: jeweils unabhängig voneinander eine polymerisierbare Gruppe, vorzugsweise mit einer der vor- und nachstehend für P angegebenen Bedeutungen, besonders bevorzugt eine Acrylat-, Methacrylat-, Fluoracrylat-, Oxetan-, Vinyloxy- oder Epoxygruppe,
- Sp¹, Sp² und Sp³: jeweils unabhängig voneinander eine Einfachbindung oder eine Abstandsgruppe, vorzugsweise mit einer der vor- und nachstehend für Sp angegebenen Bedeutungen, und besonders bevorzugt -(CH₂)ₚ₁-, -(CH₂)ₚ₁-O-, -(CH₂)ₚ₁-CO-O- oder -(CH₂)ₚ₁-O-CO-O- bedeuten, worin p1 eine ganze Zahl von 1 bis 12 ist, und wobei in den letztgenannten Gruppen die Verknüpfung zur benachbarten Ring über das O-Atom erfolgt, wobei einer der Reste P¹-Sp¹-, P²-Sp²- und P³-Sp³-auch R^{aa} bedeuten kann,
- R^{aa}: H, F, Cl, CN oder geradkettiges oder verzweigtes Alkyl mit 1 bis 25 C-Atomen, worin auch eine oder mehrere nicht benachbarte CH₂-Gruppen jeweils unabhängig voneinander durch C(R⁰)=C(R⁰⁰)-, -C≡C-, -N(R⁰)-, -O-, -S-, -CO-, -CO-O-, -O-CO-, -O-CO-O- so ersetzt sein können, daß O-und/oder S-Atome nicht direkt miteinander verknüpft sind, und worin auch ein oder mehrere H-Atome durch F, Cl, CN oder P¹-Sp¹- ersetzt sein können, besonders bevorzugt geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen (wobei die Alkenyl- und Alkinylreste mindestens zwei und die verzweigten Reste mindestens drei C-Atome aufweisen),
- R⁰, R⁰⁰: jeweils unabhängig voneinander und bei jedem Auftreten gleich oder verschieden H oder Alkyl mit 1 bis 12 C-Atomen,
- R^{y} und R^{z}: jeweils unabhängig voneinander H, F, CH₃ oder CF₃,
- Z^{M1}: -O-, -CO-, -C(R^{y}R^{z})-,oder -CF₂CF₂-,
- Z^{M2} und Z^{M3}: jeweils unabhängig voneinander -CO-O-, -O-CO-, -CH₂O-, -OCH₂-, -CF₂O-, -OCF₂-, oder -(CH₂)ₙ-, wobei n 2, 3 oder 4 ist,
- L: bei jedem Auftreten gleich oder verschieden F, Cl, CN, oder geradkettiges oder verzweigtes, optional ein- oder mehrfach fluoriertes, Alkyl, Alkoxy, Alkenyl, Alkinyl, Alkylcarbonyl, Alkoxycarbonyl, oder Alkylcarbonyloxy mit 1 bis 12 C-Atomen vorzugsweise F,
- L' und L": jeweils unabhängig voneinander H, F oder Cl,
- r: 0, 1, 2, 3 oder 4,
- s: 0, 1, 2 oder 3,
- t: 0, 1 oder 2, und
- x: 0 oder 1.

Geeignete polymerisierbare Verbindungen sind beispielsweise in Tabelle D gelistet.

Bevorzugt enthalten die flüssigkristallinen Medien gemäß der vorliegenden Anmeldung insgesamt 0,1 bis 10 %, bevorzugt 0,2 bis 4,0 %, besonders bevorzugt 0,2 bis 2,0 %, an polymerisierbaren Verbindungen.

Insbesondere bevorzugt sind die polymerisierbaren Verbindungen der Formel M und der Formeln RM-1 bis RM-121.

Die erfindungsgemäßen Mischungen können weiterhin übliche Zusätze oder Additive enthalten, wie z.B. Stabilisatoren, Antioxidantien, UV-Absorber, Nanopartikel, Mikropartikel, etc.

Der Aufbau der erfindungsgemäßen Flüssigkristallanzeigen entspricht der üblichen Geometrie, wie sie z.B. in EP-OS 0 240 379, beschrieben wird. Die folgenden Beispiele sollen die Erfindung erläutern, ohne sie zu begrenzen. Vor- und nachstehend bedeuten Prozentangaben Gewichtsprozent; alle Temperaturen sind in Grad Celsius angegeben.

In der gesamten Patentanmeldung werden 1,4-Cyclohexylenringe und 1,4-Phenylenringe wie folgt dargestellt:

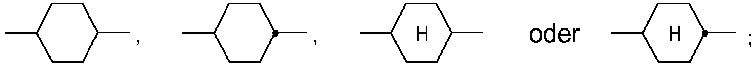

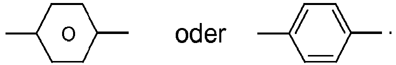

Bei den Cyclohexylenringen handelt es sich um trans-1,4-Cyclohexylenringe.

In der gesamten Patentanmeldung sowie in den Ausführungsbeispielen sind die Strukturen der Flüssigkristallverbindungen durch Akronyme angegeben. Sofern nicht anders angegeben, erfolgt die Transformation in chemische Formeln gemäß der Tabellen 1-3. Alle Reste CₙH₂ₙ₊₁, CₘH₂ₘ₊₁, und C_{m'}H_{2m'+1} bzw. C+ₙH₂ₙ und CₘH₂ₘ sind geradkettige Alkylreste bzw. Alkylenreste jeweils mit n, m, m' bzw. z C-Atomen. n, m, m', z bedeuten jeweils unabhängig voneinander 1, 2, 3, 4, 5, 6, 7, 8, 9, 10, 11, 12, vorzugsweise 1, 2, 3, 4, 5 oder 6. In Tabelle 1 sind die Ringelemente der jeweiligen Verbindung codiert, in Tabelle 2 sind die Brückenglieder aufgelistet und in Tabelle 3 sind die Bedeutungen der Symbole für die linken bzw. rechten Seitenketten der Verbindungen angegeben.

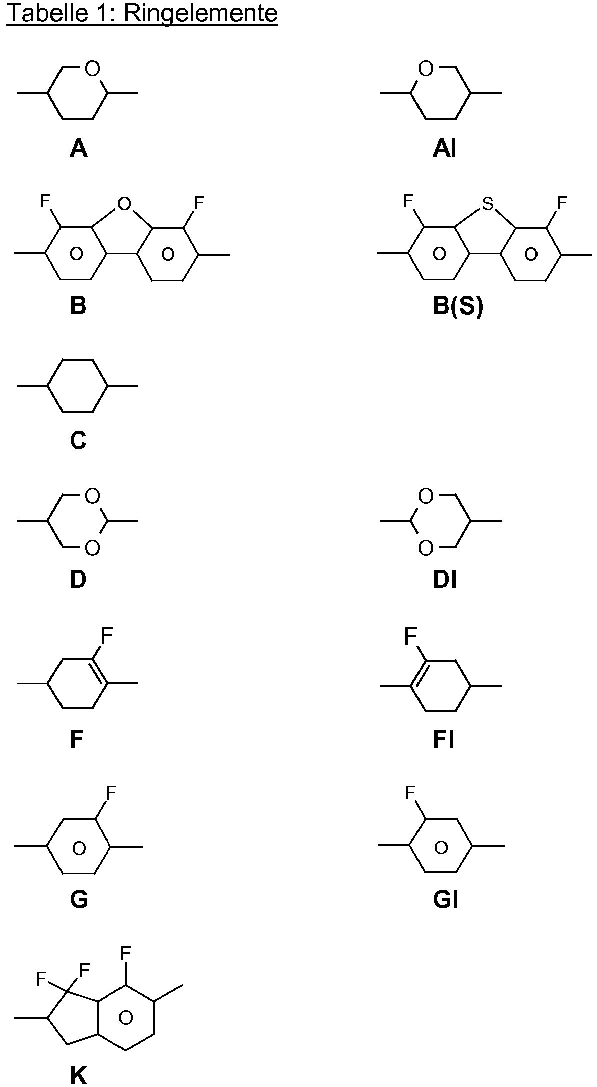

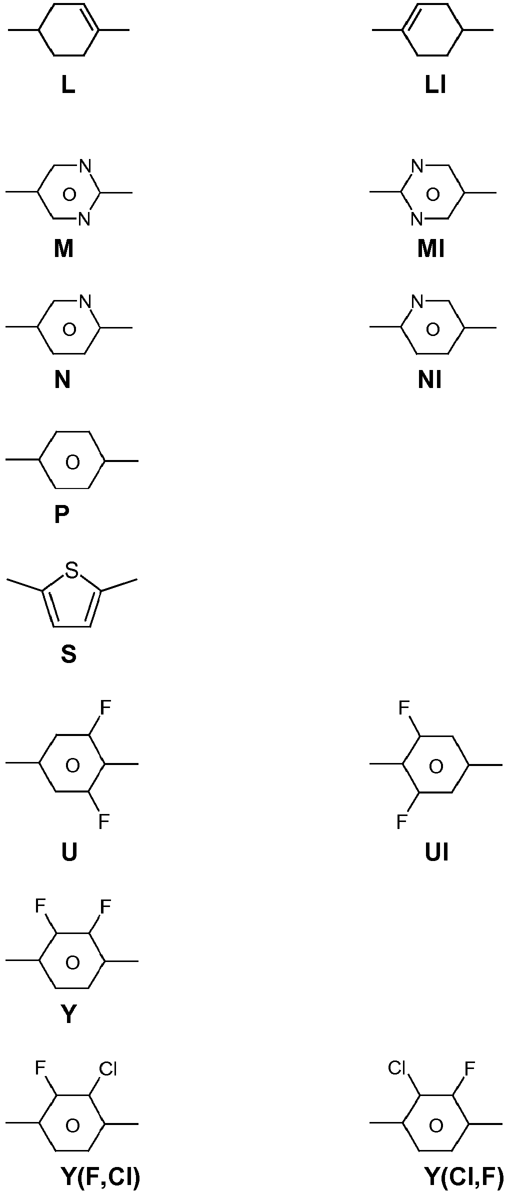

**Tabelle 2: Brückenglieder**

| | | | |
|---|---|---|---|
| **E** | -CH₂CH₂- | | |
| **V** | -CH=CH- | | |
| **T** | -C≡C- | | |
| **W** | -CF₂CF₂- | | |
| **Z** | -COO- | **ZI** | -OCO- |
| **O** | -CH₂O- | **OI** | -OCH₂- |
| **Q** | -CF₂O- | **QI** | -OCF₂- |

**Tabelle 3: Seitenketten**

| Seiten kette links | | Seiten kette rechts | |
|---|---|---|---|
| **n-** | CₙH₂ₙ₊₁- | **-n** | -CₙH₂ₙ₊₁ |
| **nO-** | CₙH₂ₙ₊₁-O- | **-On** | -O-CₙH₂ₙ₊₁ |
| **V-** | CH₂=CH- | **-V** | -CH=CH₂ |
| **nV-** | CₙH₂ₙ₊₁-CH=CH- | **-nV** | -CnH2n-CH=CH2 |
| **Vn-** | CH₂=CH- CnH2n- | **-Vn** | -CH=CH-CₙH₂ₙ₊₁ |
| **nVm-** | CₙH₂ₙ₊₁-CH=CH-CₘH₂ₘ- | **-nVm** | -CₙH₂ₙ-CH=CH-CₘH₂ₘ₊₁ |
| **N-** | N≡C- | **-N** | -C≡N |
| **F-** | F- | **-F** | -F |
| **Cl-** | Cl- | **-Cl** | -Cl |
| **M-** | CFH₂- | **-M** | -CFH₂ |
| **D-** | CF₂H- | **-D** | -CF₂H |
| **T-** | CF₃- | **-T** | -CF₃ |
| **MO-** | CFH₂O- | **-OM** | -OCFH₂ |
| **DO-** | CF₂HO- | **-OD** | -OCF₂H |
| **TO-** | CF₃O- | **-OT** | -OCF₃ |
| **T-** | CF₃- | **-T** | -CF₃ |
| **A-** | H-C≡C- | **-A** | -C≡C-H |

Vorzugsweise enthalten die erfindungsgemäßen Mischungen neben den Verbindungen der Formeln IIA und/oder IIB und/oder IIC und den Verbindungen der Formeln I1, I2 und EY, eine oder mehrere Verbindungen der nachfolgend genannten Verbindungen aus der Tabelle A.

**Tabelle A**

| Folgende Abkürzungen werden verwendet: |
|---|
| (n, m, m', z: jeweils unabhängig voneinander 1, 2, 3, 4, 5 oder 6; (O)CₘH₂ₘ₊₁ bedeutet OCₘH₂ₘ₊₁ oder CₘH₂ₘ₊₁) |
| 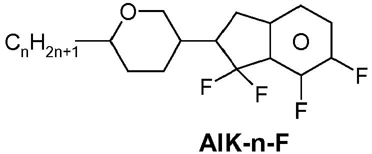 |
| 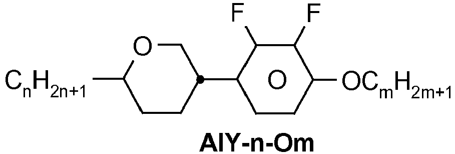 |
| 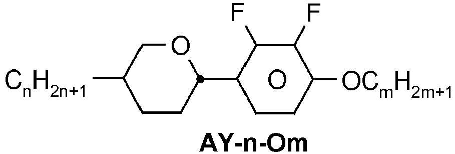 |
| 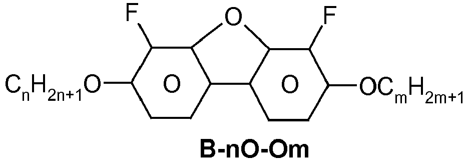 |
| 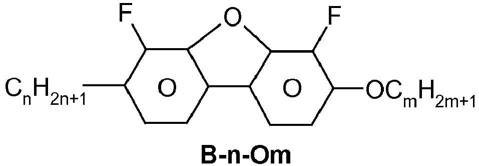 |
| 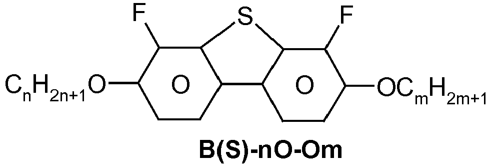 |
| 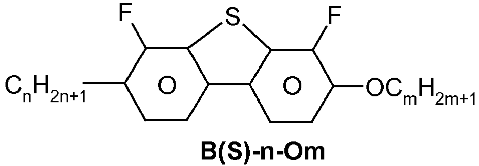 |
| 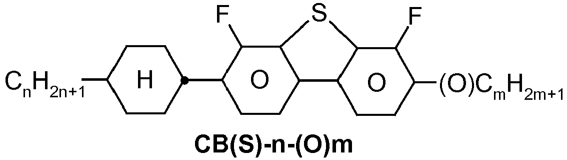 |
| 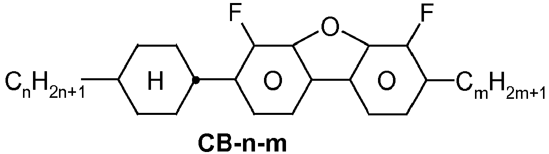 |
| 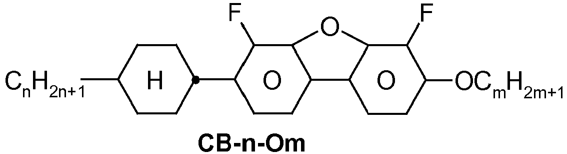 |
| 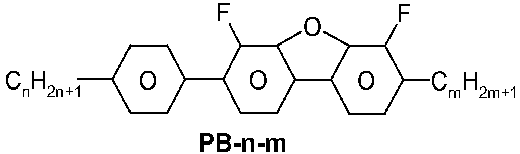 |
| 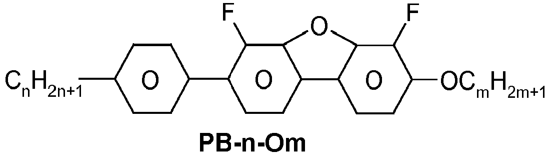 |
| 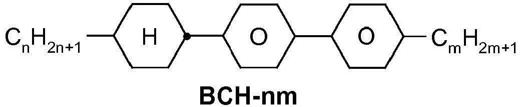 |
| 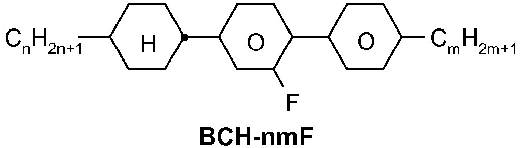 |
| 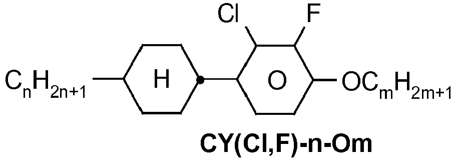 |
| 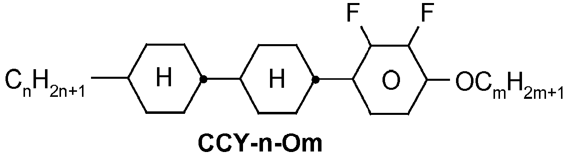 |
| 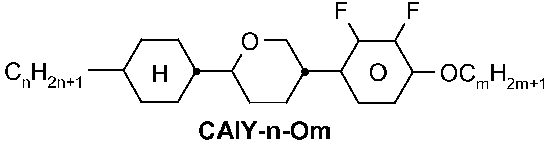 |
| 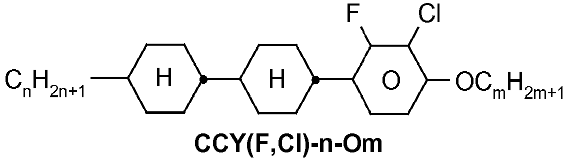 |
| 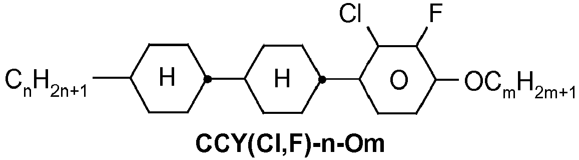 |
| 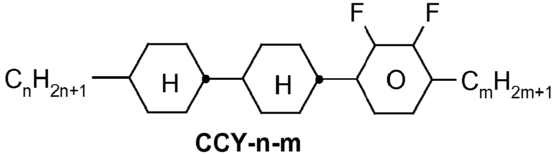 |
| 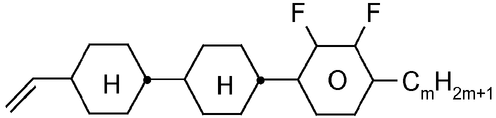 |
| 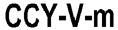 |
| 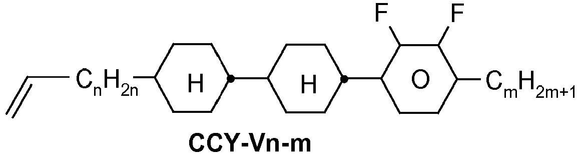 |
| 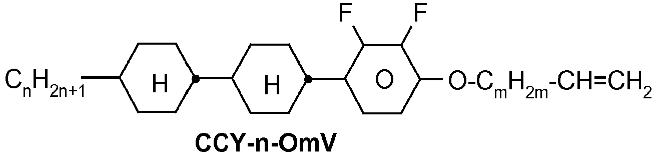 |
| 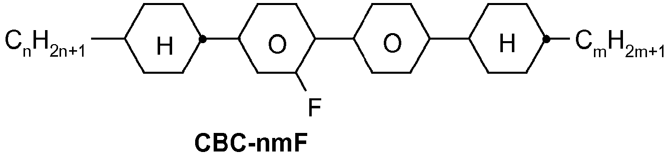 |
| 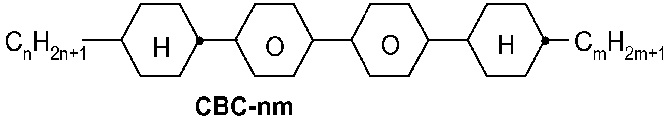 |
| 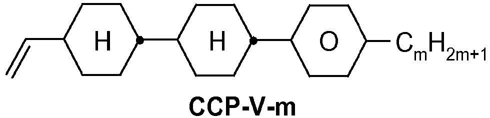 |
| 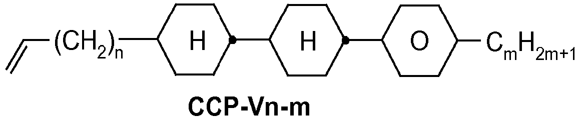 |
| 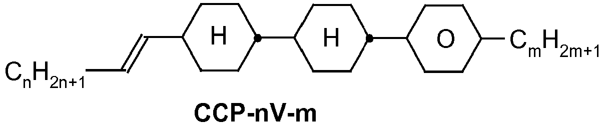 |
| 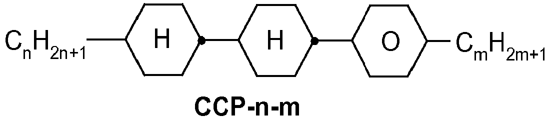 |
| 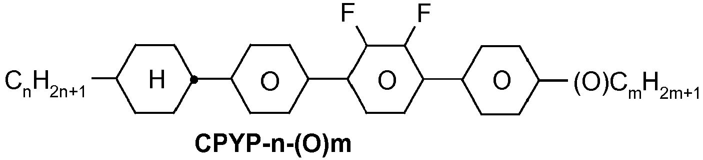 |
| 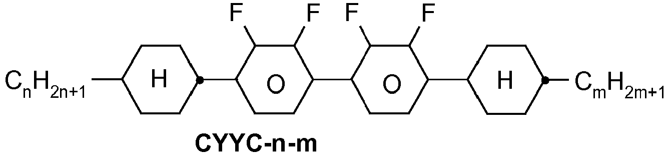 |
| 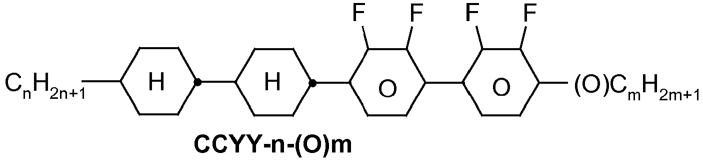 |
| 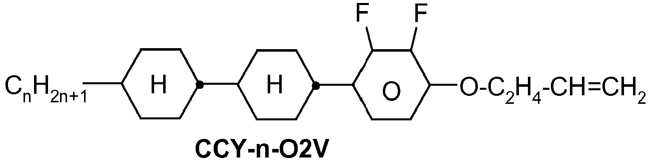 |
| 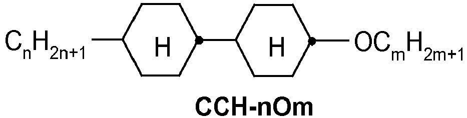 |
| 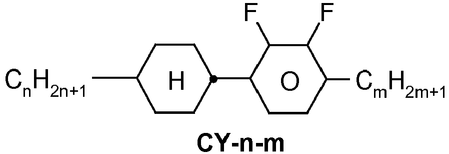 |
| 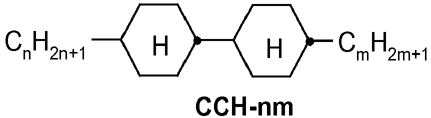 |
| 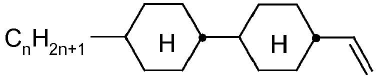 |
| 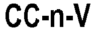 |
| 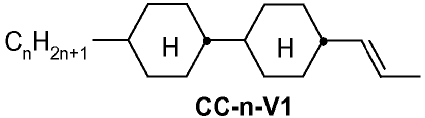 |
| 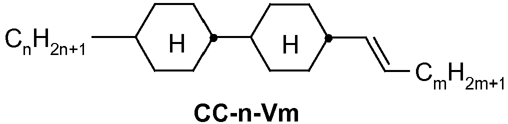 |
| 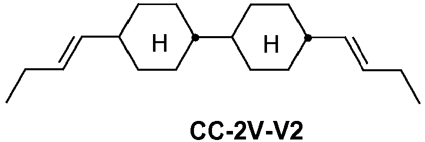 |
| 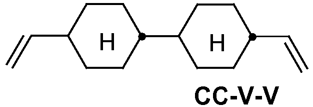 |
| 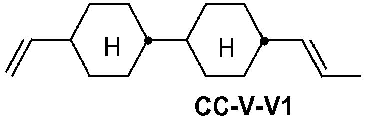 |
| 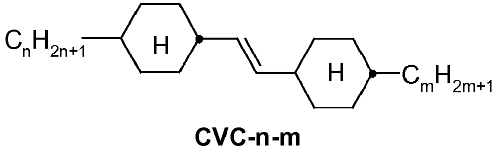 |
| 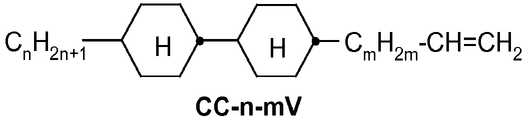 |
| 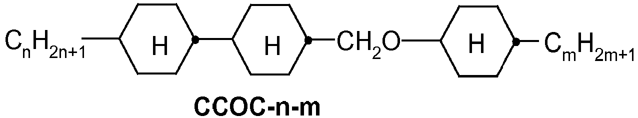 |
| 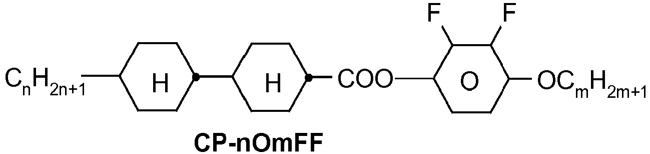 |
| 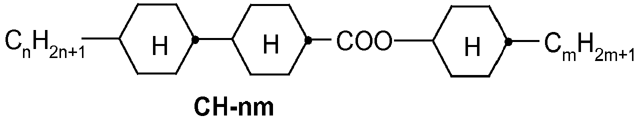 |
| 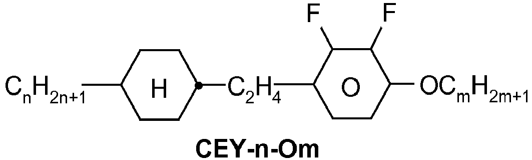 |
| 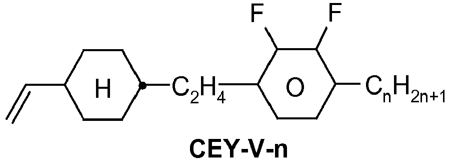 |
| 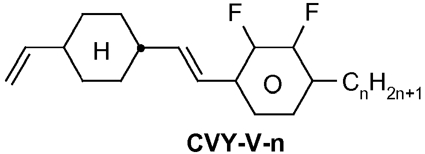 |
| 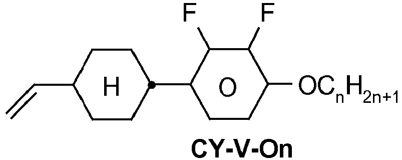 |
| 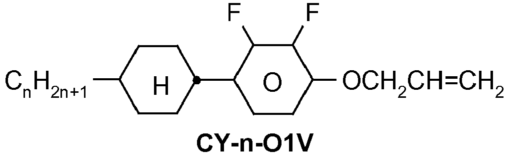 |
| 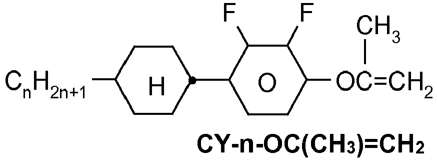 |
| 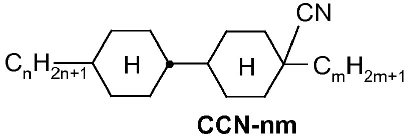 |
| 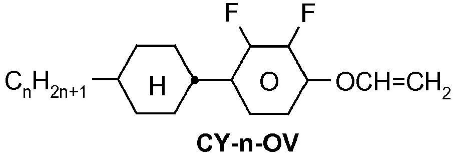 |
| 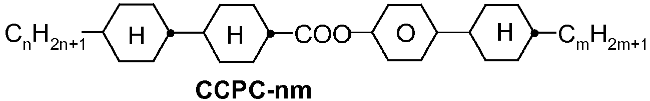 |
| 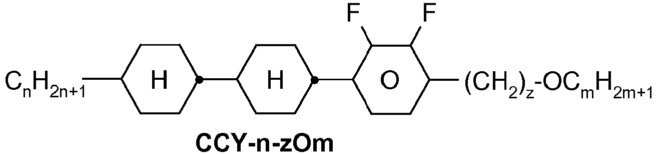 |
| 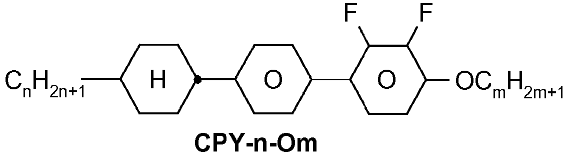 |
| 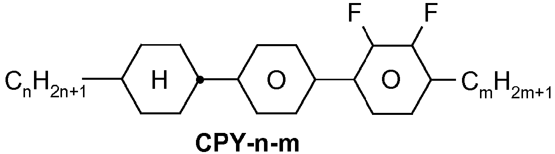 |
| 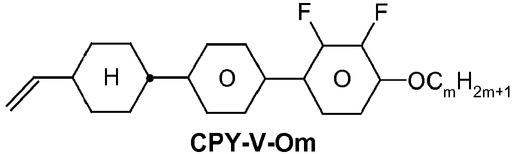 |
| 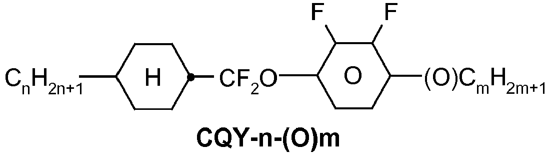 |
| 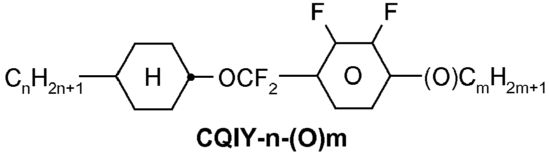 |
| 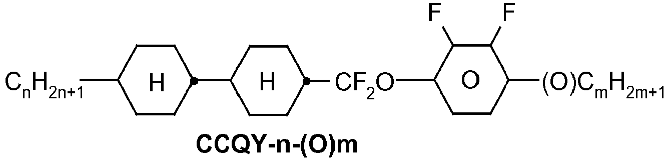 |
| 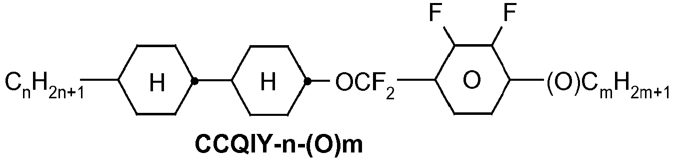 |
| 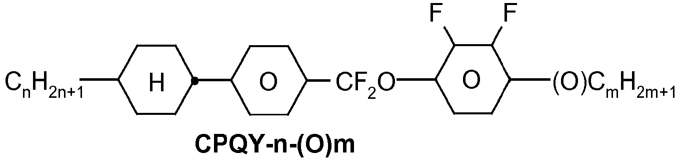 |
| 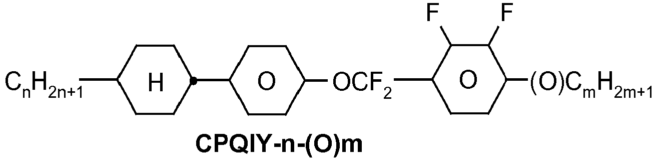 |
| 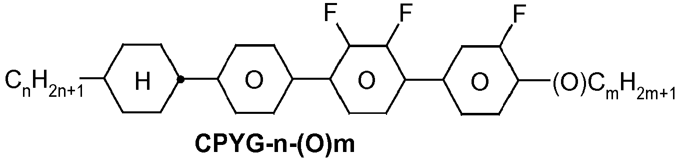 |
| 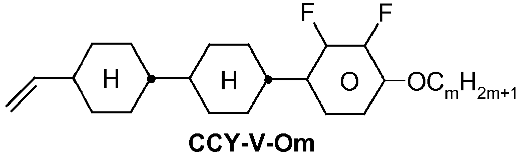 |
| 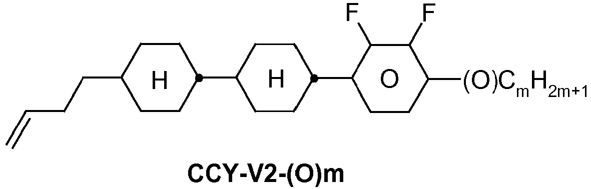 |
| 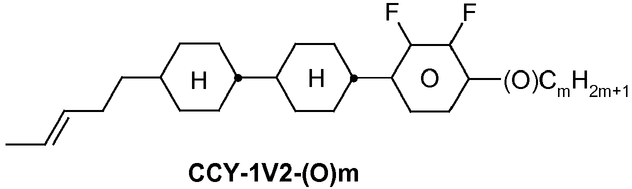 |
| 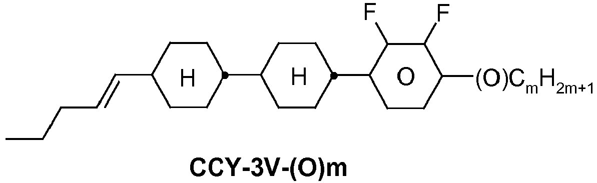 |
| 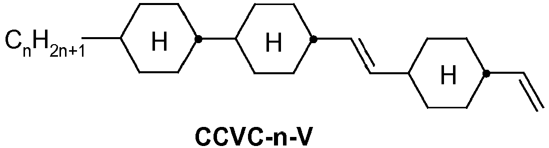 |
| 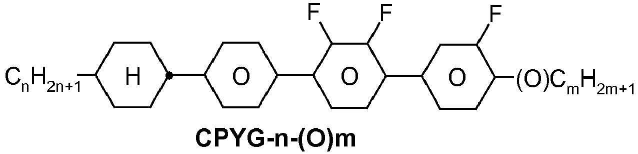 |
| 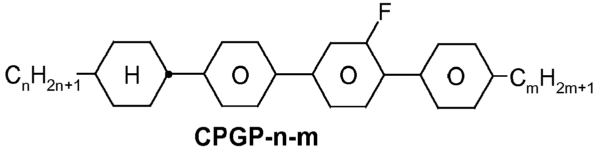 |
| 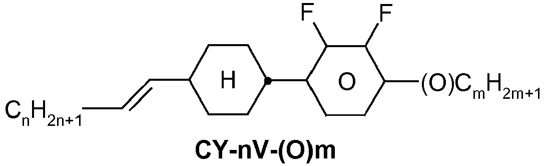 |
| 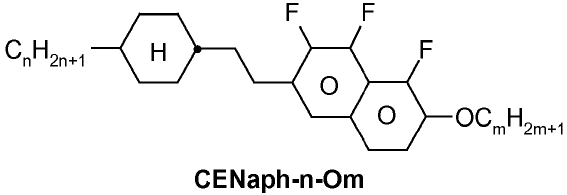 |
| 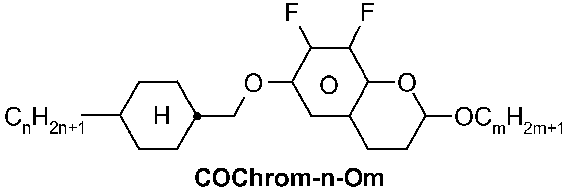 |
| 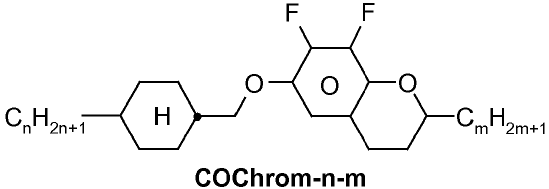 |
| 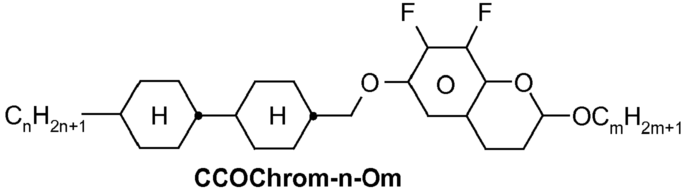 |
| 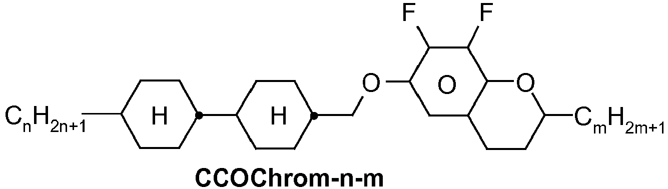 |
| 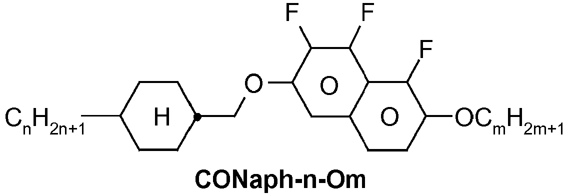 |
| 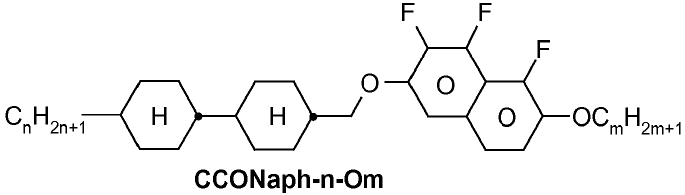 |
| 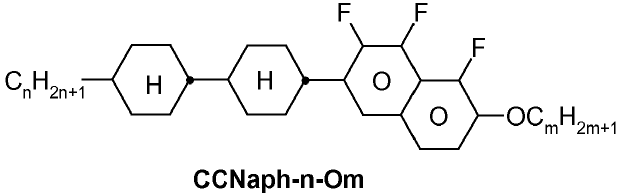 |
| 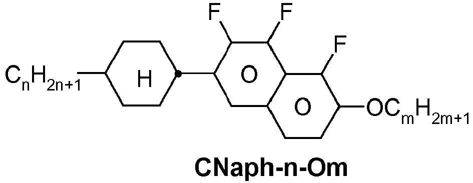 |
| 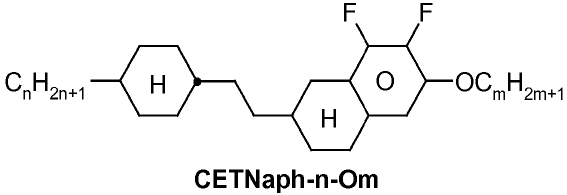 |
| 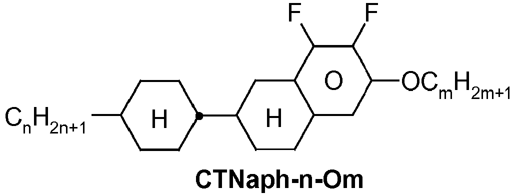 |
| 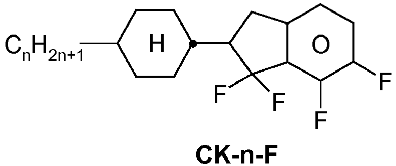 |
| 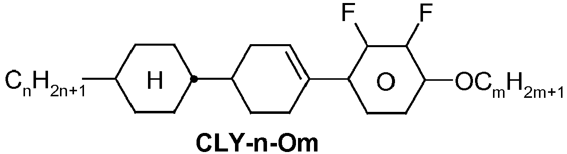 |
| 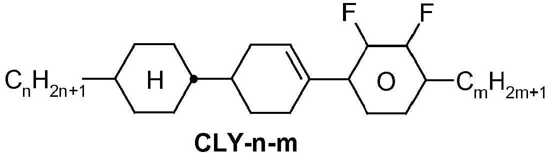 |
| 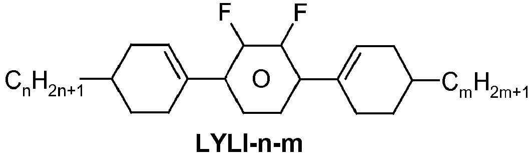 |
| 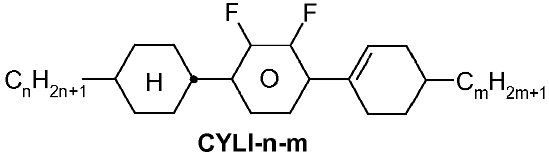 |
| 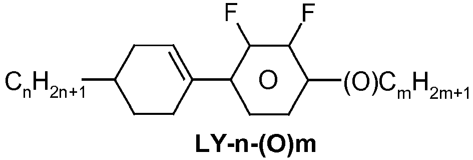 |
| 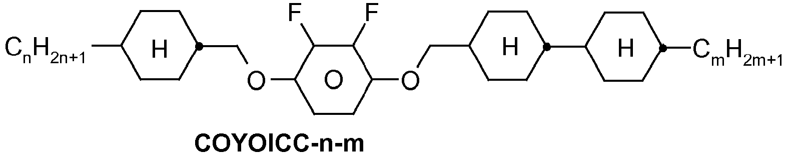 |
| 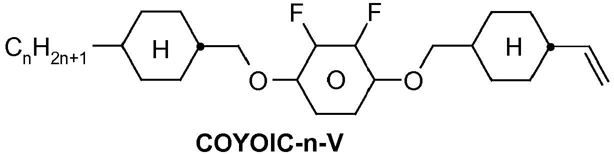 |
| 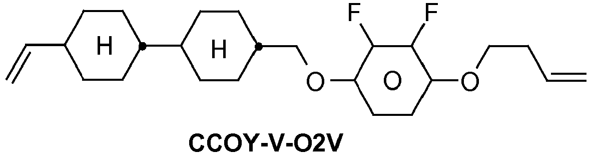 |
| 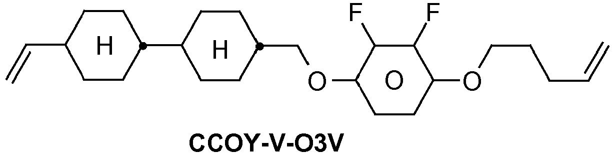 |
| 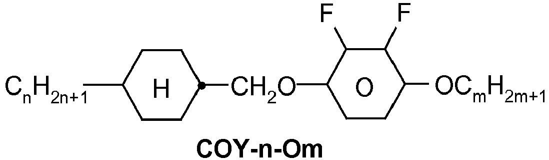 |
| 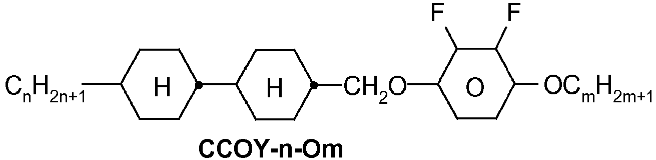 |
| 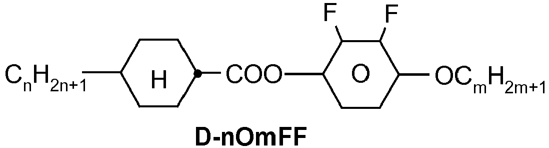 |
| 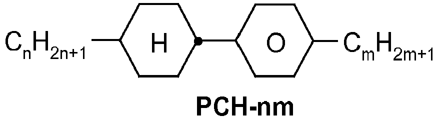 |
| 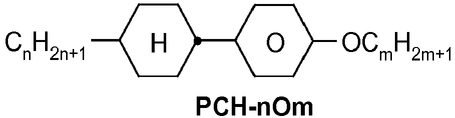 |
| 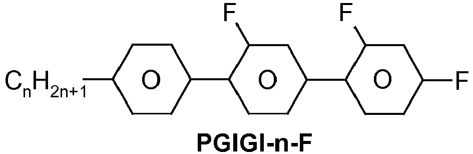 |
| 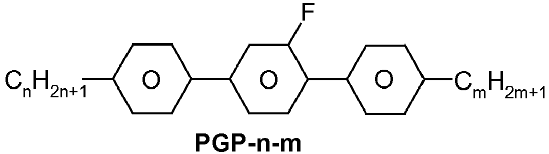 |
| 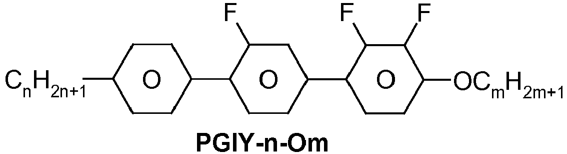 |
| 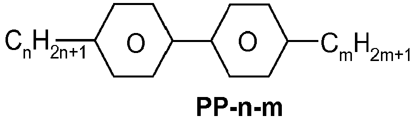 |
| 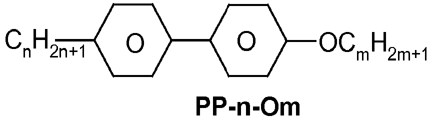 |
| 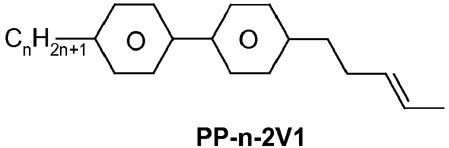 |
| 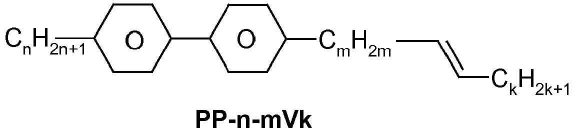 |
| 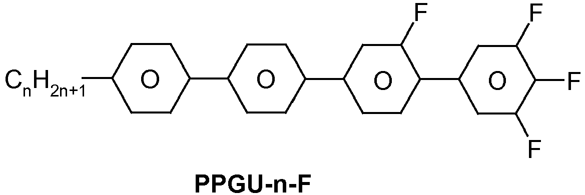 |
| 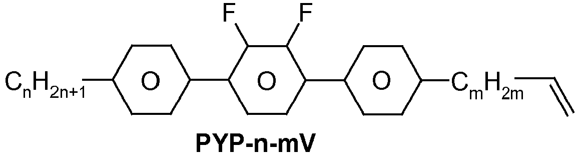 |
| 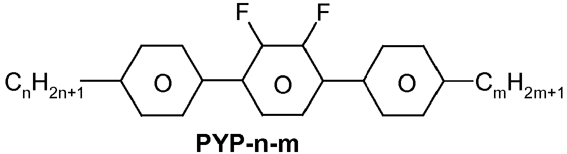 |
| 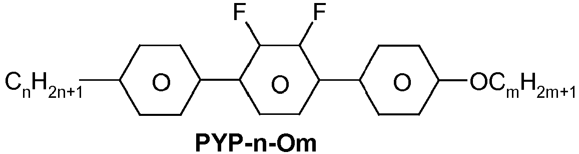 |
| 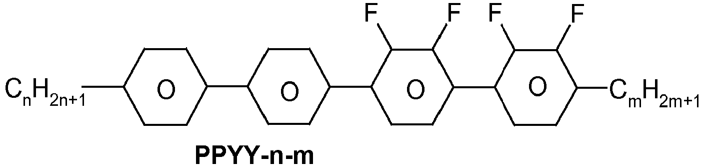 |
| 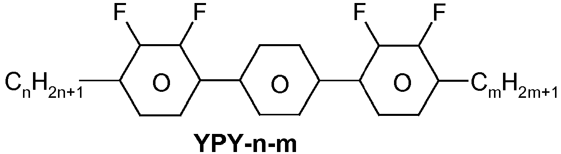 |
| 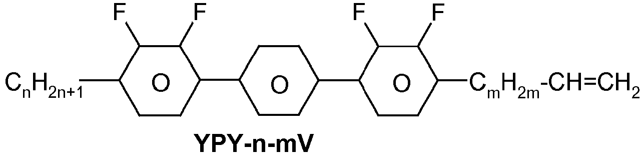 |
| 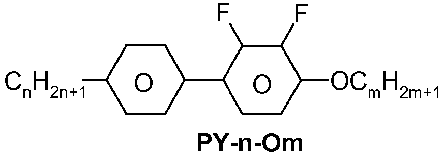 |
| 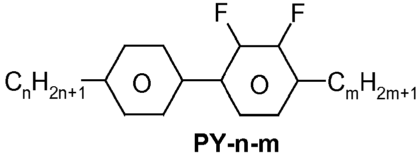 |
| 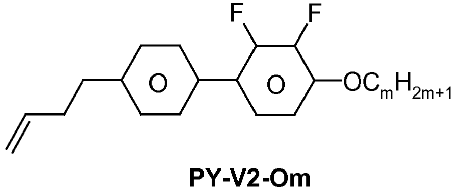 |
| 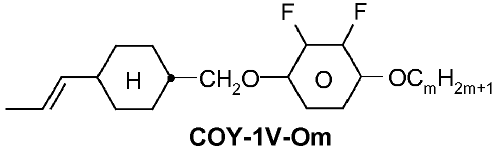 |
| 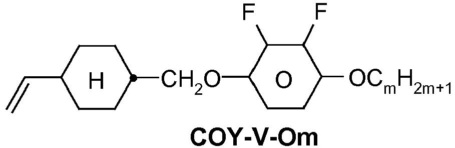 |
| 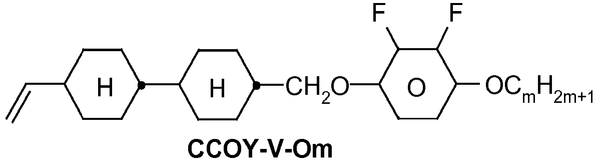 |
| 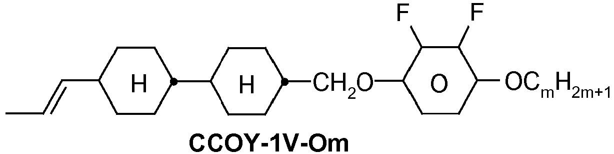 |
| 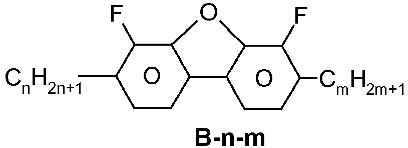 |
| 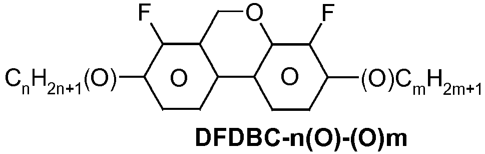 |
| 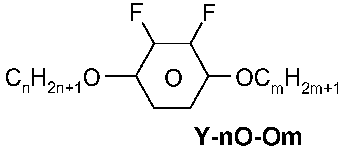 |
| 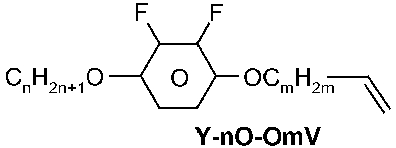 |
| 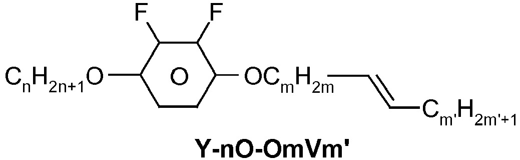 |
| 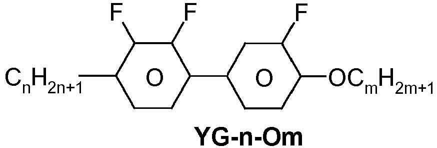 |
| 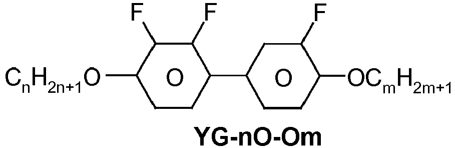 |
| 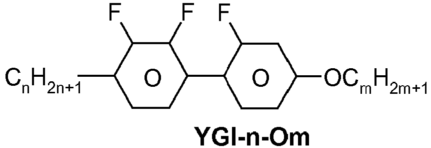 |
| 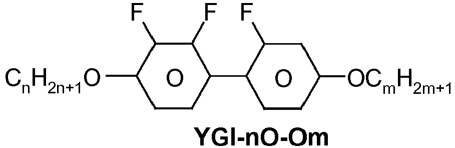 |
| 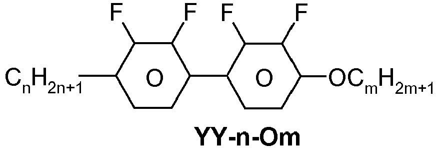 |
| 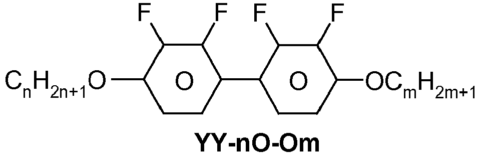 |
| 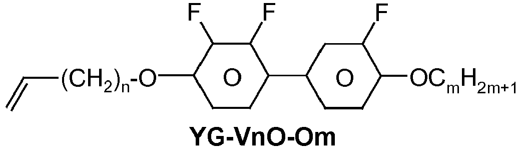 |
| 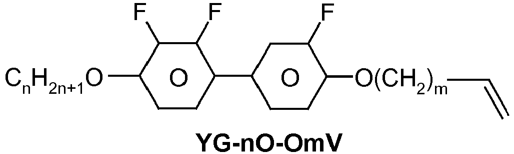 |
| 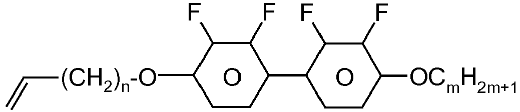 |
| 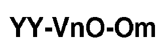 |

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Mittels geeigneter Zusatzstoffe können die erfindungsgemäßen Flüssigkristallphasen derart modifiziert werden, daß sie in jeder bisher bekannt gewordenen Art von z. B. ECB-, VAN-, IPS-, GH- oder ASM-VA LCD-Anzeige einsetzbar sind.

Die Dielektrika können auch weitere, dem Fachmann bekannte und in der Literatur beschriebene Additive, wie z. B. UV-Absorber, Antioxidantien, Nanoteilchen, Radikalfänger, enthalten. Beispielsweise können 0-15 % pleochroitische Farbstoffe, Stabilisatoren oder chirale Dotierstoffe zugesetzt werden. Geeignete Stabilisatoren für die erfindungsgemäßen Mischungen sind insbesondere solche die in Tabelle B gelistet sind.

Beispielsweise können 0-15 % pleochroitische Farbstoffe zugesetzt werden, ferner Leitsalze, vorzugsweise Ethyldimethyldodecylammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

**Tabelle B**

| In der Tabelle B werden mögliche Dotierstoffe angegeben, die in der Regel den erfindungsgemäßen Mischungen zugesetzt werden. Vorzugsweise enthalten die Mischungen 0-10 Gew.%, insbesondere 0,01-5 Gew.% und besonders bevorzugt 0,01-3 Gew.% an Dotierstoffen. Sofern die Mischungen nur einen Dotierstoff enthalten, wird er in Mengen von 0,01-4 Gew.%, vorzugsweise 0,1-1,0 Gew.%, eingesetzt. | |
|---|---|
| 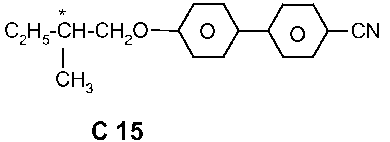 | 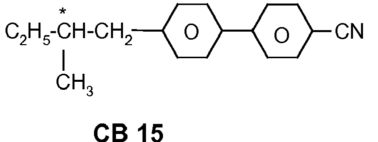 |
| 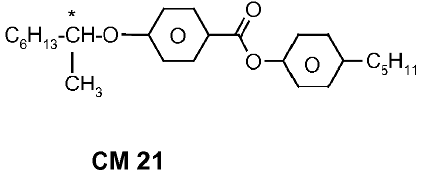 | 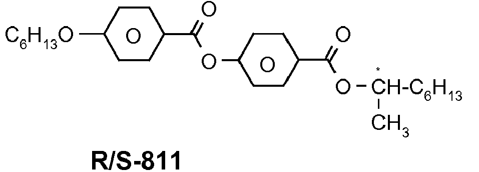 |
| 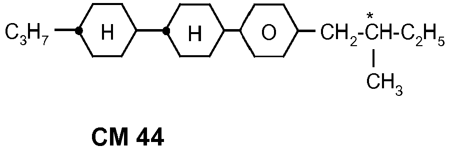 | 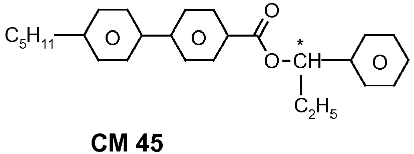 |
| 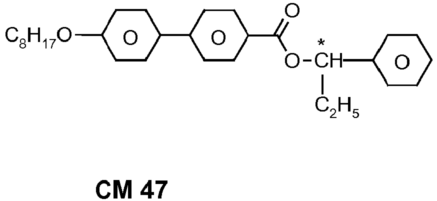 | 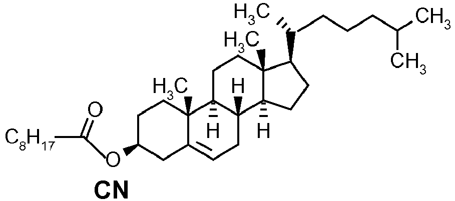 |
| 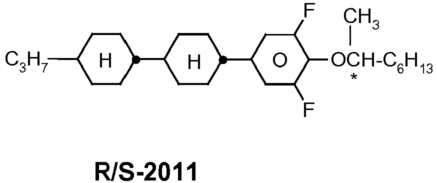 | 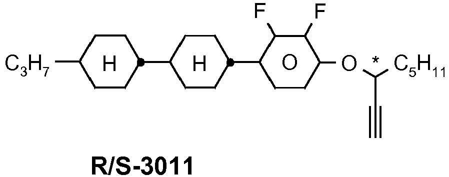 |

| | |
|---|---|
| 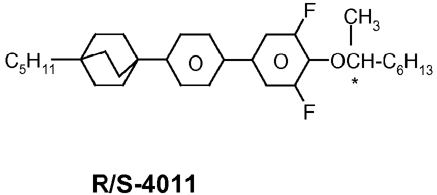 | 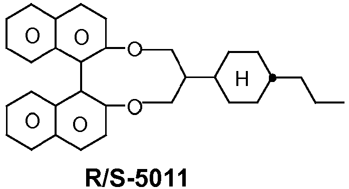 |
| 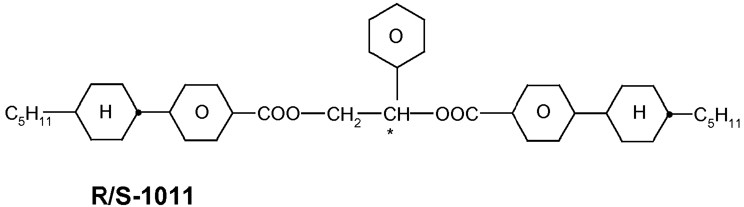 | |

**Tabelle C**

| Stabilisatoren, die beispielsweise den erfindungsgemäßen Mischungen in Mengen von 0-10 Gew.% zugesetzt werden können, werden nachfolgend genannt. | |
|---|---|
| 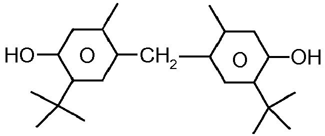 | 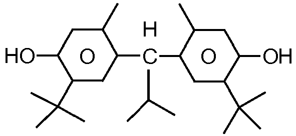 |
| 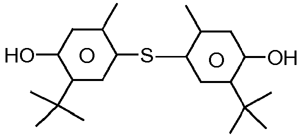 | 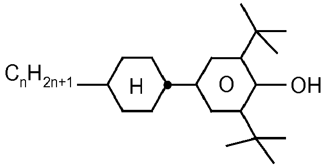 |
| | n = 1, 2, 3, 4, 5, 6 oder 7 |

| | |
|---|---|
| 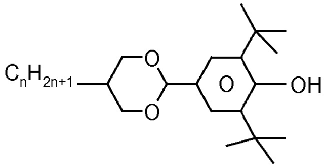 | |
| n = 1, 2, 3, 4, 5, 6 oder 7 | |
| 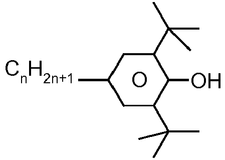 | 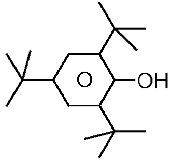 |
| n = 1, 2, 3, 4, 5, 6 oder 7 | |
| 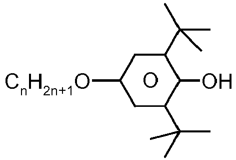 | 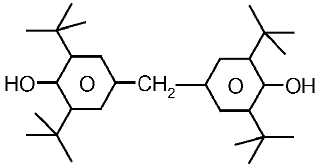 |
| 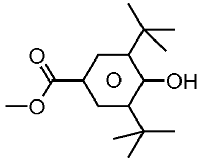 | 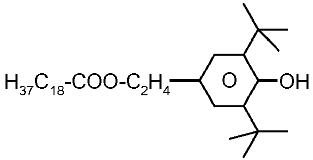 |
| 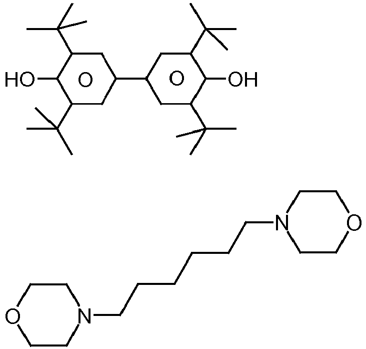 | 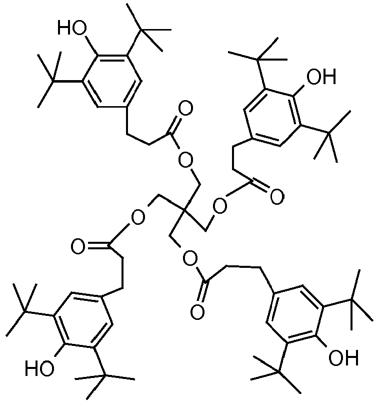 |

| | |
|---|---|
| 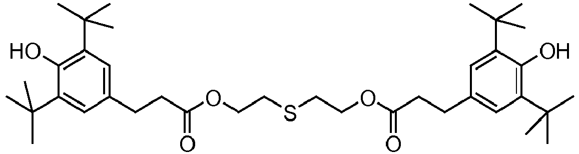 | |
| 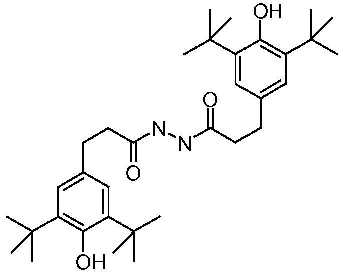 | 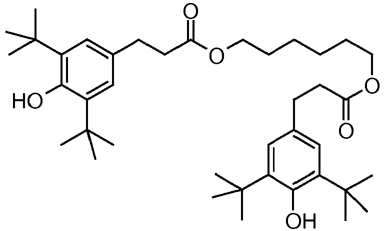 |
| 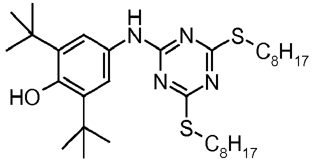 | 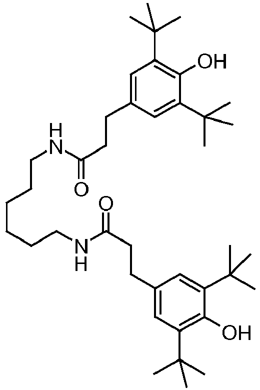 |
| 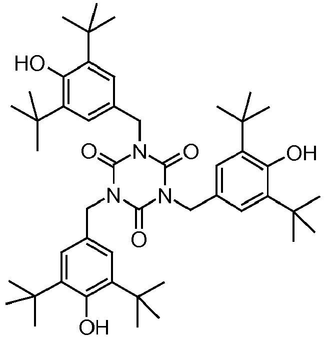 | 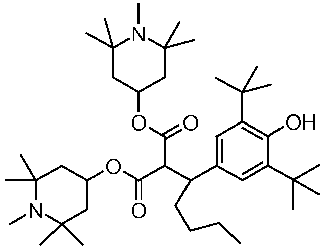 |

| | |
|---|---|
| 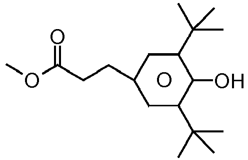 | 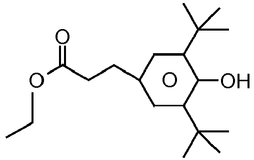 |
| 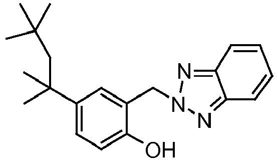 | 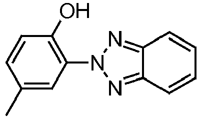 |
| 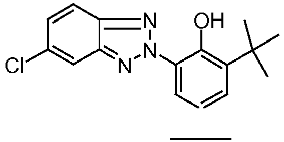 | 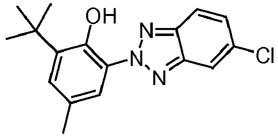 |
| 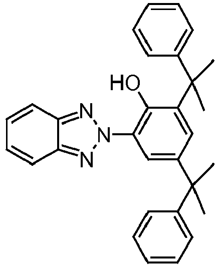 | 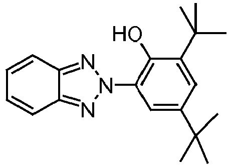 |
| 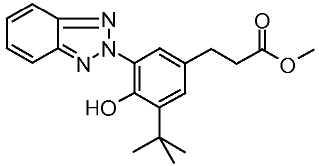 | 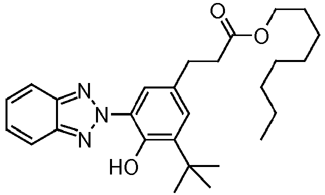 |

| | |
|---|---|
| 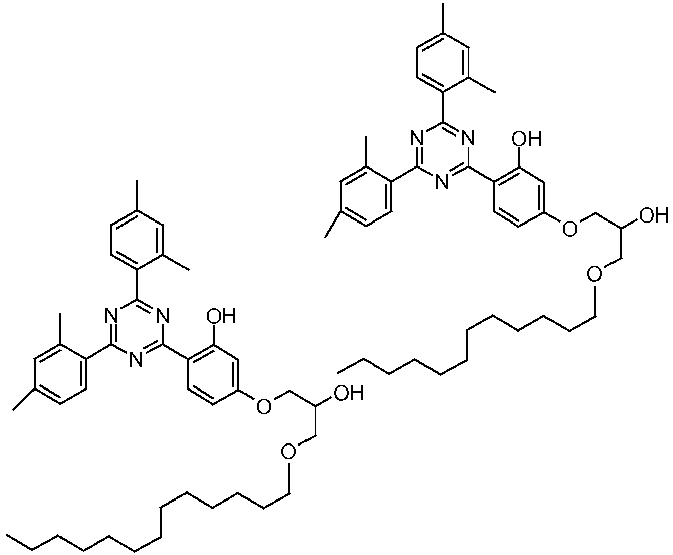 | |
| 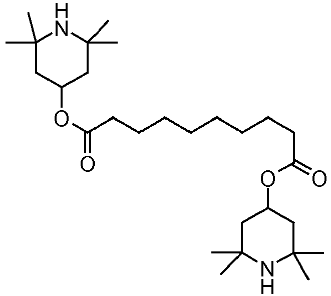 | 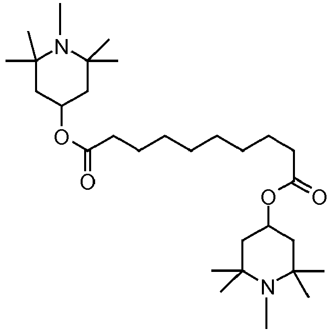 |
| 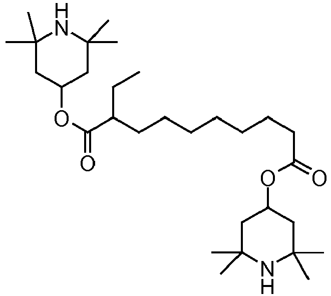 | |

| | |
|---|---|
| 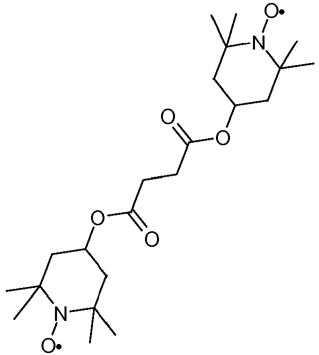 | 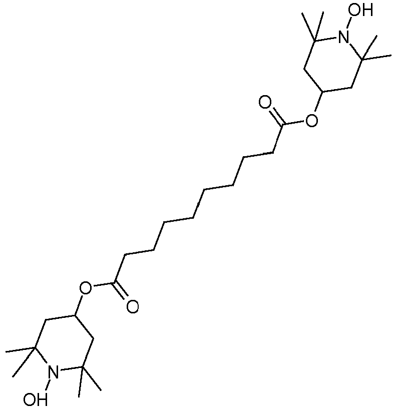 |
| 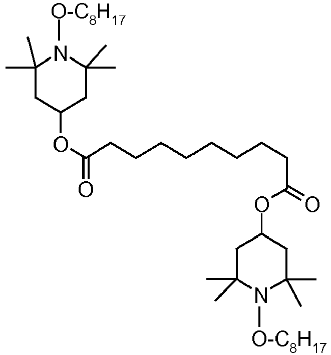 | 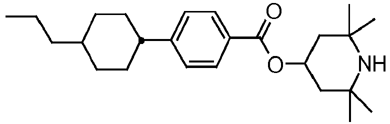 |
| 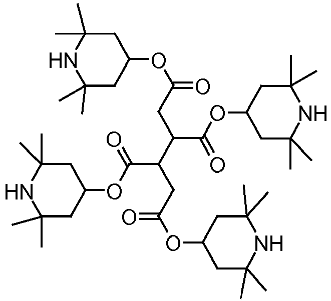 | 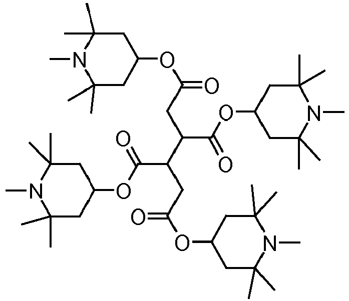 |

Bevorzugt enthält das erfindugnsgemäße Medium eine oder mehrere Stabilisatoren aus der Tabelle D. Insbesondere bevorzugt enthält das erfindungsgemäße Medium Tinuvin® 770 (Bis-(2,2,6,6-tetramethyl-4 piperidyl)sebacat), vorzugsweise in Mengen von 0,001 - 5 Gew.% bezogen auf das flüssigkristalline Medium.

**Tabelle D**

| In der Tabelle D sind Beispielverbindungen zusammengestellt, die in den FK-Medien gemäß der vorliegenden Erfindung vorzugsweise als reaktive mesogene Verbindungen verwendet werden können. Sofern die erfindungsgemäßen Mischungen ein oder mehrere reaktive Verbindungen enthalten, werden sie vorzugsweise in Mengen von 0,01-5 Gew.% eingesetzt. Gegebenenfalls muß für die Polymerisation noch ein Initiator oder ein Gemisch aus zwei oder mehr Initiatoren zugesetzt werden. Der Initiator oder das Initiatorgemisch wird vorzugsweise in Mengen von 0,001-2 Gew.% bezogen auf die Mischung zugesetzt. Ein geeigneter Initiator ist z.B. Irgacure (Fa. BASF) oder Irganox (Fa. BASF). |
|---|
| 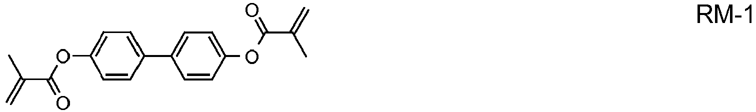 |
| 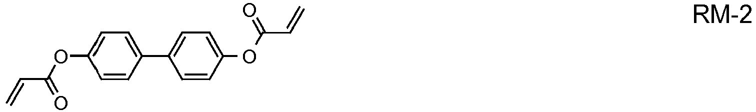 |
| 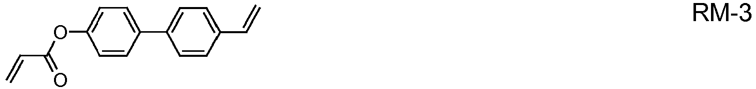 |
| 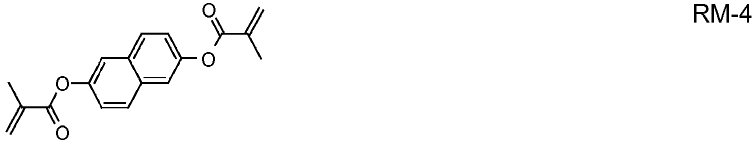 |
| 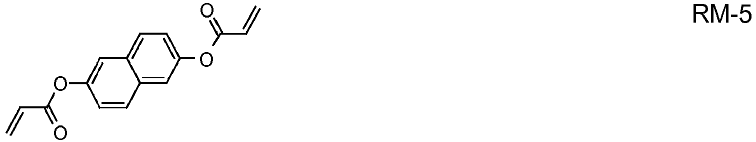 |
| 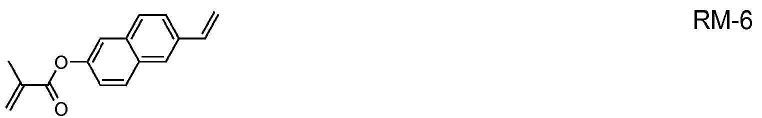 |
| 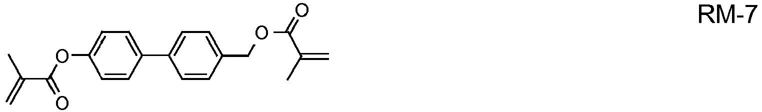 |
| 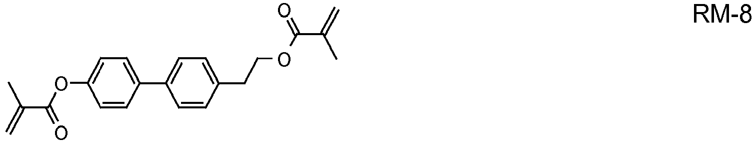 |
| 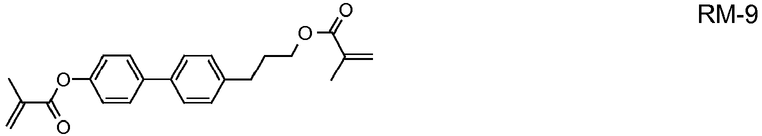 |
| 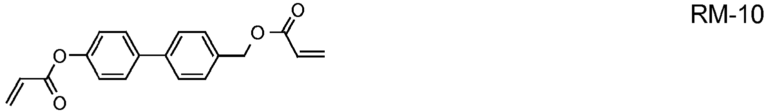 |
| 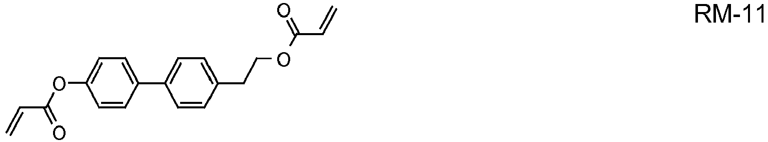 |
| 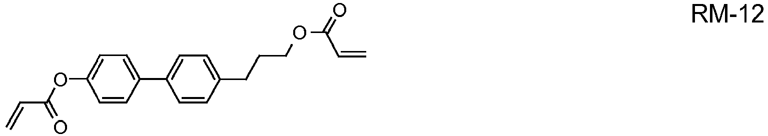 |
| 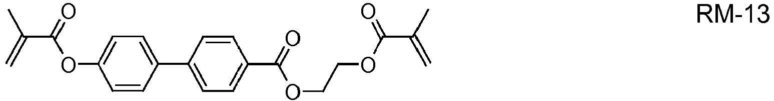 |
| 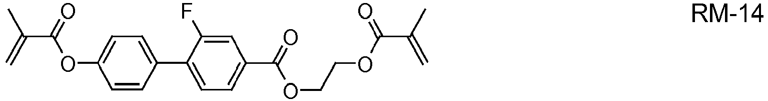 |

| |
|---|
| 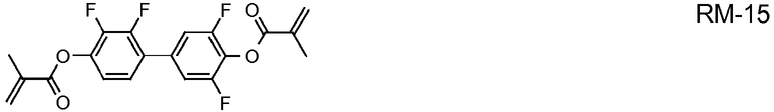 |
| 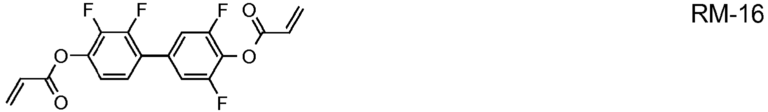 |
| 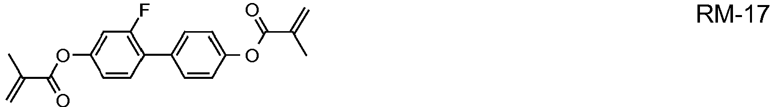 |
| 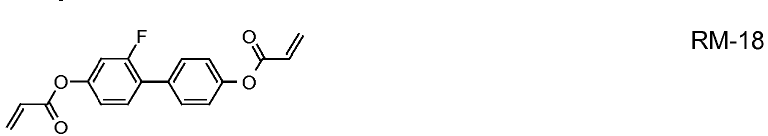 |
| 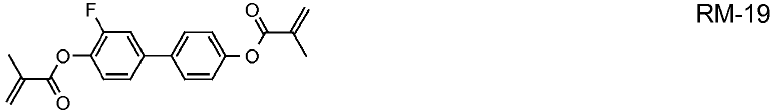 |
| 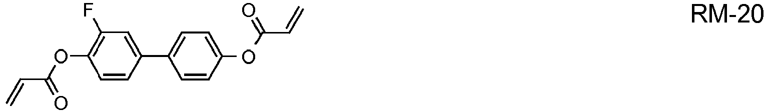 |
| 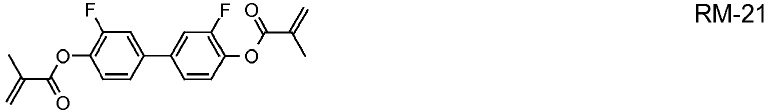 |
| 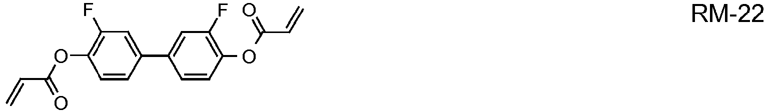 |
| 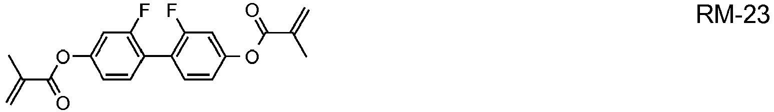 |
| 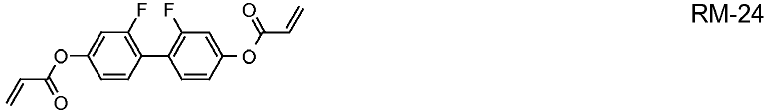 |

| |
|---|
| 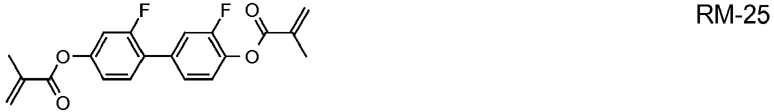 |
| 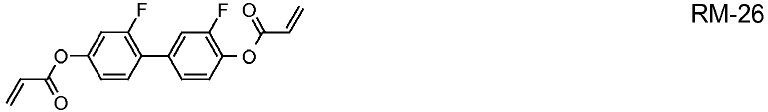 |
| 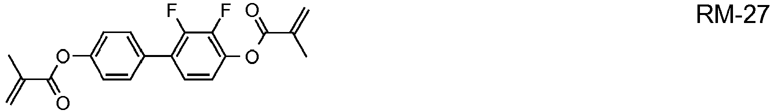 |
| 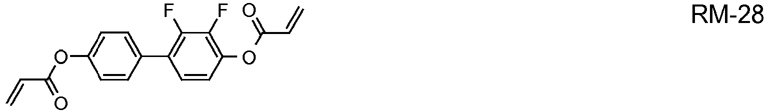 |
| 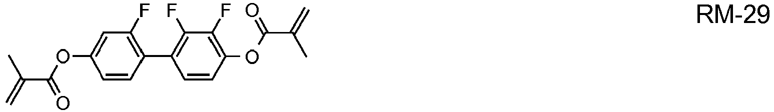 |
| 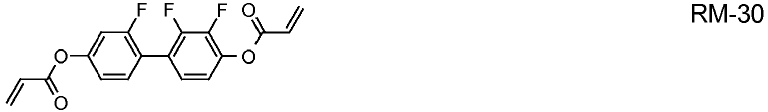 |
| 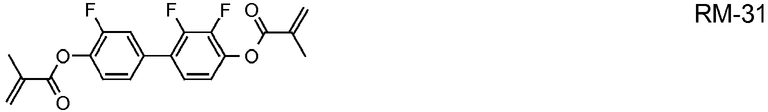 |
| 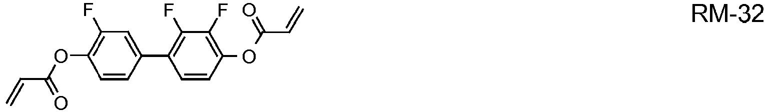 |
| 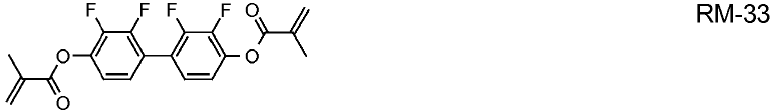 |
| 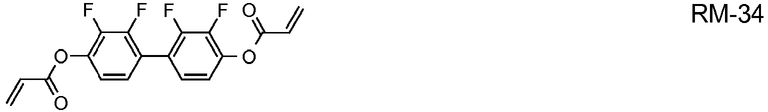 |

| |
|---|
| 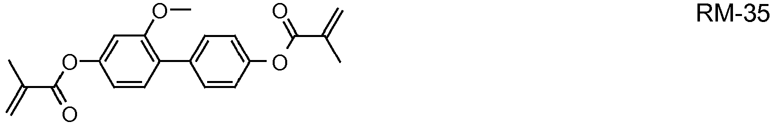 |
| 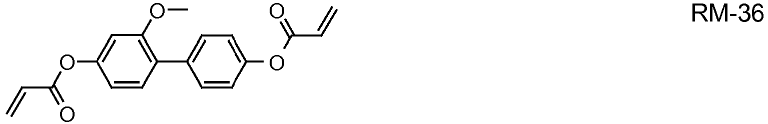 |
| 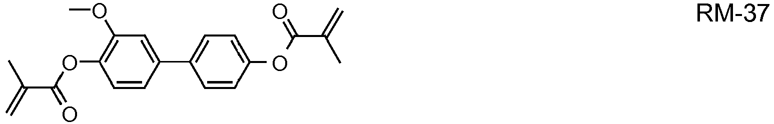 |
| 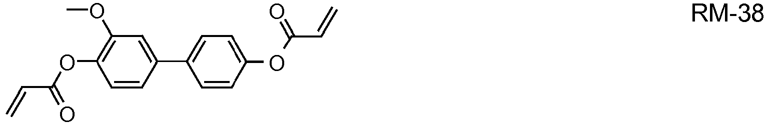 |
| 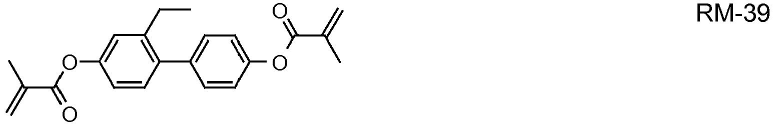 |
| 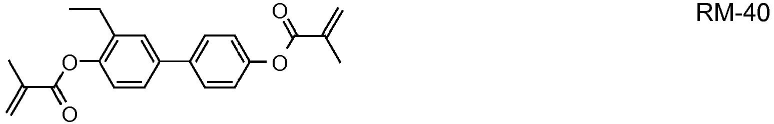 |
| 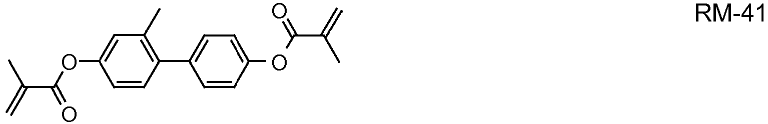 |
| 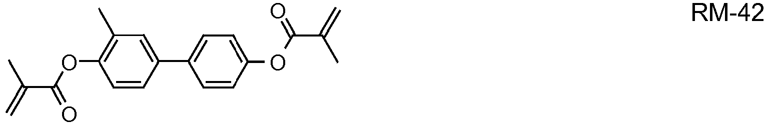 |
| 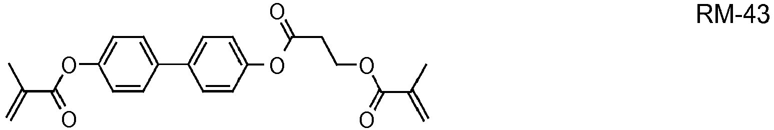 |

| |
|---|
| 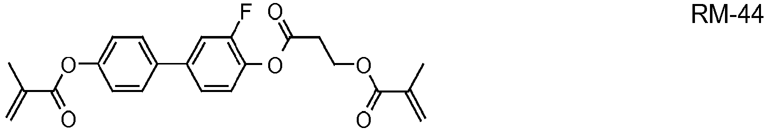 |
| 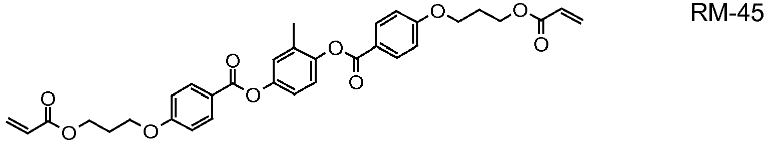 |
| 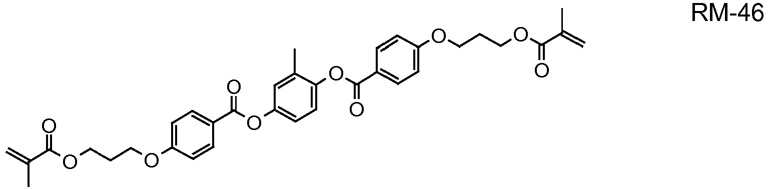 |
| 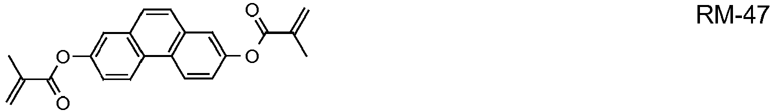 |
| 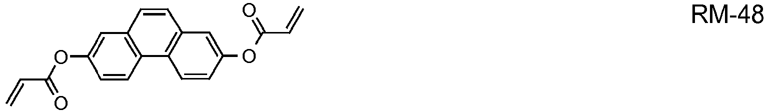 |
| 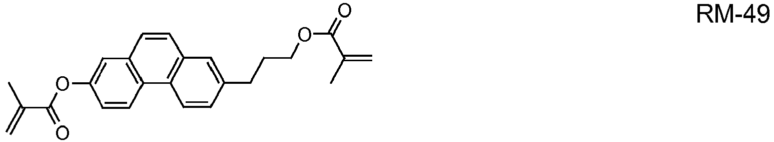 |
| 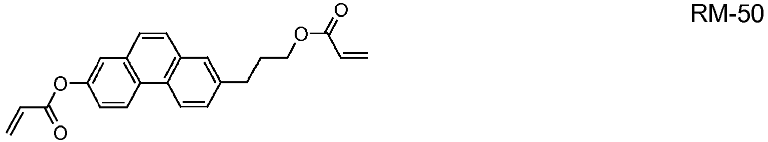 |
| 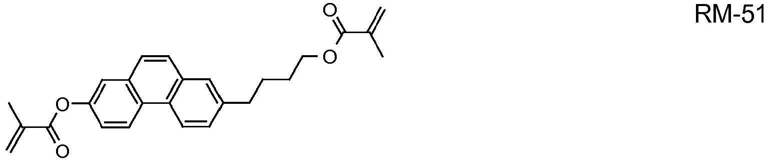 |

| |
|---|
| 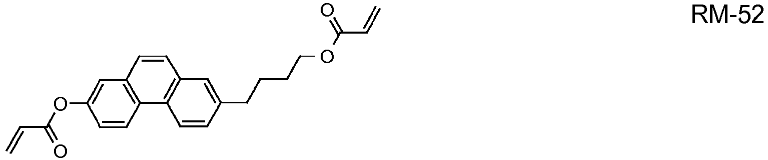 |
| 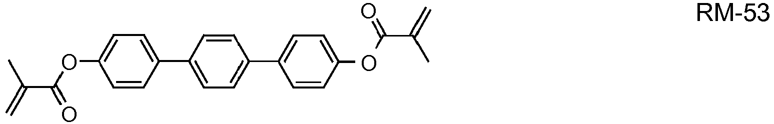 |
| 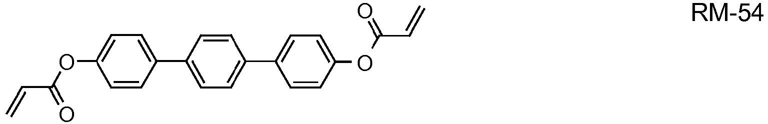 |
| 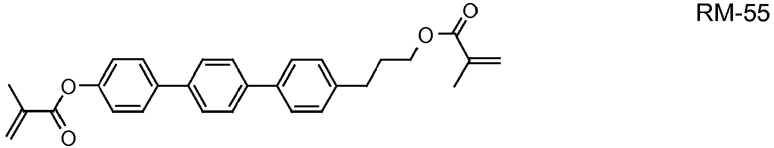 |
| 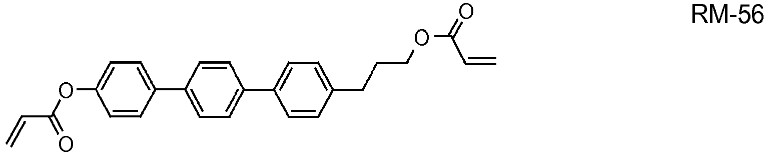 |
| 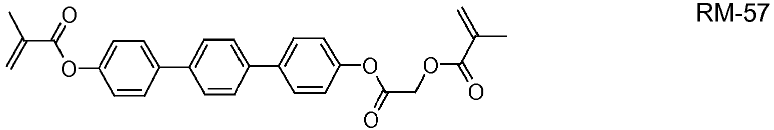 |
| 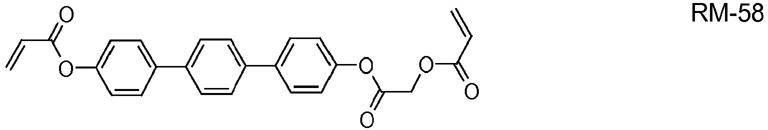 |
| 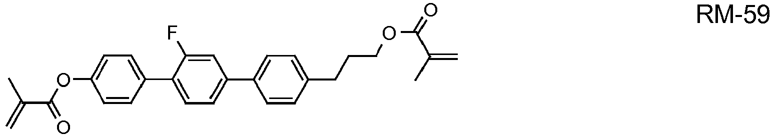 |

| |
|---|
| 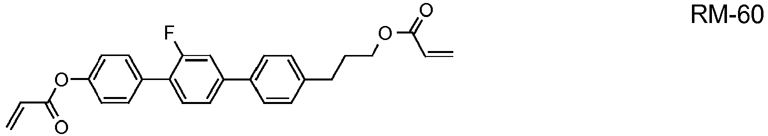 |
| 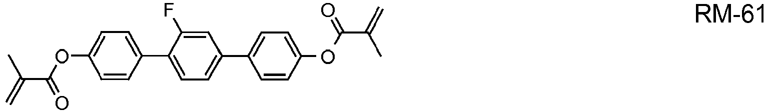 |
| 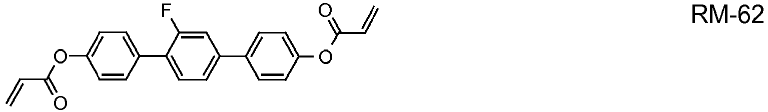 |
| 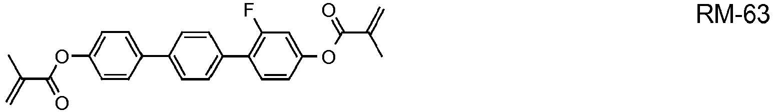 |
| 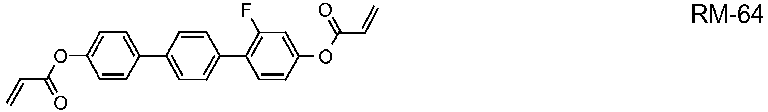 |
| 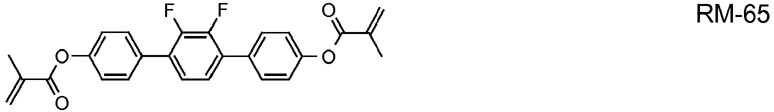 |
| 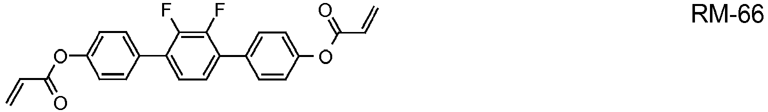 |
| 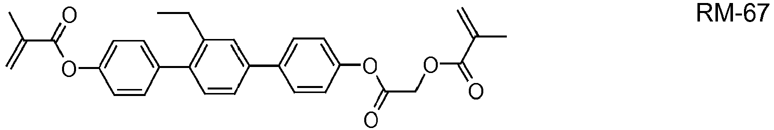 |
| 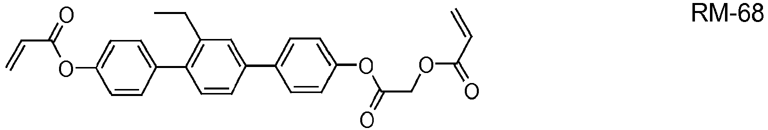 |
| 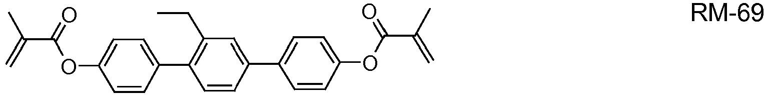 |

| |
|---|
| 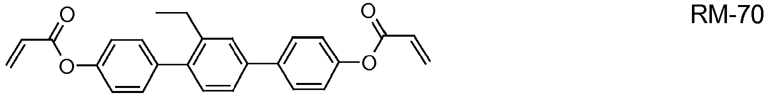 |
| 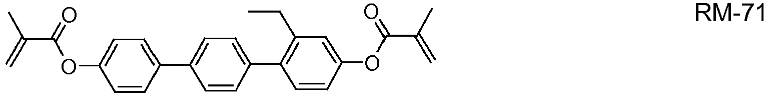 |
| 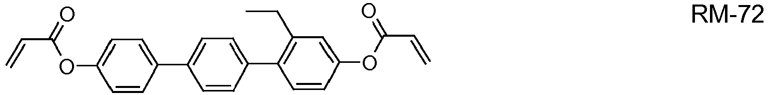 |
| 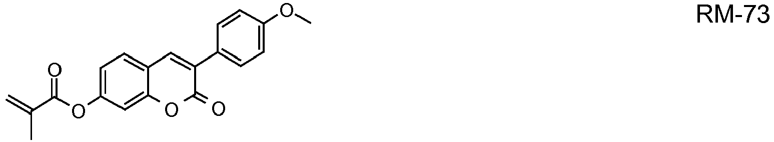 |
| 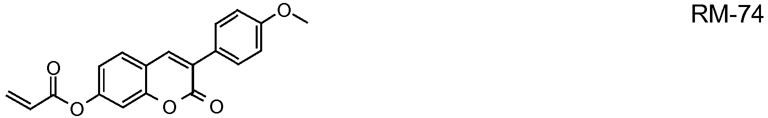 |
| 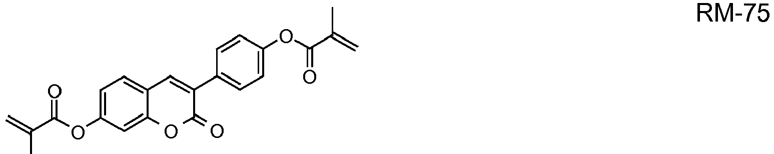 |
| 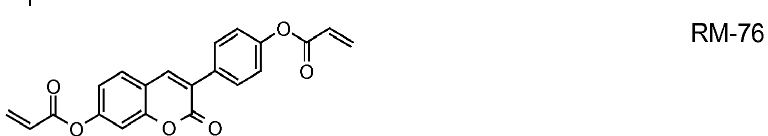 |
| 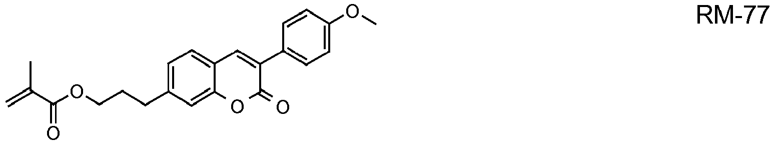 |
| 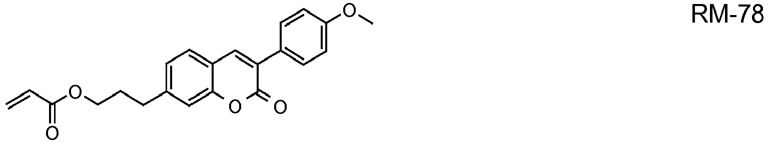 |
| 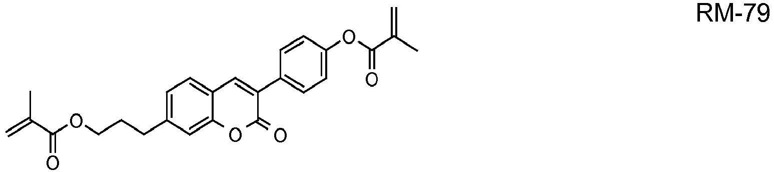 |

| |
|---|
| 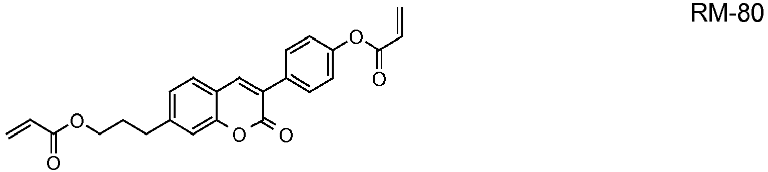 |
| 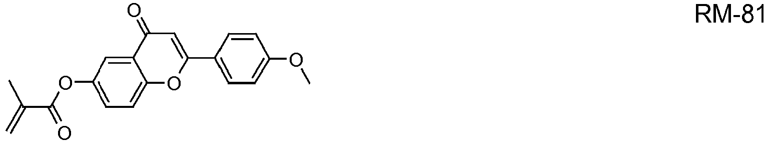 |
| 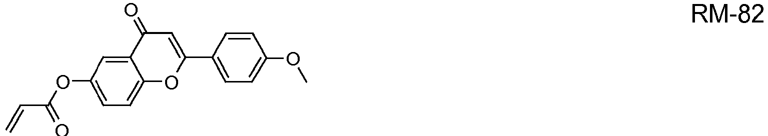 |
| 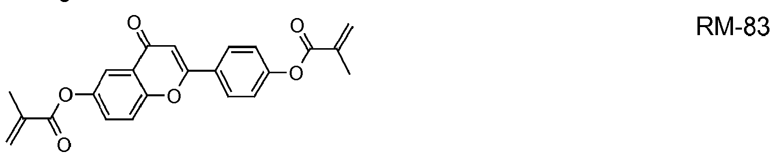 |
| 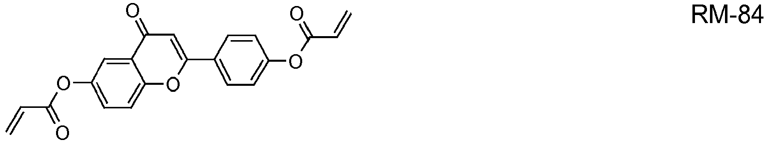 |
| 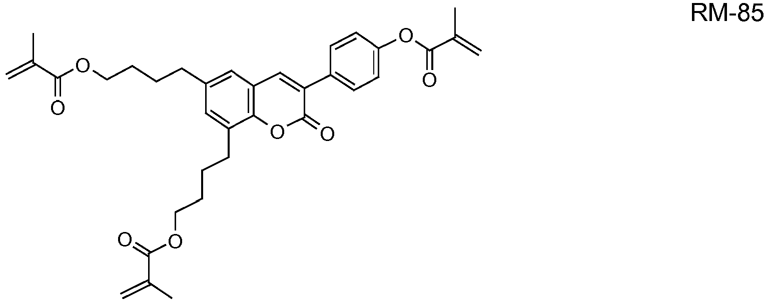 |
| 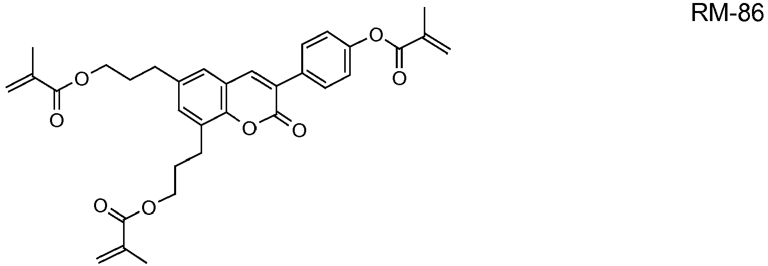 |

| |
|---|
| 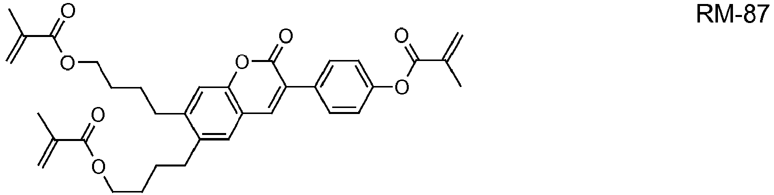 |
| 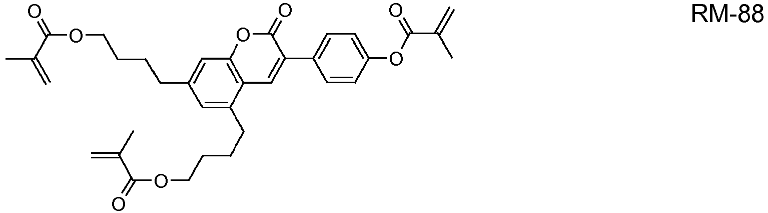 |
| 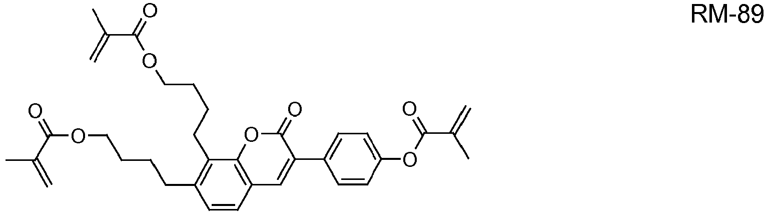 |
| 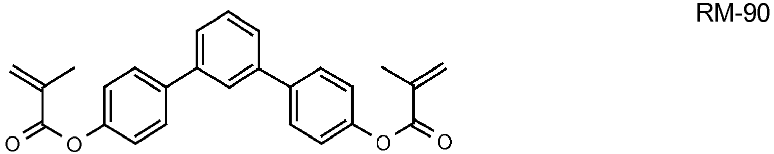 |
| 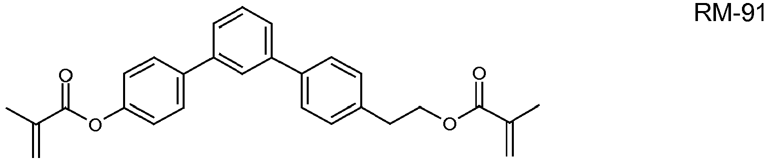 |
| 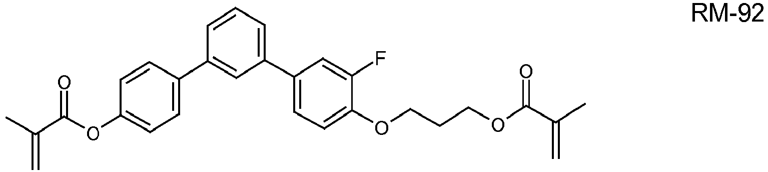 |
| 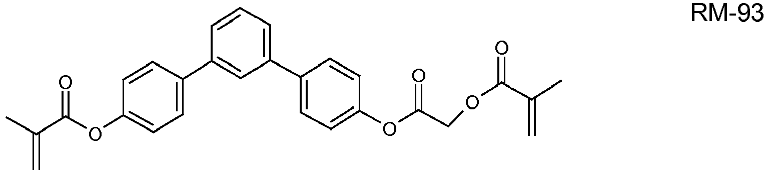 |

| |
|---|
| 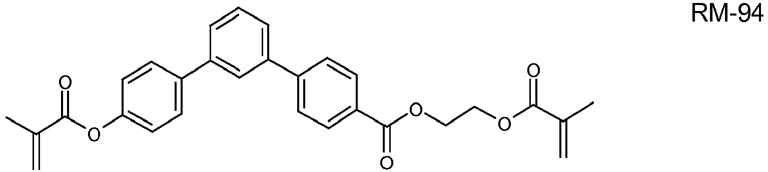 |
| 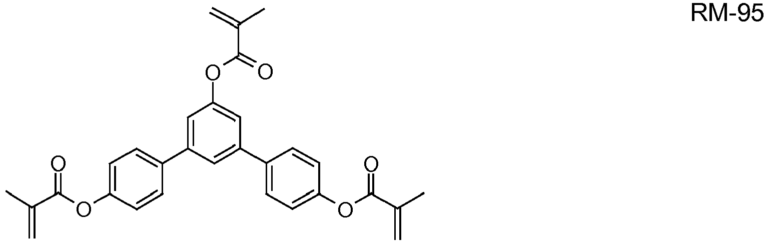 |
| 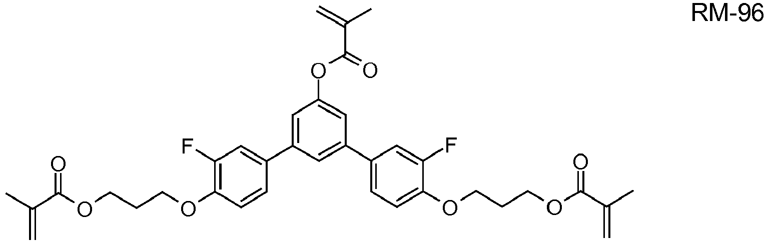 |
| 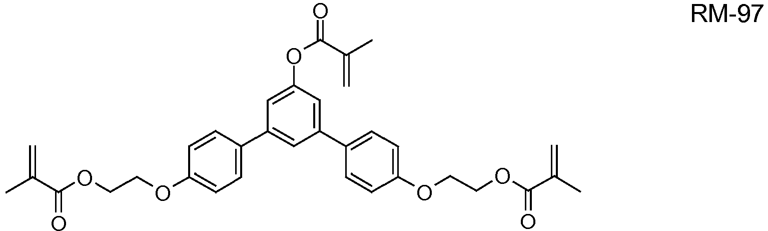 |
| 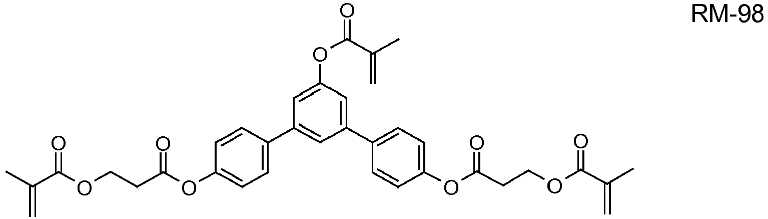 |

| |
|---|
| 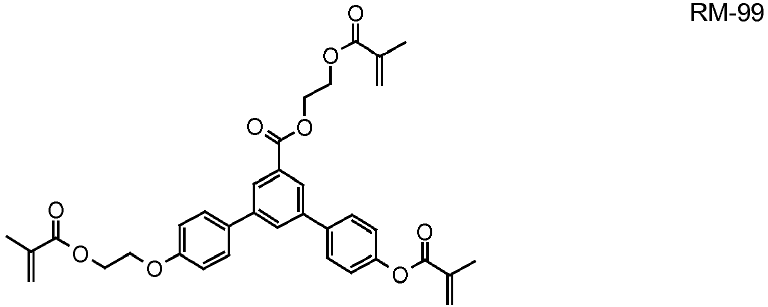 |
| 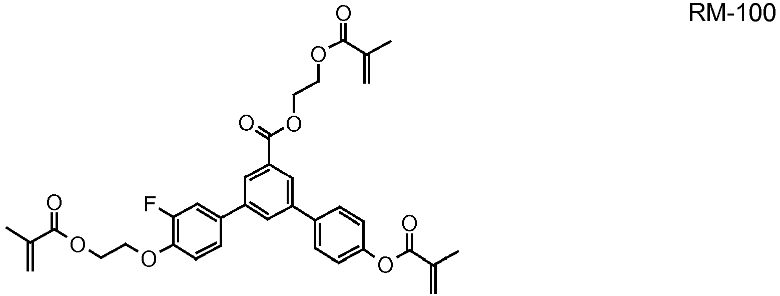 |
| 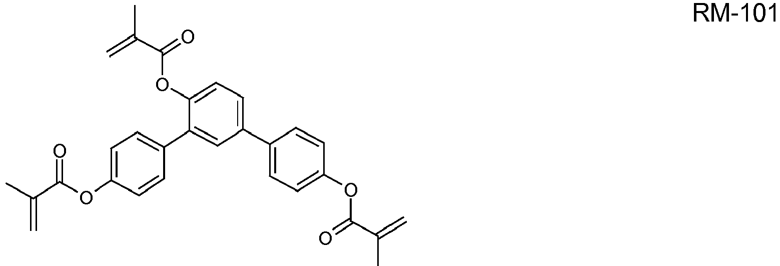 |
| 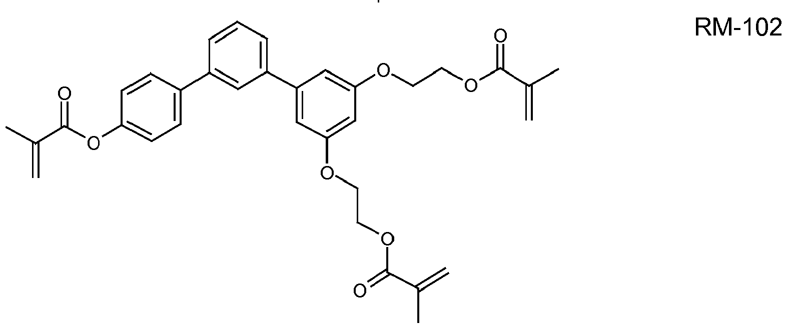 |

| |
|---|
| 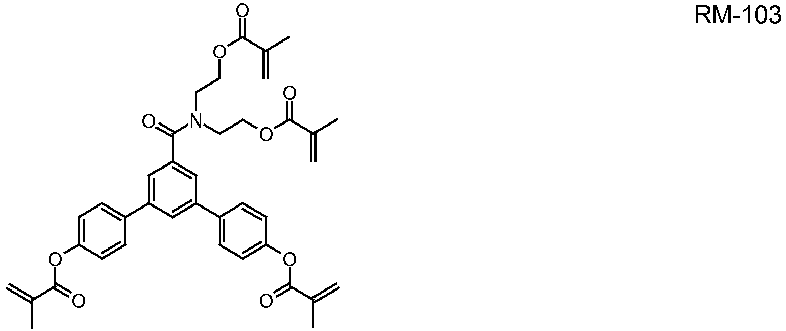 |
| 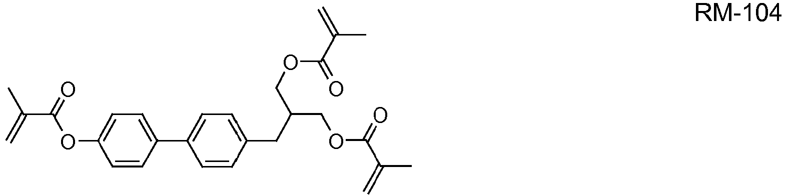 |
| 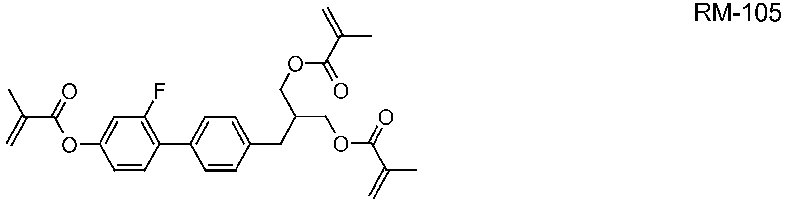 |
| 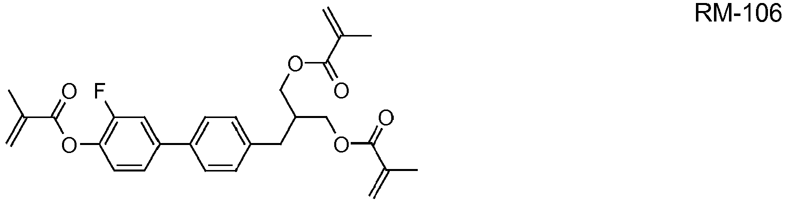 |
| 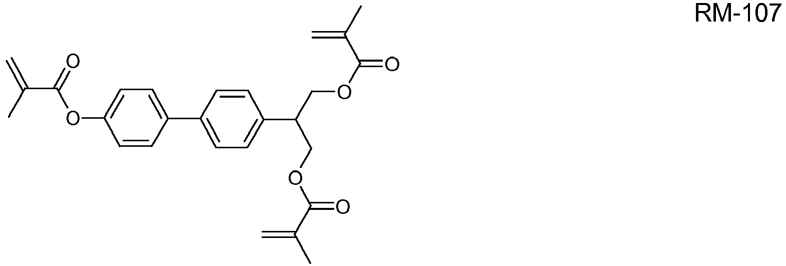 |

| |
|---|
| 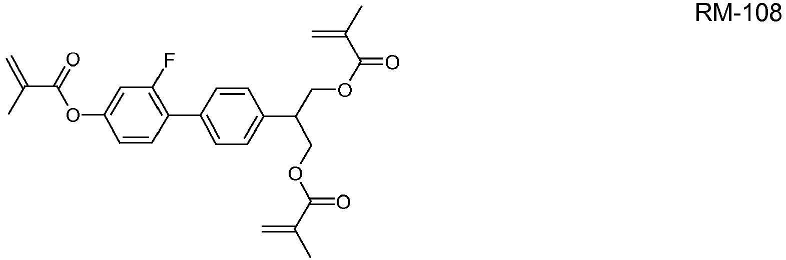 |
| 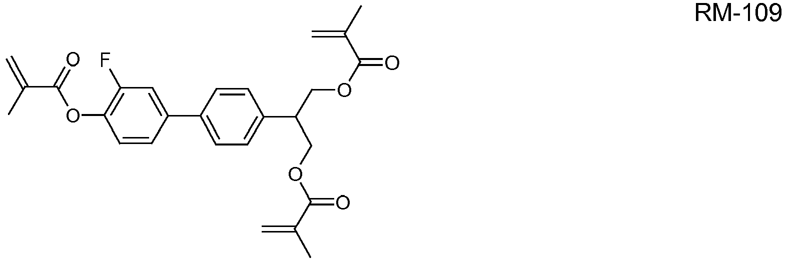 |
| 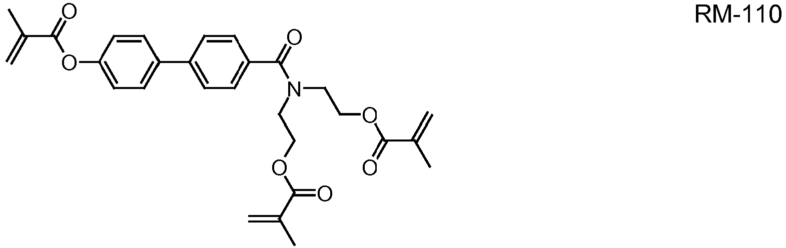 |
| 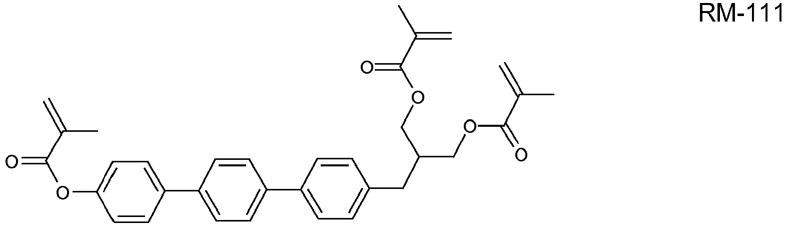 |
| 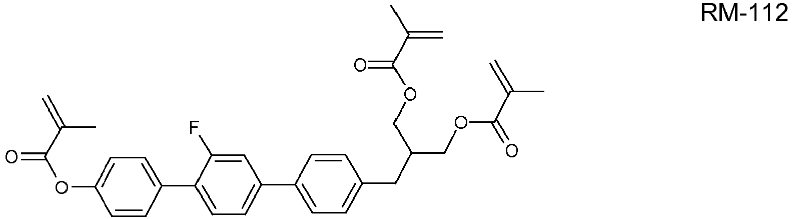 |

| |
|---|
| 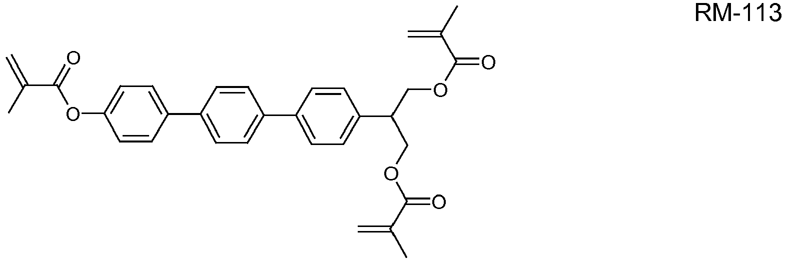 |
| 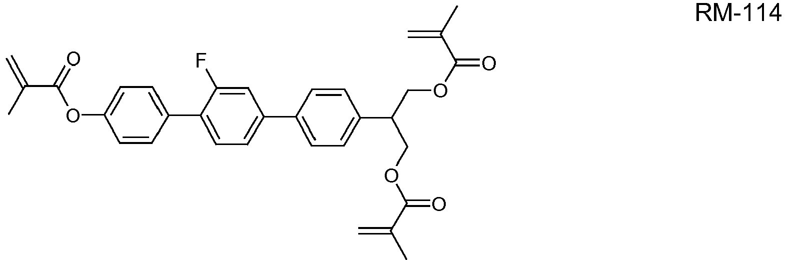 |
| 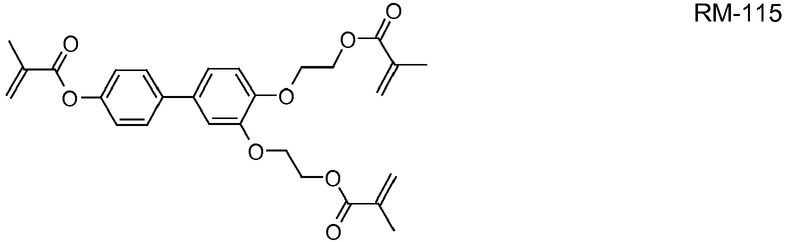 |
| 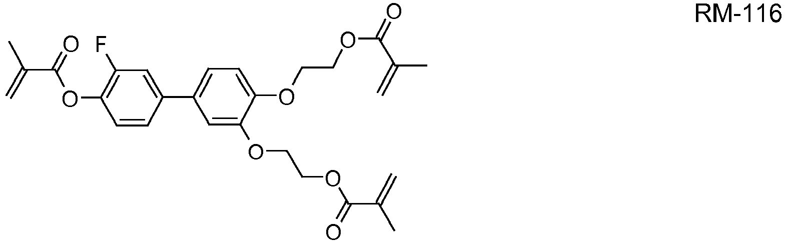 |
| 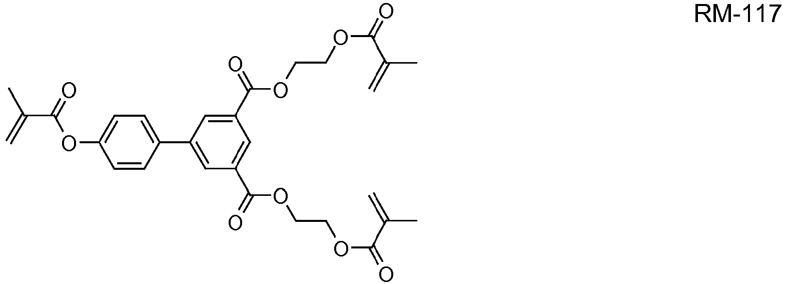 |

| |
|---|
| 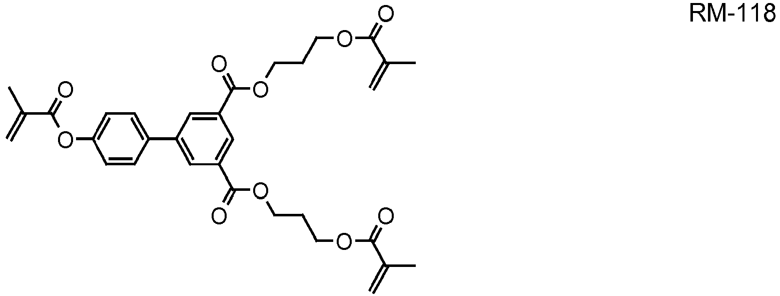 |
| 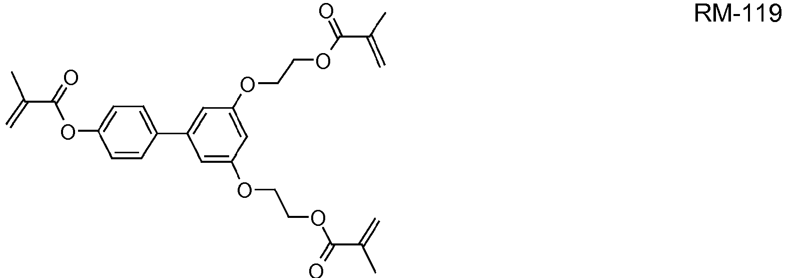 |
| 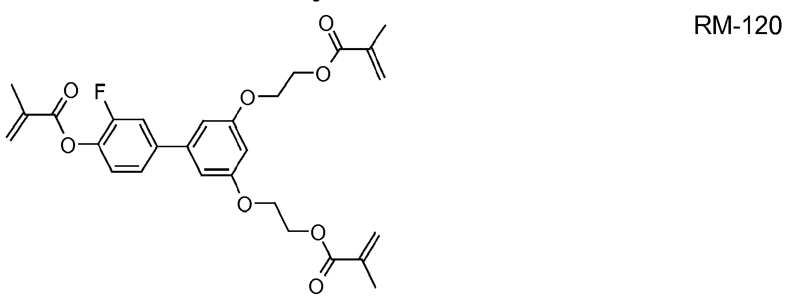 |
| 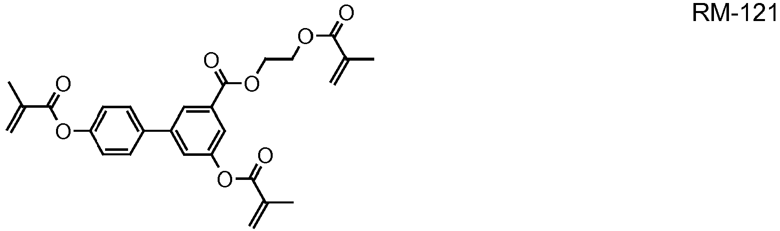 |

| |
|---|
| 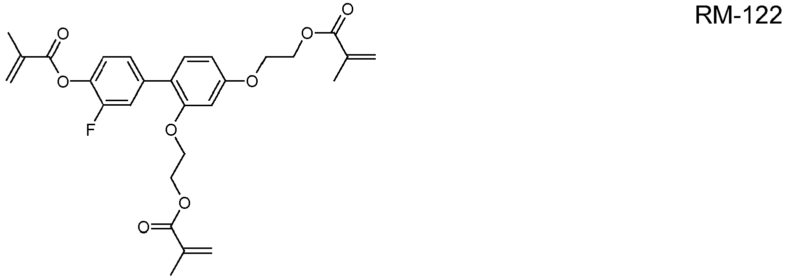 |
| 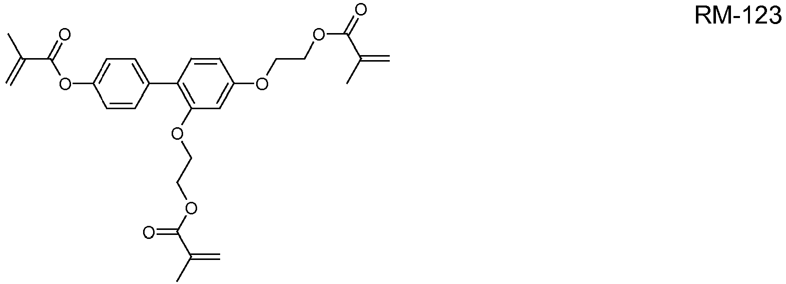 |
| 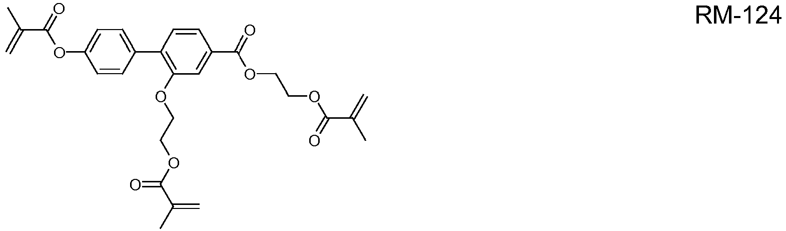 |
| 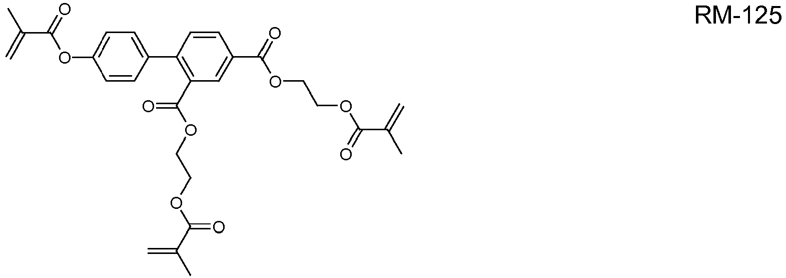 |
| 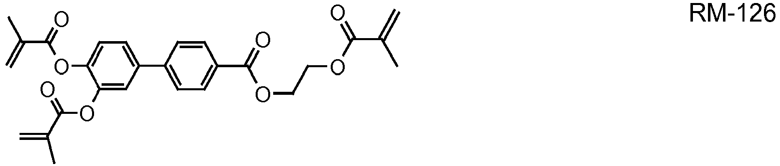 |

| |
|---|
| 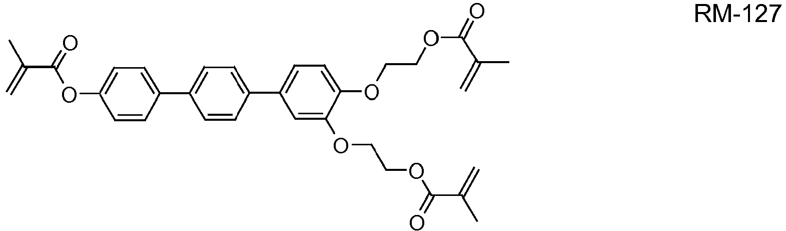 |
| 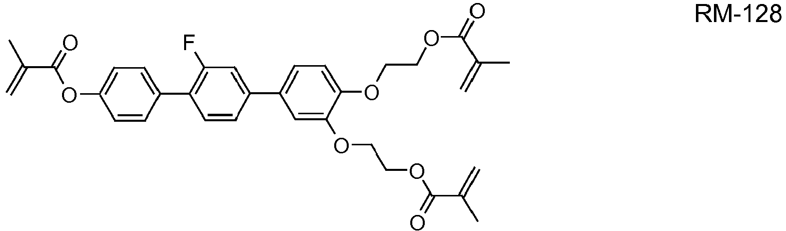 |
| 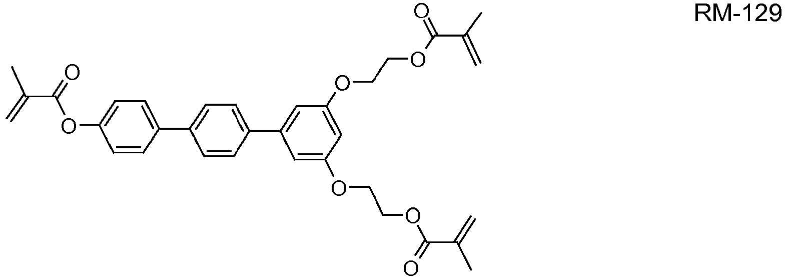 |
| 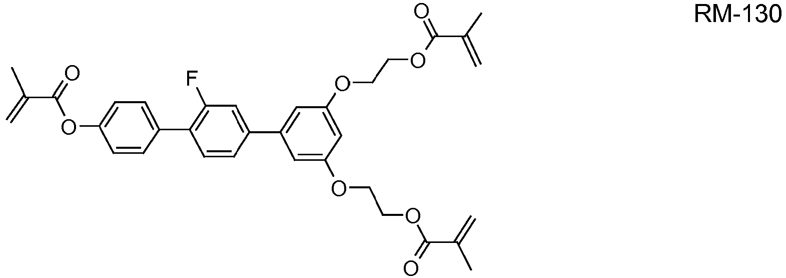 |
| 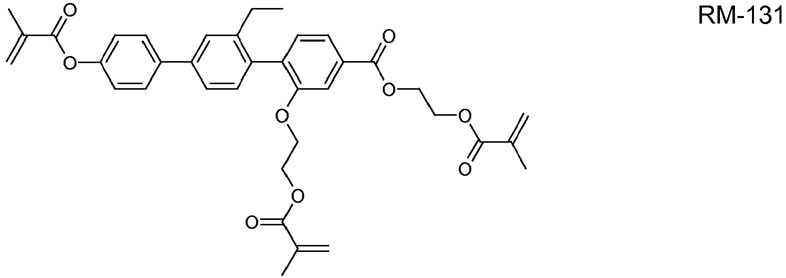 |

In einer bevorzugten Ausführungsform enthalten die erfindungsgemäßen Mischungen eine oder mehrere polymerisierbare Verbindungen, vorzugsweise ausgewählt aus den polymerisierbaren Verbindungen der Formeln RM-1 bis RM-131. Derartige Medien sind insbesondere für PS-VA, PS-FFS- und PS-IPS-Anwendungen geeignet. Von den in der Tabelle D genannten reaktiven Mesogenen sind die Verbindungen RM-1, RM-4, RM-8, RM-17, RM-19, RM-35, RM-37, RM-43, RM-47, RM-49, RM-51, RM-59, RM-69, RM-71, RM-83, RM-97, RM-98, RM-104, RM-112, RM-115 und RM-116 insbesondere bevorzugt.

Die reaktiven Mesogene bzw. die polymerisierbaren Verbindungen der Formel M und der Formeln RM-1 bis RM-131 sind weiterhin geeignet als Stabilisatoren. In diesem Fall werden die polymerisierbaren Verbindungen nicht polymerisiert, sondern dem flüssigkristallinen Medium in Konzentrationen > 1 % zugesetzt.

### Ausführungsbeispiele:

Die folgenden Beispiele sollen die Erfindung erläutern, ohne sie zu begrenzen. In den Beispielen bedeuten F. den Schmelzpunkt und K den Klärpunkt einer flüssigkristallinen Substanz in Grad Celsius; Siedetemperaturen sind mit Kp. bezeichnet. Es bedeuten ferner:
K: kristallin-fester Zustand, S: smektische Phase (der Index bezeichnet den Phasentyp), N: nematischer Zustand, Ch: cholesterische Phase, I: isotrope Phase, T_{g}: Glastemperatur. Die zwischen zwei Symbolen stehende Zahl gibt die Umwandlungstemperatur in Grad Celsius an.

Als Hostmischung zur Bestimmung der optischen Anisotropie Δn der Verbindungen der Formel I wird die Verkaufsmischung ZLI-4792 (Fa. Merck KGaA) verwendet. Für die Bestimmung der dielektrischen Anisotropie Δε wird die Verkaufsmischung ZLI-2857 verwendet. Aus der Änderung der Dielektrizitätskonstanten der Hostmischung nach Zugabe der zu untersuchenden Verbindung und Extrapolation auf 100 % der eingesetzten Verbindung werden die physikalischen Daten der zu untersuchenden Verbindung erhalten. Die zu untersuchende Verbindung wird in Abhängigkeit der Löslichkeit in der Regel zu 10 % in der Hostmischung gelöst.

Sofern nichts anderes angegeben ist, bedeuten Angaben von Teilen oder Prozent Gewichtsteile bzw. Gewichtsprozent.

Vor- und nachstehend bedeuten
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- T_{(N,I)}: Klärpunkt [°C]
- K₁: elastische Konstante, "Splay"-Deformation bei 20 °C, [pN]
- K₃: elastische Konstante, "Bend"-Deformation bei 20 °C, [pN]
- γ₁: Rotationsviskosität gemessen bei 20 °C [mPa·s], bestimmt nach dem Rotationsverfahren in einem magnetischen Feld
- LTS: Tieftemperaturstabilität [Low temperature stability (nematische Phase)], bestimmt in Bulkproben.

Die zur Messung der Schwellenspannung verwendete Anzeige weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homeotrope Orientierung der Flüssigkristalle bewirken.

Zur Bestimmung der Tieftemperaturstabilität [Low temperature stability (nematische Phase)], werden Proben (typischerweise 2g) in Glasflaschen bei der angegebenen Temperatur gelagert und täglich auf das Auftreten von Kristallisation oder smektischen Phasen per Augenschein Untersucht. Die in den Tabellen angegebene Zeit ist die Zeit, nach der erstmals eine Phasenumwandlung beobachtet wurde. Nach 1000 h wird der Test abgebrochen und LTS: 1000 notiert.

Alle Konzentrationen in dieser Anmeldung, soweit nicht explizit anders angegeben, beziehen sich auf die entsprechende Mischung oder Mischungskomponente. Alle physikalischen Eigenschaften werden nach "Merck Liquid Crystals, Physical Properties of Liquid Crystals", Status November 1997, Merck KGaA, Deutschland bestimmt und gelten für eine Temperatur von 20 °C, sofern nicht explizit anders angegeben.

### Vergleichsbeispiel M-1

| | | | |
|---|---|---|---|
| CCH-23 | 15,0 | Klärpunkt [°C]: | 74 |
| CCH-34 | 6,0 | Δn [589 nm, 20°C]: | 0,0952 |
| CCH-35 | 6,0 | nₑ [589 nm, 20°C]: | 1,5788 |
| CCP-3-1 | 18,0 | nₒ [589 nm, 20°C]: | 1,4836 |
| BCH-32 | 4,0 | ε_{∥} [1 kHz, 20°C]: | 3,5 |
| CCY-3-O1 | 7,0 | ε_{⊥} [1 kHz, 20°C]: | 6,1 |
| CCY-3-O2 | 11,0 | Δε [1 kHz, 20°C]: | -2,6 |
| CPY-3-O2 | 6,0 | K₁ [pN, 20°C]: | 15,1 |
| PCH-302 | 2,0 | K₃ [pN, 20°C]: | 15,2 |
| COY-3-O2 | 5,0 | K₃/K₁ [pN, 20°C]: | 1,01 |
| PY-3-O2 | 6,0 | V₀ [V, 20°C]: | 2,56 |
| Y-4O-O4 | 8,0 | γ₁ [mPa s, 20°C]: | 93 |
| PP-1-3 | 6,0 | LTS bulk [h, -20°C]: | 264 |
| ∑ | 100,0 | LTS bulk [h, -30°C]: | 72 |

### Vergleichsbeispiel P1

Zur Herstellung einer PS-VA-Mischung werden 99,7 % der Mischung gemäß Vergleichsbeispiel M-1 mit 0,3 % der polymerisierbaren Verbindung der Formel 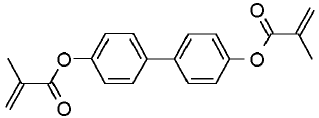 versetzt.

### Vergleichsbeispiel P2

Zur Herstellung einer PS-VA-Mischung werden 99,7 % der Mischung gemäß Vergleichsbeispiel M-1 mit 0,3 % der polymerisierbaren Verbindung der Formel 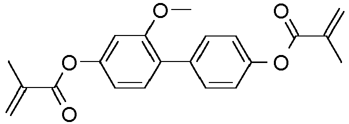 versetzt.

### Vergleichsbeispiel P3

Zur Herstellung einer PS-VA-Mischung werden 99,75 % der Mischung gemäß Vergleichsbeispiel M-1 mit 0,25 % der polymerisierbaren Verbindung der Formel 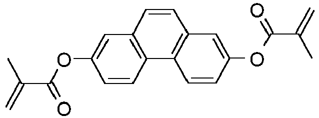 versetzt.

### Vergleichsbeispiel P4

Zur Herstellung einer PS-VA-Mischung werden 99,75 % der Mischung gemäß Vergleichsbeispiel M-1 mit 0,25 % der polymerisierbaren Verbindung der Formel 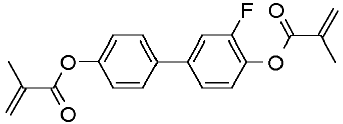 versetzt.

### Vergleichsbeispiel P5

Zur Herstellung einer PS-VA-Mischung werden 99,7 % der Mischung gemäß Vergleichsbeispiel M-1 mit 0,3 % der polymerisierbaren Verbindung der Formel 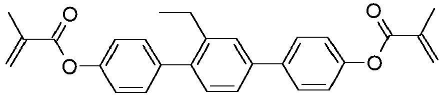 versetzt.

### Vergleichsbeispiel P6

Zur Herstellung einer PS-VA-Mischung werden 99,7 % der Mischung gemäß Vergleichsbeispiel M-1 mit 0,3 % der polymerisierbaren Verbindung der Formel 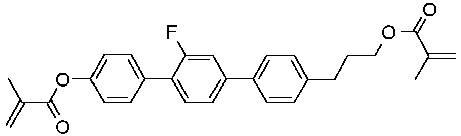 versetzt.

### Vergleichsbeispiel P7

Zur Herstellung einer PS-VA-Mischung werden 99,75 % der Mischung gemäß Vergleichsbeispiel M-1 mit 0,25 % der polymerisierbaren Verbindung der Formel 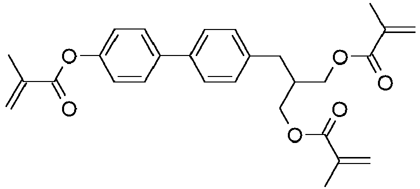 versetzt.

### Vergleichsbeispiel P8

Zur Herstellung einer PS-VA-Mischung werden 99,75 % der Mischung gemäß Vergleichsbeispiel M-1 mit 0,25 % der polymerisierbaren Verbindung der Formel 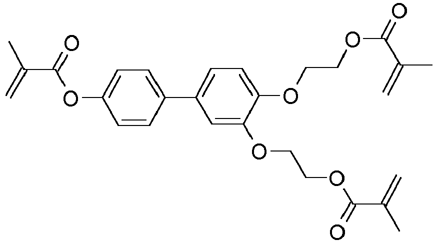 versetzt.

### Vergleichsbeispiel P9

Zur Herstellung einer PS-VA-Mischung werden 99,75 % der Mischung gemäß Vergleichsbeispiel M-1 mit 0,25 % der polymerisierbaren Verbindung der Formel 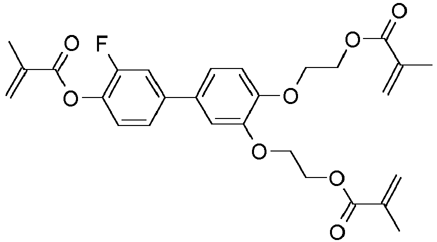 versetzt.

### Vergleichsbeispiel M-2

| | | | |
|---|---|---|---|
| CCH-23 | 15,0 | Klärpunkt [°C]: | 73 |
| CCH-34 | 6,0 | Δn [589 nm, 20°C]: | 0,0946 |
| CCH-35 | 6,0 | nₑ [589 nm, 20°C]: | 1,5791 |
| CCP-3-1 | 14,0 | nₒ [589 nm, 20°C]: | 1,4845 |
| CCP-3-3 | 5,5 | ε_{∥} [1 kHz, 20°C]: | 3,4 |
| BCH-32 | 1,5 | ε_{⊥} [1 kHz, 20°C]: | 5,9 |
| CCY-3-O1 | 7,0 | Δε [1 kHz, 20°C]: | -2,5 |
| CCY-3-O2 | 11,0 | K₁ [pN, 20°C]: | 14,9 |
| CCY-4-O2 | 1,5 | K₃ [pN, 20°C]: | 14,5 |
| CPY-3-O2 | 5,0 | K₃/K₁ [pN, 20°C]: | 0,97 |
| COY-3-O2 | 5,0 | V₀ [V, 20°C]: | 2,56 |
| PY-4-O2 | 3,0 | γ₁ [mPa s, 20°C]: | 92 |
| PY-1-O4 | 3,5 | LTS bulk [h, -20°C]: | 1000 |
| Y-4O-O4 | 7,0 | LTS bulk [h, -30°C]: | 1000 |
| PP-1-3 | 9,0 | | |
| ∑ | 100,0 | | |

### Vergleichsbeispiel P10

Zur Herstellung einer PS-VA-Mischung werden 99,7 % der Mischung gemäß Vergleichsbeispiel M-2 mit 0,3 % der polymerisierbaren Verbindung der Formel 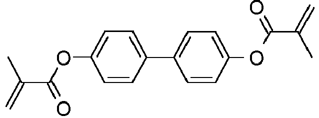 versetzt.

### Vergleichsbeispiel P11

Zur Herstellung einer PS-VA-Mischung werden 99,7 % der Mischung gemäß Vergleichsbeispiel M-2 mit 0,3 % der polymerisierbaren Verbindung der Formel 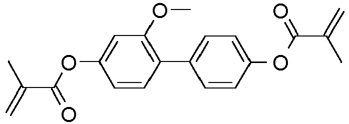 versetzt.

### Vergleichsbeispiel P12

Zur Herstellung einer PS-VA-Mischung werden 99,75 % der Mischung gemäß Vergleichsbeispiel M-2 mit 0,25 % der polymerisierbaren Verbindung der Formel 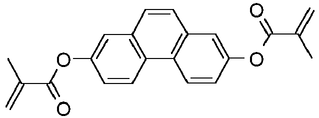 versetzt.

### Vergleichsbeispiel P13

Zur Herstellung einer PS-VA-Mischung werden 99,75 % der Mischung gemäß Vergleichsbeispiel M-2 mit 0,25 % der polymerisierbaren Verbindung der Formel 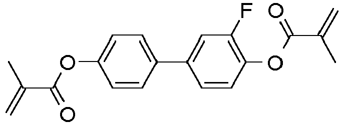 versetzt.

### Vergleichsbeispiel P14

Zur Herstellung einer PS-VA-Mischung werden 99,7 % der Mischung gemäß Vergleichsbeispiel M-2 mit 0,3 % der polymerisierbaren Verbindung der Formel 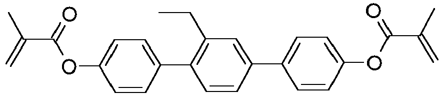 versetzt.

### Vergleichsbeispiel P15

Zur Herstellung einer PS-VA-Mischung werden 99,7 % der Mischung gemäß Vergleichsbeispiel M-2 mit 0,3 % der polymerisierbaren Verbindung der Formel 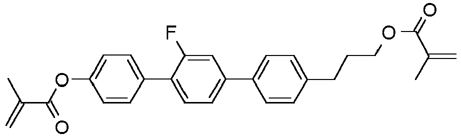 versetzt.

### Vergleichsbeispiel P16

Zur Herstellung einer PS-VA-Mischung werden 99,75 % der Mischung gemäß Vergleichsbeispiel M-2 mit 0,25 % der polymerisierbaren Verbindung der Formel 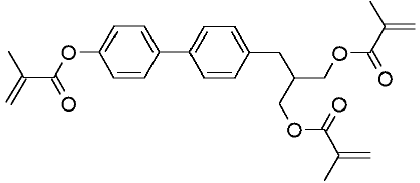 versetzt.

### Vergleichsbeispiel P17

Zur Herstellung einer PS-VA-Mischung werden 99,75 % der Mischung gemäß Vergleichsbeispiel M-2 mit 0,25 % der polymerisierbaren Verbindung der Formel 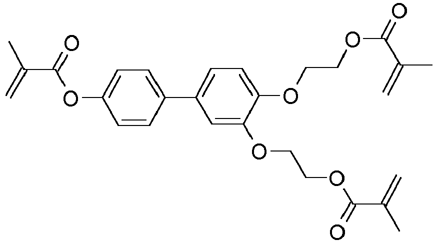 versetzt.

### Vergleichsbeispiel P18

Zur Herstellung einer PS-VA-Mischung werden 99,75 % der Mischung gemäß Vergleichsbeispiel M-2 mit 0,25 % der polymerisierbaren Verbindung der Formel 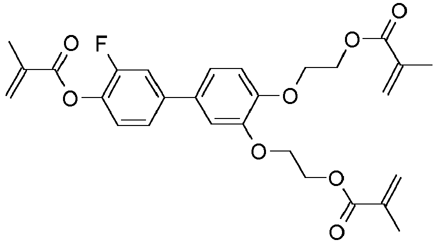 versetzt.

### Vergleichsbeispiel M-3

| | | | |
|---|---|---|---|
| Y-4O-O4 | 5,5 | Klärpunkt [°C]: | 74 |
| PY-1-O4 | 5,5 | Δn [589 nm, 20°C]: | 0,1068 |
| CCOY-2-O2 | 4,5 | nₑ [589 nm, 20°C]: | 1,5966 |
| COY-3-O2 | 3,0 | nₒ [589 nm, 20°C]: | 1,4898 |
| CPY-2-O2 | 7,0 | ε_{∥} [1 kHz, 20°C]: | 3,3 |
| CPY-3-O2 | 10,0 | ε_{⊥} [1 kHz, 20°C]: | 5,3 |
| CCH-23 | 17,0 | Δ_{ε} [1 kHz, 20°C]: | -2,0 |
| CCH-34 | 5,0 | K₁ [pN, 20°C]: | 14,8 |
| CCH-35 | 4,0 | K₃ [pN, 20°C]: | 13,8 |
| PCH-302 | 3,5 | K₃/K₁ [pN, 20°C]: | 0,93 |
| BCH-32 | 8,5 | V₀ [V, 20°C]: | 2,78 |
| CCP-3-1 | 14,0 | γ₁ [mPa s, 20°C]: | 88 |
| CCP-3-3 | 4,0 | LTS bulk [h, -20°C]: | 1000 |
| PP-1-3 | 4,5 | LTS bulk [h, -30°C]: | 1000 |
| PP-1-4 | 4,0 | | |
| ∑ | 100,0 | | |

### Vergleichsbeispiel P19

Zur Herstellung einer PS-VA-Mischung werden 99,7 % der Mischung gemäß Vergleichsbeispiel M-3 mit 0,3 % der polymerisierbaren Verbindung der Formel 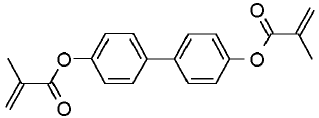 versetzt.

### Vergleichsbeispiel P20

Zur Herstellung einer PS-VA-Mischung werden 99,7 % der Mischung gemäß Vergleichsbeispiel M-3 mit 0,3 % der polymerisierbaren Verbindung der Formel 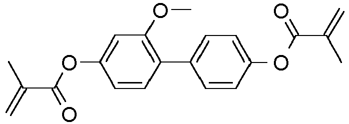 versetzt.

### Vergleichsbeispiel P21

Zur Herstellung einer PS-VA-Mischung werden 99,75 % der Mischung gemäß Vergleichsbeispiel M-3 mit 0,25 % der polymerisierbaren Verbindung der Formel 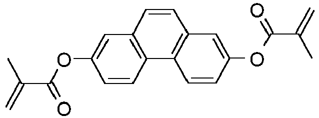 versetzt.

### Vergleichsbeispiel P22

Zur Herstellung einer PS-VA-Mischung werden 99,75 % der Mischung gemäß Vergleichsbeispiel M-3 mit 0,25 % der polymerisierbaren Verbindung der Formel 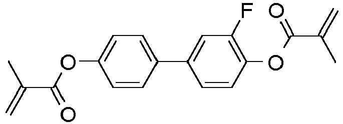 versetzt.

### Vergleichsbeispiel P23

Zur Herstellung einer PS-VA-Mischung werden 99,7 % der Mischung gemäß Vergleichsbeispiel M-3 mit 0,3 % der polymerisierbaren Verbindung der Formel 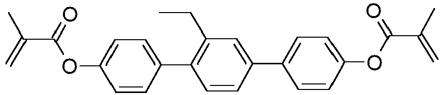 versetzt.

### Vergleichsbeispiel P24

Zur Herstellung einer PS-VA-Mischung werden 99,7 % der Mischung gemäß Vergleichsbeispiel M-3 mit 0,3 % der polymerisierbaren Verbindung der Formel 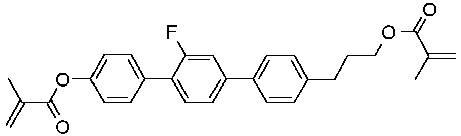 versetzt.

### Vergleichsbeispiel P25

Zur Herstellung einer PS-VA-Mischung werden 99,75 % der Mischung gemäß Vergleichsbeispiel M-3 mit 0,25 % der polymerisierbaren Verbindung der Formel 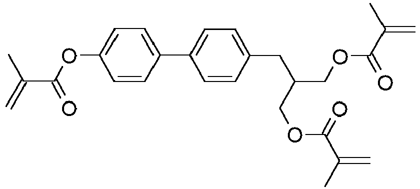 versetzt.

### Vergleichsbeispiel P26

Zur Herstellung einer PS-VA-Mischung werden 99,75 % der Mischung gemäß Vergleichsbeispiel M-3 mit 0,25 % der polymerisierbaren Verbindung der Formel 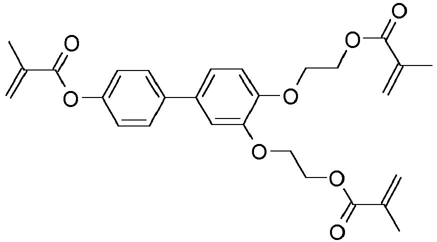 versetzt.

### Vergleichsbeispiel P27

Zur Herstellung einer PS-VA-Mischung werden 99,75 % der Mischung gemäß Vergleichsbeispiel M-3 mit 0,25 % der polymerisierbaren Verbindung der Formel 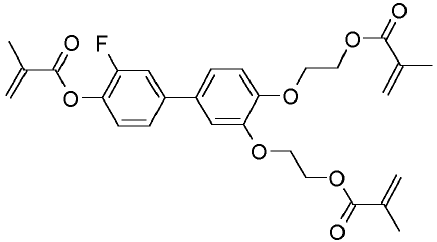 versetzt.

### Vergleichsbeispiel M-4

| | | | |
|---|---|---|---|
| CY-3-O2 | 7,0 | Klärpunkt [°C]: | 84 |
| CEY-3-O2 | 16,0 | Δn [589 nm, 20°C]: | 0,1030 |
| CCY-3-O1 | 10,0 | nₑ [589 nm, 20°C]: | 1,5813 |
| CCY-3-O2 | 11,0 | nₒ [589 nm, 20°C]: | 1,4783 |
| CPY-3-O2 | 12,0 | s_{∥} [1 kHz, 20°C]: | 4,0 |
| CC-3-V | 22,0 | ε_{⊥} [1 kHz, 20°C]: | 9,3 |
| CCEY-3-O2 | 13,5 | Δε [1 kHz, 20°C]: | -5,3 |
| Y-4O-O4 | 3,0 | K₁ [pN, 20°C]: | 15,2 |
| PGIY-2-O4 | 5,5 | K₃ [pN, 20°C]: | 19,0 |
| ∑ | 100,0 | K₃/K₁ [pN, 20°C]: | 1,25 |
| | | V₀ [V, 20°C]: | 2,00 |
| | | γ₁ [mPa s, 20°C]: | 166 |
| | | LTS bulk [h, -20°C]: | 1000 |
| | | LTS bulk [h, -30°C]: | 72 |

### Vergleichsbeispiel M-5

| | | | |
|---|---|---|---|
| CCH-23 | 15,0 | Klärpunkt [°C]: | 74 |
| CCH-34 | 6,0 | Δn [589 nm, 20°C]: | 0,0961 |
| CCH-35 | 6,0 | nₑ [589 nm, 20°C]: | 1,5799 |
| CCP-3-1 | 13,0 | nₒ [589 nm, 20°C]: | 1,4838 |
| CCP-3-3 | 4,5 | ε_{∥} [1 kHz, 20°C]: | 3,4 |
| BCH-32 | 4,5 | ε_{⊥} [1 kHz, 20°C]: | 6,0 |
| CCOY-3-O2 | 6,0 | Δ_{ε} [1 kHz, 20°C]: | -2,6 |
| CCY-3-O2 | 10,0 | K₁ [pN, 20°C]: | 15,0 |
| CPY-3-O2 | 8,0 | K₃ [pN, 20°C]: | 15,2 |
| PCH-302 | 3,0 | K₃/K₁ [pN, 20°C]: | 1,01 |
| COY-3-O2 | 5,0 | V₀ [V, 20°C]: | 2,58 |
| PY-3-O2 | 4,0 | γ₁ [mPa s, 20°C]: | 94 |
| Y-4O-O4 | 8,0 | LTS bulk [h, -30°C]: | 1000 |
| PP-1-3 | 7,0 | | |
| ∑ | 100,0 | | |

### Beispiel M-6

| | | | |
|---|---|---|---|
| CCH-23 | 15,0 | Klärpunkt [°C]: | 73 |
| CCH-34 | 6,0 | Δn [589 nm, 20°C]: | 0,0953 |
| CCH-35 | 6,0 | Δε [1 kHz, 20°C]: | -2,5 |
| CCP-3-1 | 18,0 | K₁ [pN, 20°C]: | 14,4 |
| BCH-32 | 4,0 | K₃ [pN, 20°C]: | 15,1 |
| CCY-3-O1 | 7,0 | V₀ [V, 20°C]: | 2,53 |
| CCY-3-O2 | 11,0 | γ₁ [mPa s, 20°C]: | 85 |
| CPY-3-O2 | 6,0 | | |
| PCH-302 | 2,0 | | |
| COY-3-O2 | 5,0 | | |
| PY-3-O2 | 6,0 | | |
| Y-2O-O1V | 8,0 | | |
| PP-1-3 | 6,0 | | |
| ∑ | 100,0 | | |

### Beispiel P28

Zur Herstellung einer PS-VA-Mischung werden 99,7 % der Mischung gemäß Beispiel M-6 mit 0,3 % der polymerisierbaren Verbindung der Formel 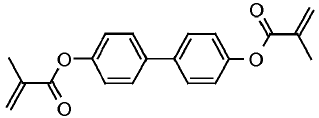 versetzt.

### Beispiel P29

Zur Herstellung einer PS-VA-Mischung werden 99,7 % der Mischung gemäß Beispiel M-6 mit 0,3 % der polymerisierbaren Verbindung der Formel 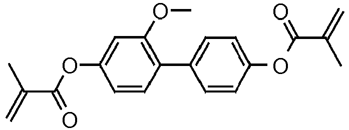 versetzt.

### Beispiel P30

Zur Herstellung einer PS-VA-Mischung werden 99,75 % der Mischung gemäß Beispiel M-6 mit 0,25 % der polymerisierbaren Verbindung der Formel 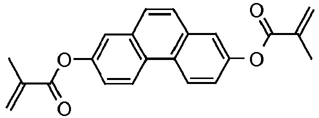 versetzt.

### Beispiel P31

Zur Herstellung einer PS-VA-Mischung werden 99,75 % der Mischung gemäß Beispiel M-6 mit 0,25 % der polymerisierbaren Verbindung der Formel 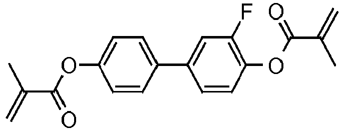 versetzt.

### Beispiel P32

Zur Herstellung einer PS-VA-Mischung werden 99,7 % der Mischung gemäß Beispiel M-6 mit 0,3 % der polymerisierbaren Verbindung der Formel 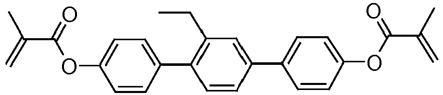 versetzt.

### Beispiel P33

Zur Herstellung einer PS-VA-Mischung werden 99,7 % der Mischung gemäß Beispiel M-6 mit 0,3 % der polymerisierbaren Verbindung der Formel 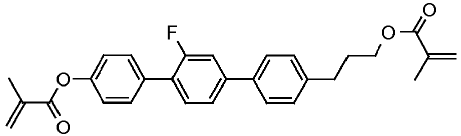 versetzt.

### Beispiel P34

Zur Herstellung einer PS-VA-Mischung werden 99,75 % der Mischung gemäß Beispiel M-6 mit 0,25 % der polymerisierbaren Verbindung der Formel 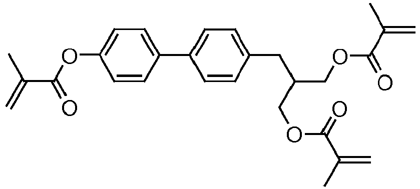 versetzt.

### Beispiel P35

Zur Herstellung einer PS-VA-Mischung werden 99,75 % der Mischung gemäß Beispiel M-6 mit 0,25 % der polymerisierbaren Verbindung der Formel 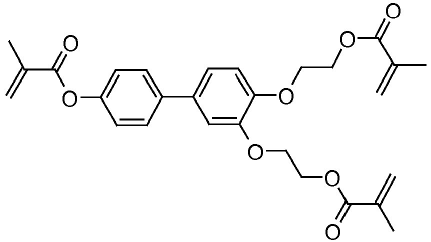 versetzt.

### Beispiel P36

Zur Herstellung einer PS-VA-Mischung werden 99,75 % der Mischung gemäß Beispiel M-6 mit 0,25 % der polymerisierbaren Verbindung der Formel 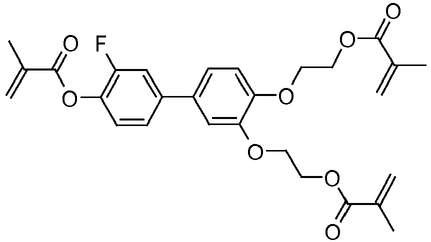 versetzt.

### Beispiel M-7

| | | | |
|---|---|---|---|
| Y-2O-O1V | 5,5 | Klärpunkt [°C]: | 73,5 |
| PY-1-O4 | 5,5 | Δn [589 nm, 20°C]: | 0,1068 |
| CCOY-2-O2 | 4,5 | Δε [1 kHz, 20°C]: | -1,9 |
| COY-3-O2 | 3,0 | K₁ [pN, 20°C]: | 14,3 |
| CPY-2-O2 | 7,0 | K₃ [pN, 20°C]: | 13,8 |
| CPY-3-O2 | 10,0 | V₀ [V, 20°C]: | 2,76 |
| CCH-23 | 17,0 | γ₁ [mPa s, 20°C]: | 83 |
| CCH-34 | 5,0 | | |
| CCH-35 | 4,0 | | |
| PCH-302 | 3,5 | | |
| BCH-32 | 8,5 | | |
| CCP-3-1 | 14,0 | | |
| CCP-3-3 | 4,0 | | |
| PP-1-3 | 4,5 | | |
| PP-1-4 | 4,0 | | |
| ∑ | 100,0 | | |

### Beispiel M-8

| | | | |
|---|---|---|---|
| CY-3-O2 | 0,0 | Klärpunkt [°C]: | 83,5 |
| CEY-3-O2 | 0,0 | Δn [589 nm, 20°C]: | 0,1030 |
| CCY-3-O1 | 0,0 | Δε [1 kHz, 20°C]: | -5,3 |
| CCY-3-O2 | 0,0 | K₁ [pN, 20°C]: | 15,0 |
| CPY-3-O2 | 0,0 | K₃ [pN, 20°C]: | 19,0 |
| CC-3-V | 0,0 | V₀ [V, 20°C]: | 1,99 |
| CCEY-3-O2 | 0,0 | γ₁ [mPa s, 20°C]: | 163 |
| Y-2O-O1V | 0,0 | | |
| PGIY-2-O4 | 0,0 | | |
| ∑ | 100,0 | | |

### Beispiel M-9

| | | | |
|---|---|---|---|
| CCH-23 | 15,0 | Klärpunkt [°C]: | 73 |
| CCH-34 | 6,0 | Δn [589 nm, 20°C]: | 0,0962 |
| CCH-35 | 6,0 | Δε [1 kHz, 20°C]: | -2,5 |
| CCP-3-1 | 13,0 | K₁ [pN, 20°C]: | 14,3 |
| CCP-3-3 | 4,5 | K₃ [pN, 20°C]: | 15,1 |
| BCH-32 | 4,5 | V₀ [V, 20°C]: | 2,55 |
| CCOY-3-O2 | 6,0 | γ₁ [mPa s, 20°C]: | 86 |
| CCY-3-O2 | 10,0 | | |
| CPY-3-O2 | 8,0 | | |
| PCH-302 | 3,0 | | |
| COY-3-O2 | 5,0 | | |
| PY-3-O2 | 4,0 | | |
| Y-2O-O1V | 8,0 | | |
| PP-1-3 | 7,0 | | |
| ∑ | 100,0 | | |

### Vergleichsbeispiel M-10

| | | | |
|---|---|---|---|
| CCEY-3-O2 | 5,0 | Klärpunkt [°C]: | 75,5 |
| CLY-3-O3 | 4,5 | Δn [589 nm, 20°C]: | 0,0962 |
| CLY-4-O2 | 5,0 | ε_{∥} [1 kHz, 20°C]: | 3,4 |
| CPY-3-O2 | 6,0 | ε_{⊥} [1 kHz, 20°C]: | 6,1 |
| PGIY-2-O4 | 6,0 | Δε [1 kHz, 20°C]: | -2,7 |
| PYP-2-3 | 0,5 | K₁ [pN, 20°C]: | 14,6 |
| B(S)-2O-O4 | 4,0 | K₃ [pN, 20°C]: | 14,6 |
| B(S)-2O-O5 | 5,0 | V₀ [V, 20°C]: | 2,45 |
| B(S)-2O-O6 | 3,0 | γ₁ [mPa s, 20°C]: | 68 |
| B-2O-O5 | 1,0 | LTS bulk [h, -20°C]: | 168 |
| CC-3-V | 50,0 | | |
| CC-3-V1 | 6,0 | | |
| CCH-23 | 2,5 | | |
| Y-4O-O4 | 1,5 | | |
| ∑ | 100,0 | | |

### Vergleichsbeispiel P37

Zur Herstellung einer PS-VA-Mischung werden 99,7 % der Mischung gemäß Vergleichsbeispiel M-10 mit 0,3 % der polymerisierbaren Verbindung der Formel 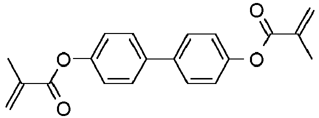 versetzt.

### Vergleichsbeispiel P38

Zur Herstellung einer PS-VA-Mischung werden 99,7 % der Mischung gemäß Vergleichsbeispiel M-10 mit 0,3 % der polymerisierbaren Verbindung der Formel 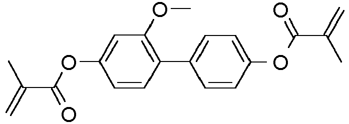 versetzt.

### Vergleichsbeispiel P39

Zur Herstellung einer PS-VA-Mischung werden 99,75 % der Mischung gemäß Vergleichsbeispiel M-10 mit 0,25 % der polymerisierbaren Verbindung der Formel 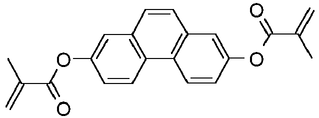 versetzt.

### Vergleichsbeispiel P40

Zur Herstellung einer PS-VA-Mischung werden 99,75 % der Mischung gemäß Vergleichsbeispiel M-10 mit 0,25 % der polymerisierbaren Verbindung der Formel 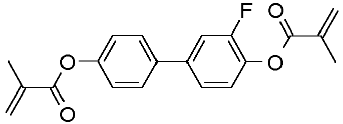 versetzt.

### Vergleichsbeispiel P41

Zur Herstellung einer PS-VA-Mischung werden 99,7 % der Mischung gemäß Vergleichsbeispiel M-10 mit 0,3 % der polymerisierbaren Verbindung der Formel 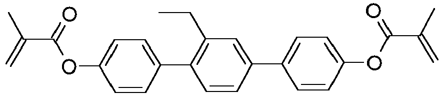 versetzt.

### Vergleichsbeispiel P42

Zur Herstellung einer PS-VA-Mischung werden 99,7 % der Mischung gemäß Vergleichsbeispiel M-10 mit 0,3 % der polymerisierbaren Verbindung der Formel 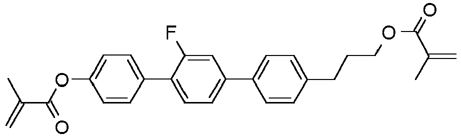 versetzt.

### Vergleichsbeispiel P43

Zur Herstellung einer PS-VA-Mischung werden 99,75 % der Mischung gemäß Vergleichsbeispiel M-10 mit 0,25 % der polymerisierbaren Verbindung der Formel 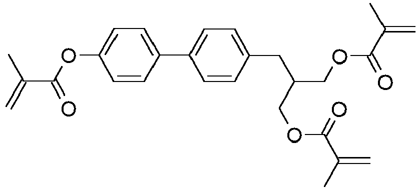 versetzt.

### Vergleichsbeispiel P44

Zur Herstellung einer PS-VA-Mischung werden 99,75 % der Mischung gemäß Vergleichsbeispiel M-10 mit 0,25 % der polymerisierbaren Verbindung der Formel 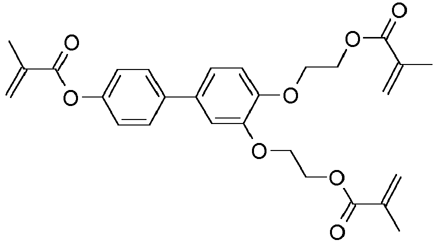 versetzt.

### Vergleichsbeispiel P45

Zur Herstellung einer PS-VA-Mischung werden 99,75 % der Mischung gemäß Vergleichsbeispiel M-10 mit 0,25 % der polymerisierbaren Verbindung der Formel 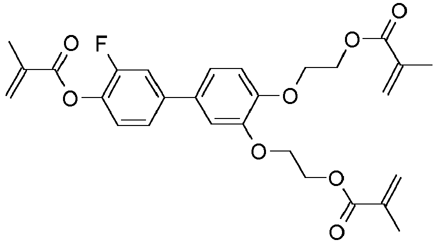 versetzt.

### Vergleichsbeispiel M11

| | | | |
|---|---|---|---|
| CLY-2-O4 | 5,0 | Klärpunkt [°C]: | 93 |
| CLY-3-O2 | 7,0 | Δn [589 nm, 20°C]: | 0,1015 |
| CLY-3-O3 | 5,0 | ε_{∥} [1 kHz, 20°C]: | 3,5 |
| CLY-4-O2 | 5,0 | ε_{⊥} [1 kHz, 20°C]: | 7,5 |
| CLY-5-O2 | 8,0 | Δε [1 kHz, 20°C]: | -4,0 |
| CCEY-3-O2 | 7,5 | K₁ [pN, 20°C]: | 18,3 |
| PGIY-2-O4 | 3,0 | K₃ [pN, 20°C]: | 17,9 |
| B(S)-2O-O4 | 4,0 | V₀ [V, 20°C]: | 2,45 |
| B(S)-2O-O5 | 5,0 | γ₁ [mPa s, 20°C]: | 112 |
| B(S)-2O-O6 | 3,0 | LTS bulk [h, -20°C]: | 552 |
| CC-3-V | 38,0 | | |
| CC-3-V1 | 7,0 | | |
| Y-4O-O4 | 2,5 | | |
| ∑ | 100,0 | | |

### Vergleichsbeispiel M12

| | | | |
|---|---|---|---|
| CCP-3-1 | 7,0 | Klärpunkt [°C]: | 92,5 |
| CCP-V-1 | 11,0 | Δn [589 nm, 20°C]: | 0,1007 |
| CCP-V2-1 | 6,0 | ε_{∥} [1 kHz, 20°C]: | 3,6 |
| CCOY-3-O2 | 6,0 | ε_{⊥} [1 kHz, 20°C]: | 7,4 |
| CLY-3-O2 | 4,0 | Δε [1 kHz, 20°C]: | -3,8 |
| CLY-4-O2 | 5,0 | K₁ [pN, 20°C]: | 18,4 |
| CLY-5-O2 | 4,0 | K₃ [pN, 20°C]: | 17,1 |
| PGIY-2-O4 | 3,0 | V₀ [V, 20°C]: | 2,27 |
| B(S)-2O-O4 | 4,0 | γ₁ [mPa s, 20°C]: | 124 |
| B(S)-2O-O5 | 4,0 | | |
| B(S)-2O-O6 | 4,0 | | |
| CC-3-V1 | 6,2 | | |
| CCH-23 | 18,0 | | |
| CCH-34 | 5,0 | | |
| CY-3-O2 | 9,0 | | |
| Y-4O-O4 | 3,5 | | |
| CCQU-3-F | 0,3 | | |
| ∑ | 100,0 | | |

## Patentansprüche

1. Flüssigkristallines Medium, **dadurch gekennzeichnet, daß** es eine oder mehrere Verbindungen der Formel EY 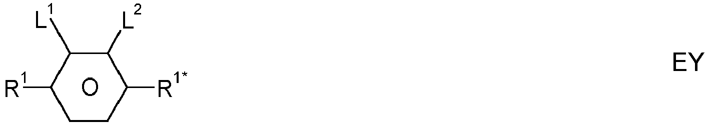 und
eine oder mehrere Verbindungen ausgewählt aus der Gruppe der Verbindungen der Formeln IA und IB 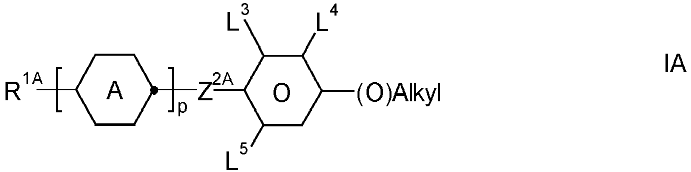 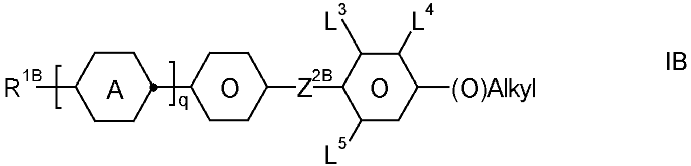 und/oder eine oder mehrere Verbindungen ausgewählt aus der Gruppe der Verbindungen der Formeln BF-1, BF-2, BS-1 und BS-2: 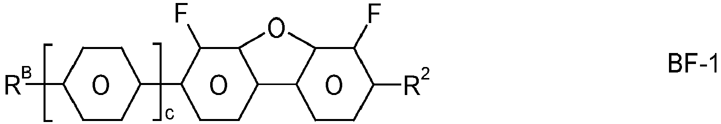 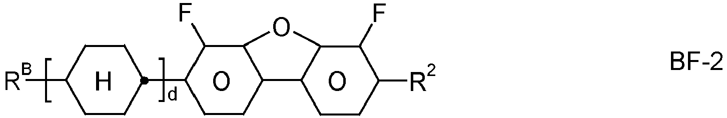 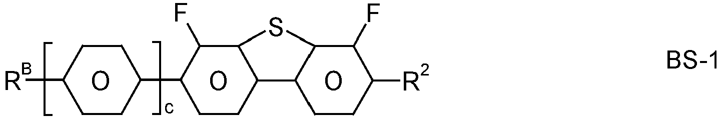 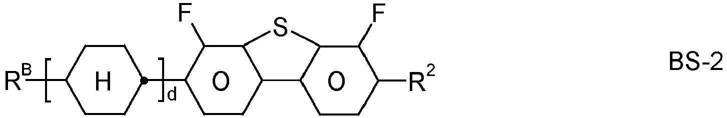 worin die einzelnen Reste jeweils unabhängig voneinander, und bei jedem Auftreten gleich oder verschieden, eine der folgenden Bedeutungen besitzen:
R¹ einen Alkenyloxyrest mit 2 bis 7 C-Atomen,
R^{1*} einen Alkyloxyrest mit 1 bis 6 C-Atomen oder einen Alkenyloxyrest mit 2 bis 7 C-Atomen,
R^{1A} , R^{1B}, und R^{B} H, einen unsubstituierten, einen einfach durch CN oder CF₃ oder einen mindestens einfach durch Halogen substituierten Alkyl- oder Alkenylrest mit bis zu 15 C-Atomen, wobei in diesen Resten auch eine oder mehrere CH₂-Gruppen durch -O-, -S-, 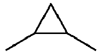 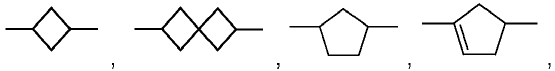 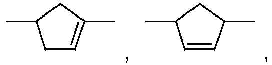 -C≡C-, -CF₂O-, -OCF₂-, -OC-O- oder -O-CO- so ersetzt sein können, daß O-Atome nicht direkt miteinander verknüpft sind, 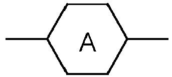 bei jedem Auftreten, gleich oder verschieden, 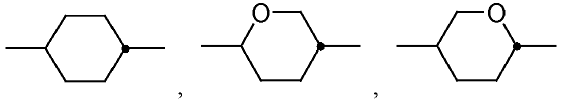 oder 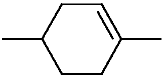
L¹, L² unabhängig voneinander F oder Cl,
L³, L⁴ jeweils unabhängig voneinander F, Cl, CF₃ oder CHF₂,
L⁵ H oder Methyl
Z^{2A} und Z^{2B} jeweils unabhängig voneinander -CH₂CH₂-, -CH=CH-, -CF₂O-, -OCF₂-, -CH₂O-, -OCH₂-, -COO-, -OCO-, -C₂F₄-, -CF=CF-, oder -CH=CHCH₂O-,
(O) O oder eine Einfachbindung,
p 1 oder 2,
q 0 oder 1,
c 0, 1 oder 2, und
d 1 oder 2 ist,
enthält.

2. Flüssigkristallines Medium nach Anspruch 1, wobei das Medium eine oder mehrere Verbindungen der Formel IA oder IB enthält, worin Z^{2A} und Z^{2B} unabhängig voneinander -CH₂CH₂-, -CH₂O- oder -OCH₂-bedeuten.

3. Flüssigkristallines Medium nach Anspruch 1 oder 2, wobei das Medium eine oder mehrere Verbindungen EY ausgewählt aus der Gruppe der Verbindungen der folgenden Formeln enthält:

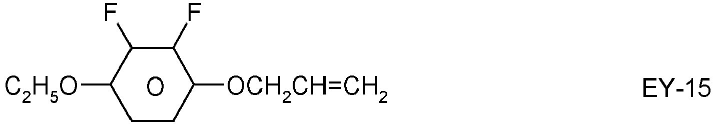

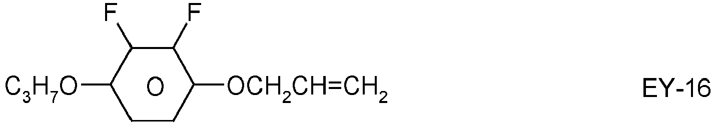

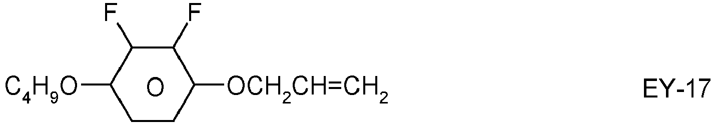

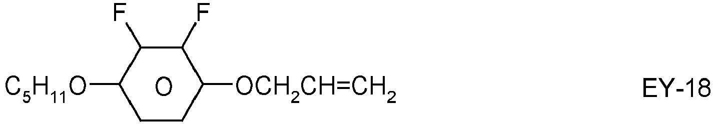

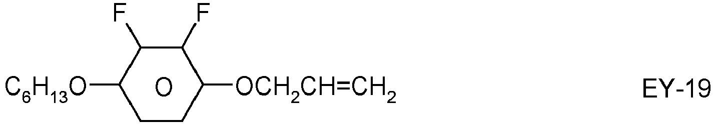

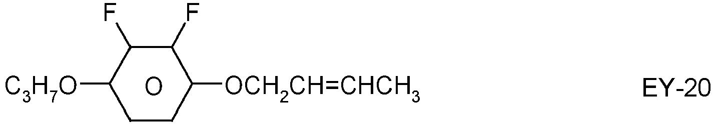

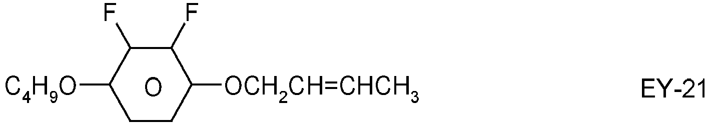

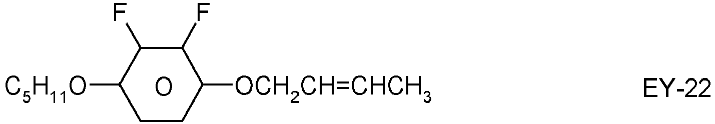

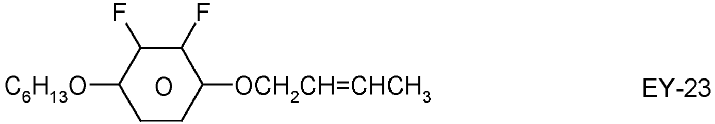

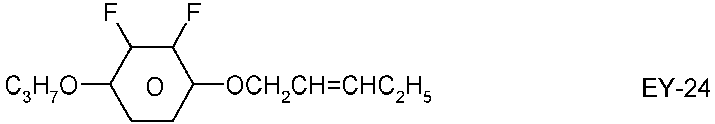

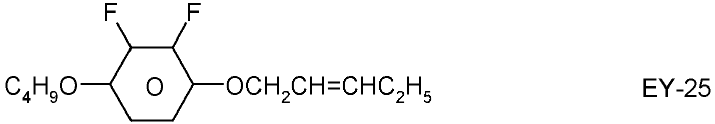

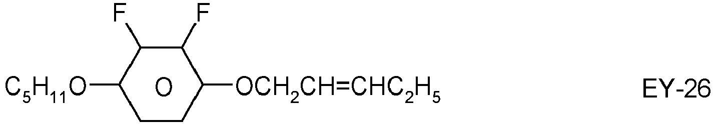

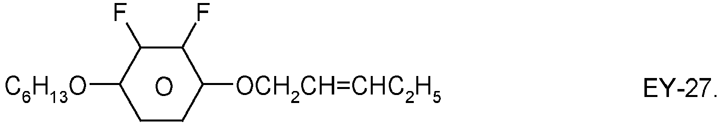

4. Flüssigkristallines Medium nach Anspruch 3, wobei das Medium die Verbindung EY-15, wie in Anspruch 3 definiert, enthält.

5. Flüssigkristallines Medium nach einem oder mehreren der Ansprüche 1 bis 4, wobei das Medium eine oder mehrere Verbindungen ausgewählt aus der Gruppe der Verbindungen der Formeln IIA, IIB und IIC enthält, 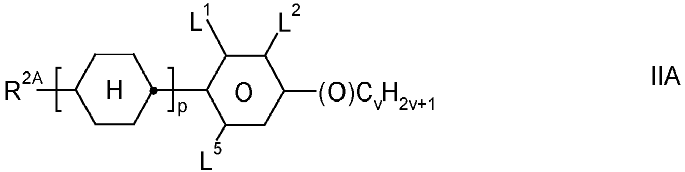 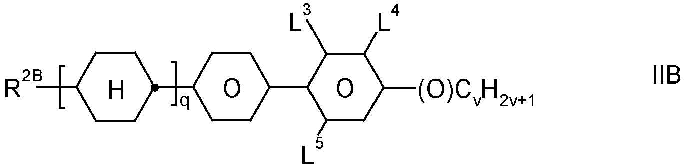 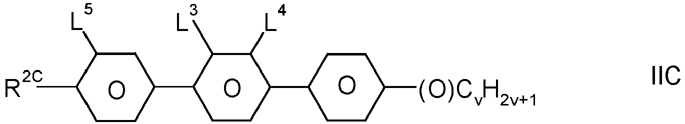 worin
R^{2A}, R^{2B} und R^{2C} jeweils unabhängig voneinander H, einen unsubstituierten, einen einfach durch CN oder CF₃ oder mindestens einfach durch Halogen substituierten Alkyl- oder Alkenylrest mit bis zu 15 C-Atomen, wobei in diesen Resten auch eine oder mehrere CH₂-Gruppen durch -O-, -S-, 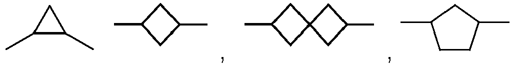 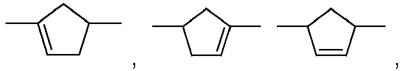 -C≡C-, -CF₂O-, -OCF₂-, -OC-O- oder -O-CO- so ersetzt sein können, daß O-Atome nicht direkt miteinander verknüpft sind,
L¹⁻⁴ jeweils unabhängig voneinander F, Cl, CF₃ oder CHF₂,
L⁵ H oder Methyl,
p 1 oder 2,
q 0 oder 1,
v eine ganze Zahl von 1 bis 6, und
(O) ein Sauerstoffatom oder eine Einfachbindung
bedeuten, mit der Maßgabe, daß die Verbindungen der Formeln IA und IB gemäß Anspruch 1 ausgeschlossen sind.

6. Flüssigkristallines Medium nach Anspruch 5, wobei das Medium eine oder mehrere Verbindungen der Formel IIB, wie in Anspruch 5 definiert, enthält, worin q gleich 0 ist.

7. Flüssigkristallines Medium nach einem oder mehreren der Ansprüche 1 bis 6, wobei das Medium eine oder mehrere Verbindungen ausgewählt aus der Gruppe der Verbindungen B-1 bis B-4 enthält: 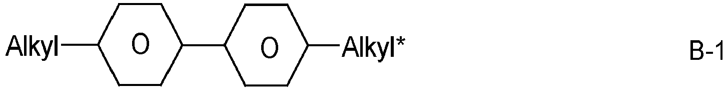 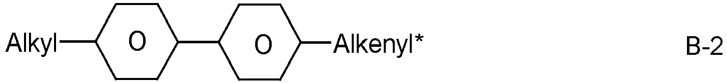 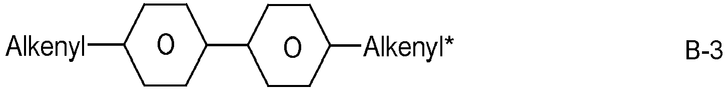 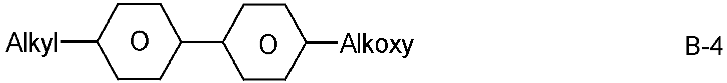 worin
Alkyl und Alkyl* jeweils unabhängig voneinander einen gerad-kettigen Alkylrest mit 1-6 C-Atomen,
Alkenyl und Alkenyl* jeweils unabhängig voneinander einen geradkettigen Alkenylrest mit 2-6 C-Atomen, und
Alkoxy einen geradkettigen Alkoxyrest mit 1-6 C-Atomen,
bedeuten.

8. Flüssigkristallines Medium nach einem oder mehreren der Ansprüche 1 bis 7, wobei das Medium eine oder mehrere Verbindungen der Formeln O-1 bis O-17 enthält 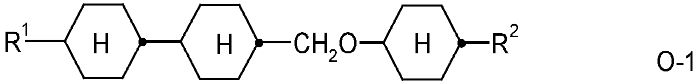 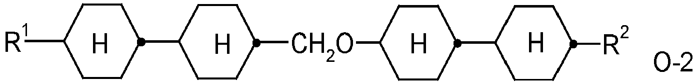 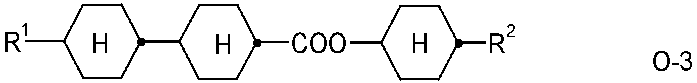 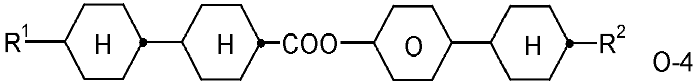 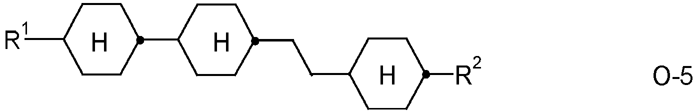 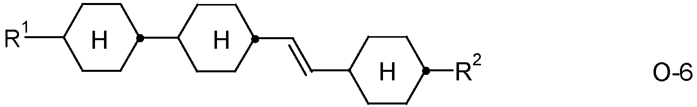 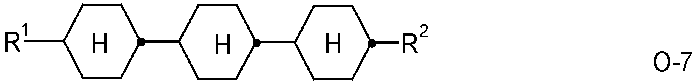 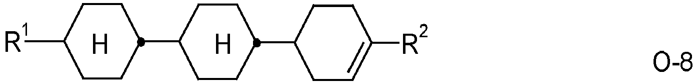 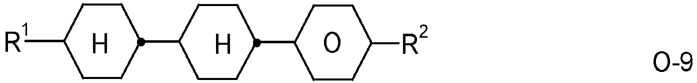 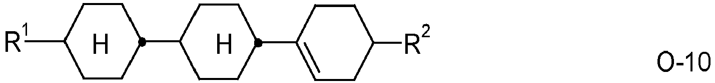 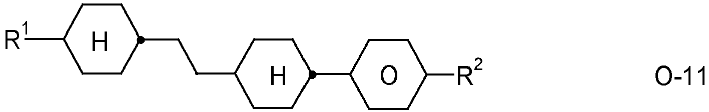 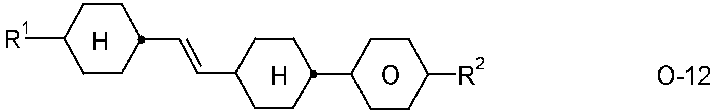 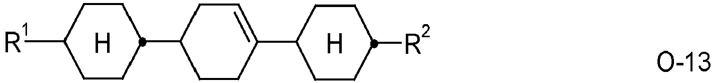 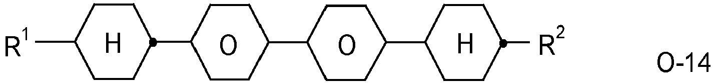 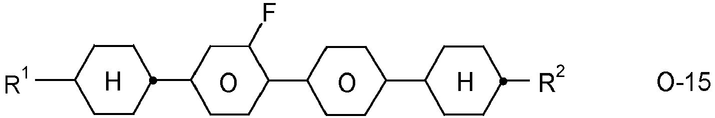 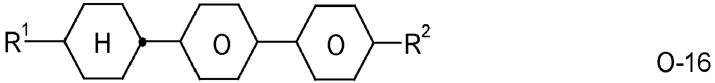 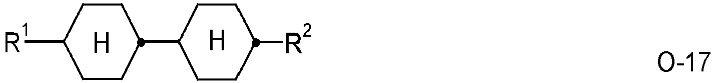 worin R¹ und R² die für R^{2A} für Formel IIA in Anspruch 5 angegebenen Bedeutungen haben.

9. Flüssigkristallines Medium nach einem oder mehreren der Ansprüche 1 bis 8, wobei die Gesamtkonzentration der einen oder mehreren Verbindungen der Formel EY 2 - 15 Gew.% beträgt.

10. Flüssigkristallines Medium nach einem oder mehreren der Ansprüche 1 bis 9, wobei die Gesamtkonzentration der Verbindungen der Formel EY und IA und/oder IB 5 - 35 Gew.% beträgt.

11. Flüssigkristallines Medium nach einem oder mehreren der Ansprüche 1 bis 10, wobei das Medium mindestens eine polymerisierbare Verbindung (reaktives Mesogen) enthält.

12. Flüssigkristallines Medium nach einem oder mehreren der Ansprüche 1 bis 11, **dadurch gekennzeichnet, daß** das Medium ein oder mehrere Additive enthält, ausgewählt aus der Gruppe bestehend aus Radikalfängern, Antioxidantien und UV-Stabilisatoren.

13. Verfahren zur Herstellung eines flüssigkristallinen Mediums nach einem oder mehreren der Ansprüche 1 bis 12, **dadurch gekennzeichnet, daß** man jeweils eine Verbindung der Formel IA und IB mit mindestens einer Verbindung der Formel EY und mit mindestens einer weiteren flüssigkristallinen Verbindung mischt und gegebenenfalls ein oder mehrere Additive und gegebenfalls mindestens eine polymerisierbare Verbindung (reaktives Mesogen) zusetzt.

14. Verwendung des flüssigkristallinen Mediums nach einem oder mehreren der Ansprüche 1 bis 12 in elektrooptischen Anzeigen.

15. Elektrooptische Anzeige mit einer Aktivmatrix-Addressierung, **dadurch gekennzeichnet, daß** sie als Dielektrikum ein flüssigkristallines Medium nach einem oder mehreren der Ansprüche 1 bis 12 enthält.

16. Elektrooptische Anzeige nach Anspruch 15, **dadurch gekennzeichnet, daß** es sich um eine VA-, PSA-, PS-VA-, PM-VA-, SS-VA-, PALC-, IPS-, PS-IPS-, FFS- oder PS-FFS-Anzeige handelt.

## Claims

1. Liquid-crystalline medium, **characterised in that** it comprises one or more compounds of the formula EY 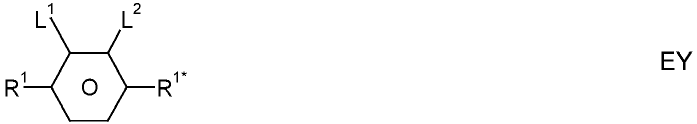 and
one or more compounds selected from the group of the compounds of the formulae IA and IB 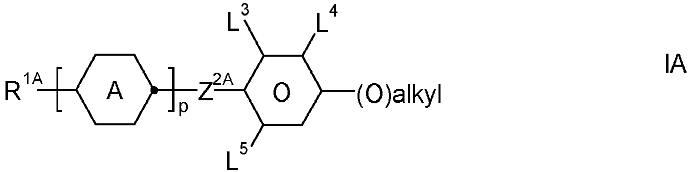 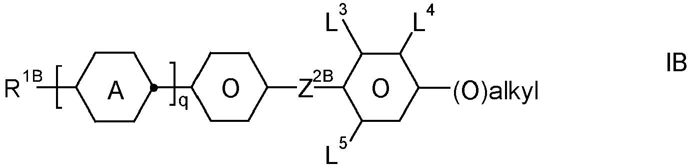 and/or one or more compounds selected from the group of the compounds of the formulae BF-1, BF-2, BS-1 and BS-2: 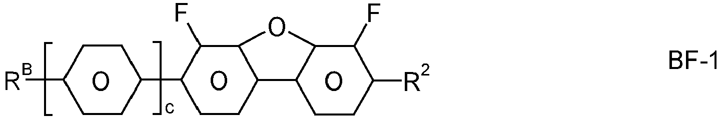 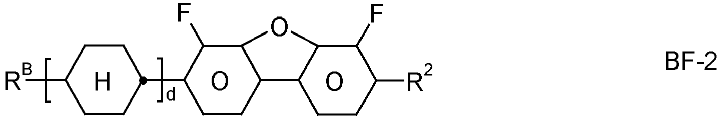 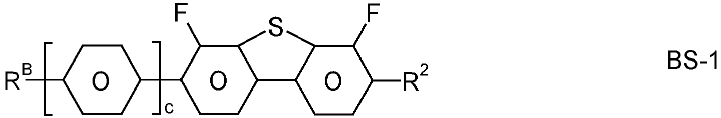 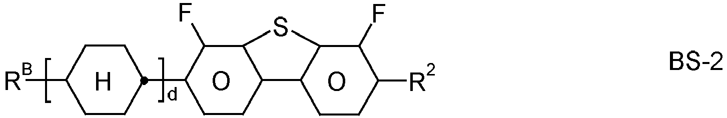 in which the individual radicals in each case, independently of one another, and identically or differently on each occurrence, have one of the following meanings:
R¹ denotes an alkenyloxy radical having 2 to 7 C atoms,
R^{1*} denotes an alkoxy radical having 1 to 6 C atoms or an alkenyloxy radical having 2 to 7 C atoms,
R^{1A} , R^{1B} and R^{B} denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 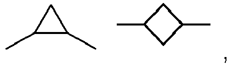 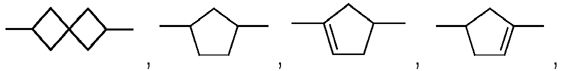 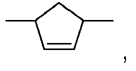 -C≡C-, -CF₂O-, -OCF₂-, -OC-O- or -O-CO- in such a way that O atoms are not linked directly to one another, 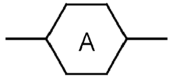 on each occurence, identically or differently, denotes, 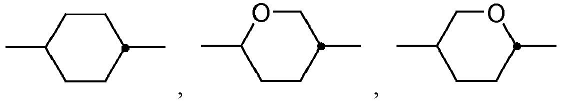 or 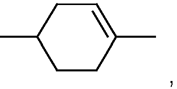
L¹, L², independently of one another, denote F or Cl,
L³, L⁴ in each case, independently of one another, denote F, Cl, CF₃ or CHF₂,
L⁵ denotes H or methyl,
Z^{2A} and Z^{2B} in each case, independently of one another, denote -CH₂CH₂-, -CH=CH-, -CF₂O-, -OCF₂-, -CH₂O-, -OCH₂-, -COO-, -OCO-, -C₂F₄-, -CF=CF- or -CH=CHCH₂O-,
(O) denotes O or a single bond,
p denotes 1 or 2,
q denotes 0 or 1,
c denotes 0, 1 or 2, and
d denotes 1 or 2.

2. Liquid-crystalline medium according to Claim 1, where the medium comprises one or more compounds of the formula IA or IB in which Z^{2A} and Z^{2B}, independently of one another, denote -CH₂CH₂-, -CH₂O- or -OCH₂-.

3. Liquid-crystalline medium according to Claim 1 or 2, where the medium comprises one or more compounds EY selected from the group of the compounds of the following formulae:

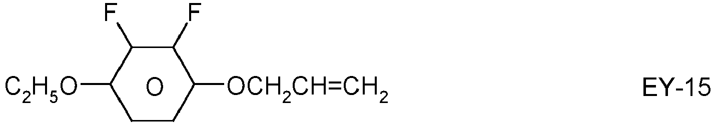

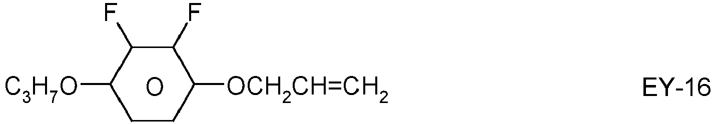

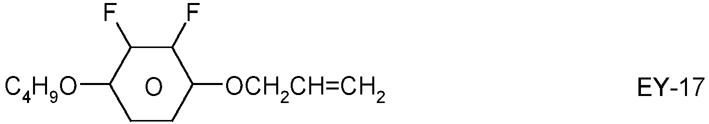

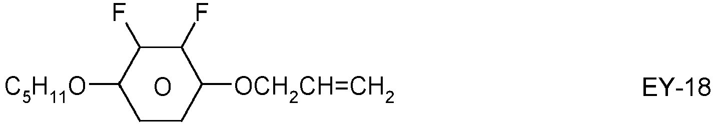

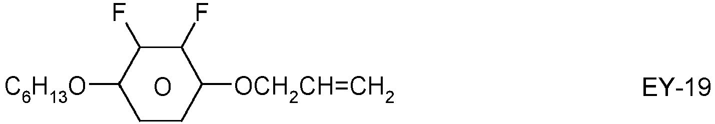

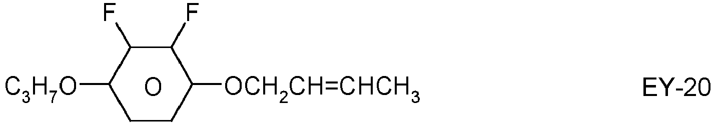

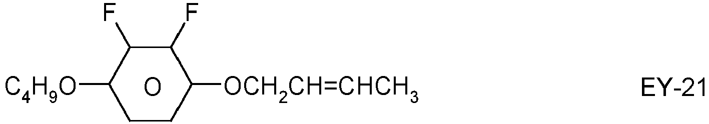

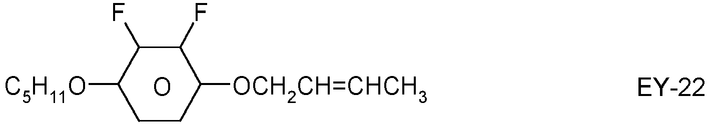

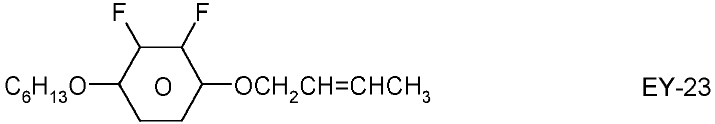

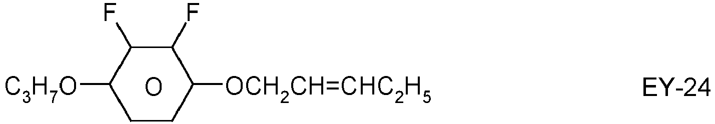

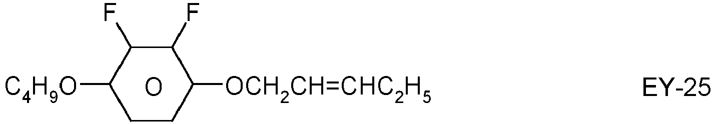

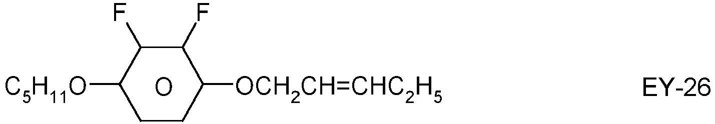

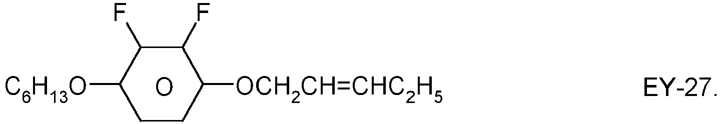

4. Liquid-crystalline medium according to Claim 3, where the medium comprises the compound EY-15, as defined in Claim 3.

5. Liquid-crystalline medium according to one or more of Claims 1 to 4, where the medium comprises one or more compounds selected from the group of the compounds of the formulae IIA, IIB and IIC, 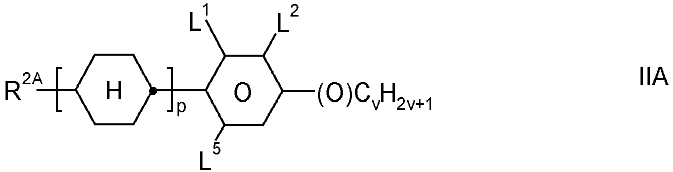 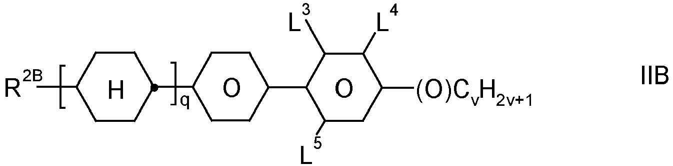 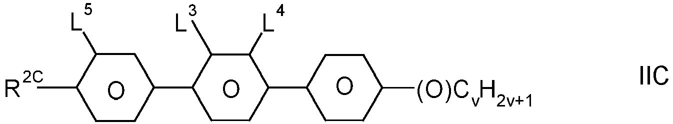 in which
R^{2A}, R^{2B} and R^{2C} in each case, independently of one another, denote H, an alkyl or alkenyl radical having up to 15 C atoms which is unsubstituted, monosubstituted by CN or CF₃ or at least monosubstituted by halogen, where, in addition, one or more CH₂ groups in these radicals may be replaced by -O-, -S-, 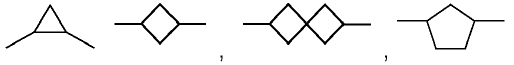 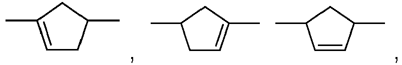 -C≡C-, -CF₂O-, -OCF₂-, -OC-O- or -O-CO- in such a way that O atoms are not linked directly to one another,
L¹⁻⁴ in each case, independently of one another, denote F, Cl, CF₃ or CHF₂,
L⁵ denotes H or methyl,
p denotes 1 or 2,
q denotes 0 or 1,
v denotes an integer from 1 to 6, and
(O) denotes an oxygen atom or a single bond,
with the proviso that the compounds of the formulae IA and IB according to Claim 1 are excluded.

6. Liquid-crystalline medium according to Claim 5, where the medium comprises one or more compounds of the formula IIB, as defined in Claim 6, in which q is equal to 0.

7. Liquid-crystalline medium according to one or more of Claims 1 to 6, where the medium comprises one or more compounds selected from the group of the compounds B-1 to B-4: 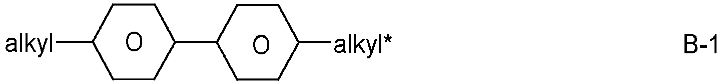 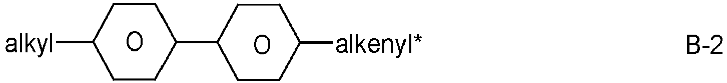 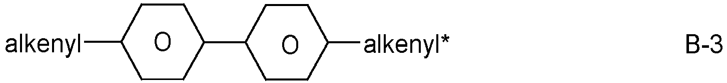 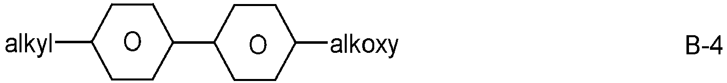 in which
alkyl and alkyl* in each case, independently of one another, denote a straight-chain alkyl radical having 1-6 C atoms,
alkenyl and alkenyl* in each case, independently of one another, denote a straight-chain alkenyl radical having 2-6 C atoms, and
alkoxy denotes a straight-chain alkoxy radical having 1-6 C atoms.

8. Liquid-crystalline medium according to one or more of Claims 1 to 7, where the medium comprises one or more compounds of the formulae O-1 to 0-17 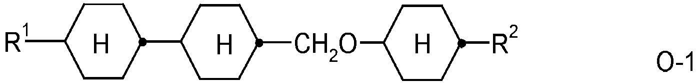 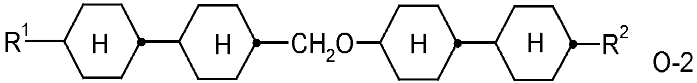 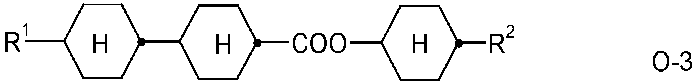 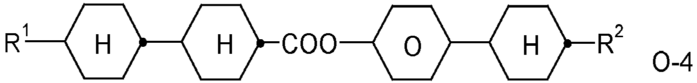 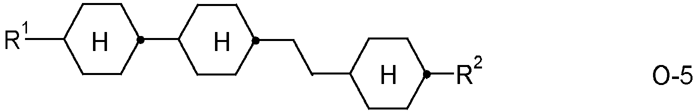 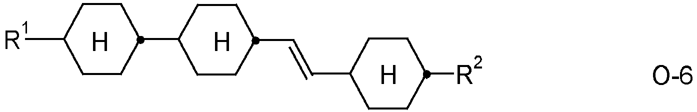 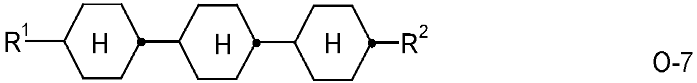 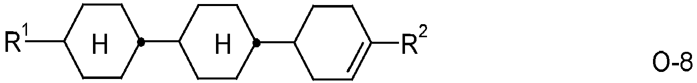 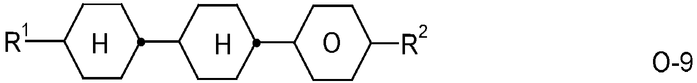 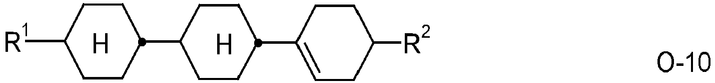 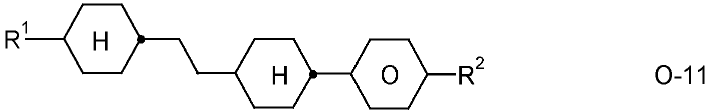 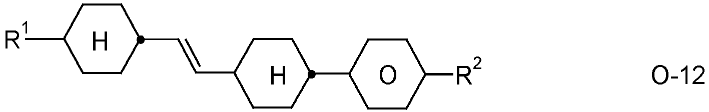 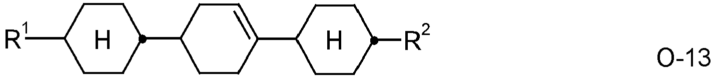 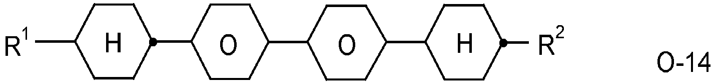 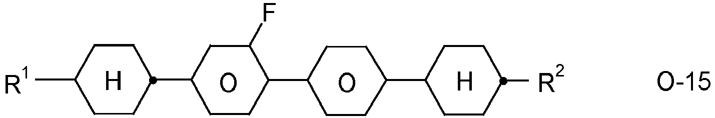 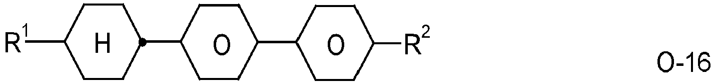 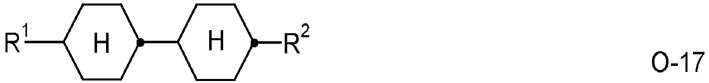 in which R¹ and R² have the meanings indicated for R^{2A} for formula IIA in Claim 5.

9. Liquid-crystalline medium according to one or more of Claims 1 to 8, where the total concentration of the one or more compounds of the formula EY is 2 - 15% by weight.

10. Liquid-crystalline medium according to one or more of Claims 1 to 9, where the total concentration of the compounds of the formulae EY and IA and/or IB is 5 - 35% by weight.

11. Liquid-crystalline medium according to one or more of Claims 1 to 10, where the medium comprises at least one polymerisable compound (reactive mesogen).

12. Liquid-crystalline medium according to one or more of Claims 1 to 11, **characterised in that** the medium comprises one or more additives selected from the group consisting of free-radical scavengers, antioxidants and UV stabilisers.

13. Process for the preparation of a liquid-crystalline medium according to one or more of Claims 1 to 12, **characterised in that** in each case a compound of the formula IA or IB is mixed with at least one compound of the formula EY and with at least one further liquid-crystalline compound, and optionally one or more additives and optionally at least one polymerisable compound (reactive mesogen) are added.

14. Use of the liquid-crystalline medium according to one or more of Claims 1 to 12 in electro-optical displays.

15. Electro-optical display having active-matrix addressing, **characterised in that** it contains, as dielectric, a liquid-crystalline medium according to one or more of Claims 1 to 12.

16. Electro-optical display according to Claim 15, **characterised in that** it is a VA, PSA, PS-VA, PM-VA, SS-VA, PALC, IPS, PS-IPS, FFS or PS-FFS display.

## Revendications

1. Milieu cristallin liquide, **caractérisé en ce qu'**il comprend un ou plusieurs composé(s) de la formule EY 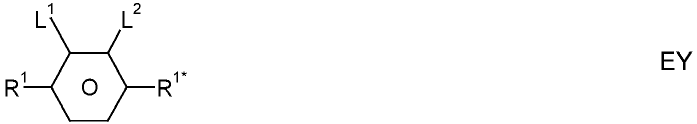 et
un ou plusieurs composé(s) qui est/sont sélectionné(s) parmi le groupe des composés des formules IA et IB 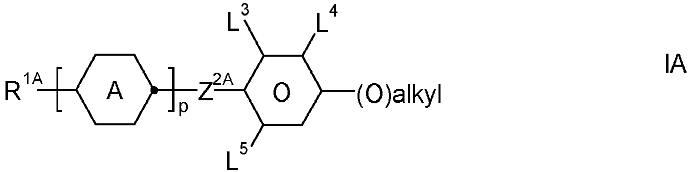 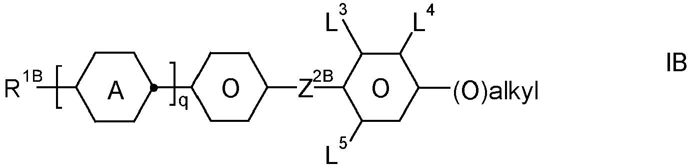 et/ou un ou plusieurs composé(s) qui est/sont sélectionné(s) parmi le groupe des composés des formules BF-1, BF-2, BS-1 et BS-2 : 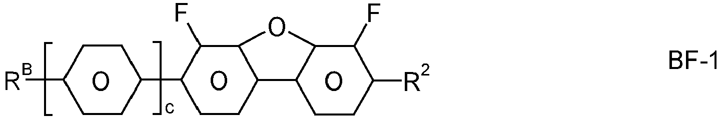 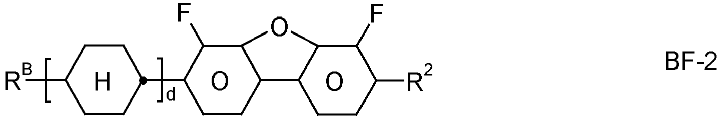 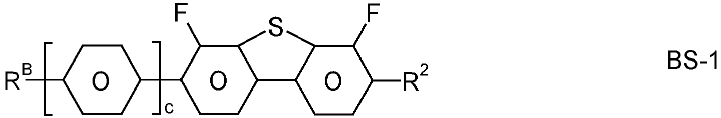 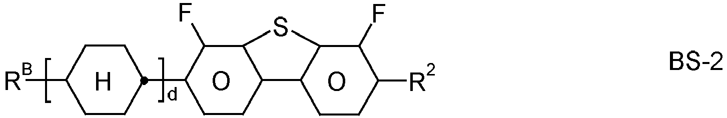 dans lesquelles les radicaux individuels présentent dans chaque cas, de manière indépendante les uns des autres, et de manière identique ou différente pour chacun occurrence, l'une des significations qui suivent :
R¹ représente un radical alkényloxy qui comporte de 2 à 7 atomes de C,
R^{1*} représente un radical alcoxy qui comporte de 1 à 6 atome(s) de C ou un radical alkényloxy qui comporte de 2 à 7 atomes de C,
R^{1A}, R^{1B} et R^{B} représentent H, un radical alkyle ou alkényle qui comporte jusqu'à 15 atomes de C, lequel est non substitué, monosubstitué par CN ou par CF₃ ou au moins monosubstitué par halogène, où, en outre, un ou plusieurs groupe(s) CH₂ dans ces radicaux peut/peuvent être remplacé(s) par -O-, -S-, 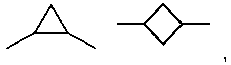 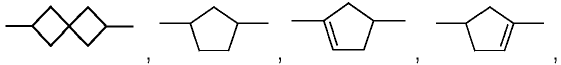 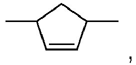 -C≡C-, -CF₂O-, -OCF₂-, -OC-O- ou -O-CO- de telle sorte que des atomes de O ne soient pas liés directement les uns aux autres, 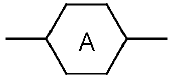 représente pour chaque occurrence, de manière identique ou différente, 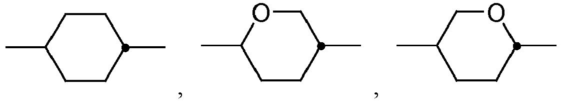 ou 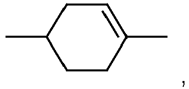
L¹, L² représentent, de manière indépendante l'un de l'autre, F ou Cl,
L³, L⁴ représentent dans chaque cas, de manière indépendante l'un de l'autre, F, Cl, CF₃ ou CHF₂,
L⁵ représente H ou méthyle,
Z^{2A} et Z^{2B} représentent dans chaque cas, de manière indépendante l'un de l'autre, -CH₂CH₂-, -CH=CH-, -CF₂O-, -OCF₂-, -CH₂O-, -OCH₂-, -COO-, -OCO-, -C₂F₄-, -CF=CF- ou -CH=CHCH₂O-,
(O) représente O ou une liaison simple,
p représente 1 ou 2,
q représente 0 ou 1,
c représente 0, 1 ou 2, et
d représente 1 ou 2.

2. Milieu cristallin liquide selon la revendication 1, dans lequel le milieu comprend un ou plusieurs composé(s) de la formule IA ou IB dans laquelle Z^{2A} et Z2B représentent, de manière indépendante l'un de l'autre, -CH₂CH₂-, -CH₂O- ou -OCH₂-.

3. Milieu cristallin liquide selon la revendication 1 ou 2, dans lequel le milieu comprend un ou plusieurs composé(s) EY qui est/sont sélectionné(s) parmi le groupe des composés des formules qui suivent :

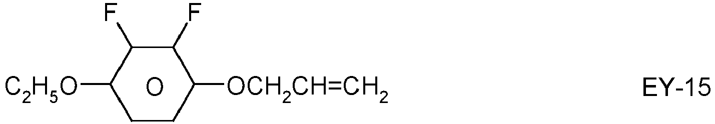

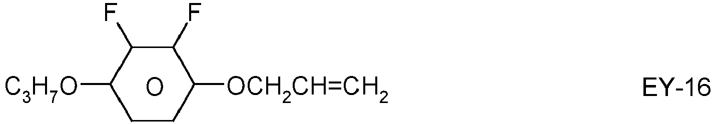

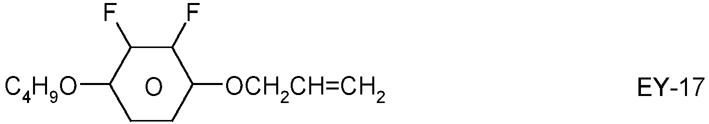

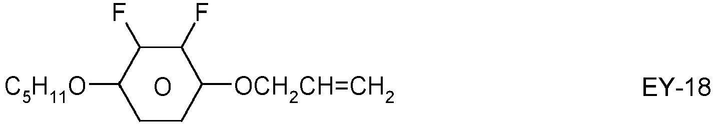

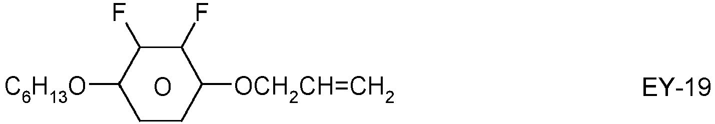

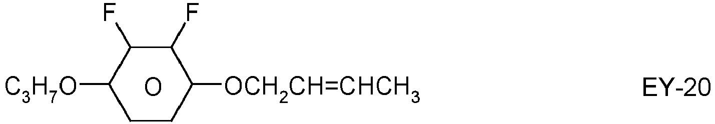

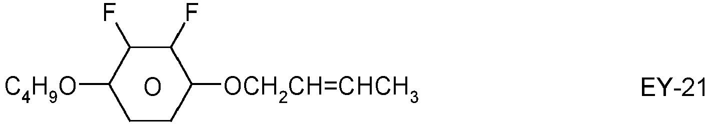

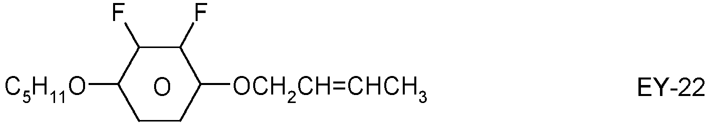

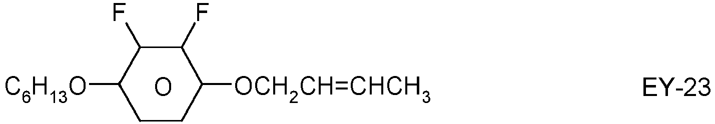

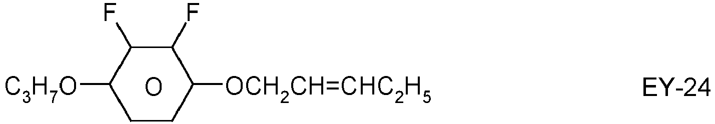

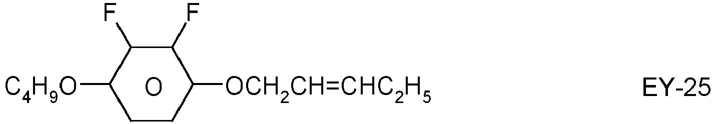

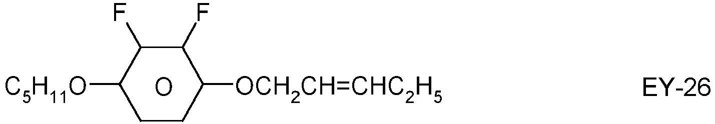

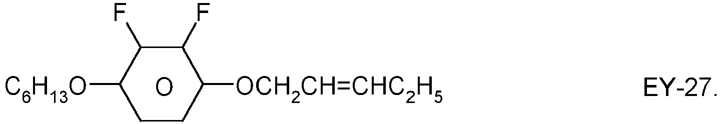

4. Milieu cristallin liquide selon la revendication 3, dans lequel le milieu comprend le composé EY-15, comme il a été défini selon la revendication 3.

5. Milieu cristallin liquide selon une ou plusieurs des revendications 1 à 4, dans lequel le milieu comprend un ou plusieurs composé(s) qui est/sont sélectionné(s) parmi le groupe des composés des formules IIA, IIB et IIC, 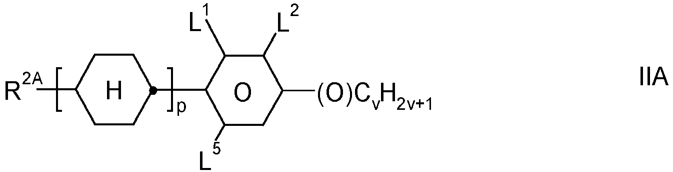 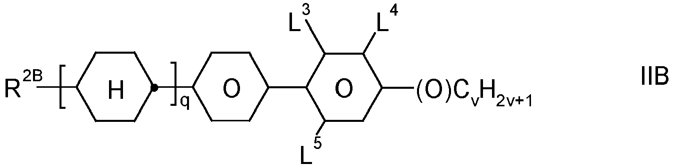 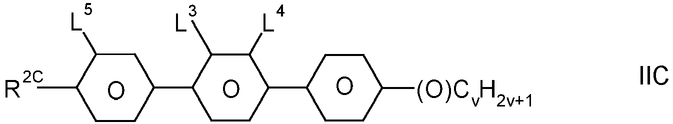 dans lesquelles
R^{2A}, R^{2B} et R^{2C} représentent dans chaque cas, de manière indépendante les uns des autres, H, un radical alkyle ou alkényle qui comporte jusqu'à 15 atomes de C, lequel est non substitué, monosubstitué par CN ou par CF₃ ou au moins monosubstitué par halogène, où, en outre, un ou plusieurs groupe(s) CH₂ dans ces radicaux peut/peuvent être remplacé(s) par -O-, -S-, 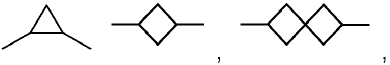 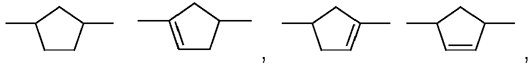 -C≡C-, -CF₂O-, -OCF₂-, -OC-O- ou -O-CO- de telle sorte que des atomes de O ne soient pas liés directement les uns aux autres,
L¹⁻⁴ représentent dans chaque cas, de manière indépendante les uns des autres, F, Cl, CF₃ ou CHF₂,
L⁵ représente H ou méthyle,
p représente 1 ou 2,
q représente 0 ou 1,
v représente un entier de 1 à 6, et
(O) représente un atome d'oxygène ou une liaison simple,
étant entendu que les composés des formules IA et IB selon la revendication 1 sont exclus.

6. Milieu cristallin liquide selon la revendication 5, dans lequel le milieu comprend un ou plusieurs composé(s) de la formule IIB, comme il a été défini selon la revendication 6, dans laquelle q est égal à 0.

7. Milieu cristallin liquide selon une ou plusieurs des revendications 1 à 6, dans lequel le milieu comprend un ou plusieurs composé(s) qui est/sont sélectionné(s) parmi le groupe des composés B-1 à B-4 : 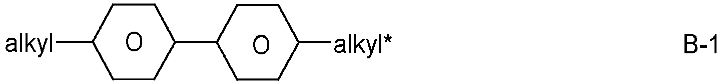 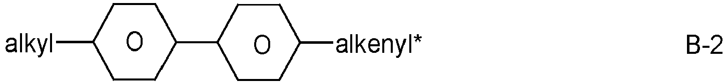 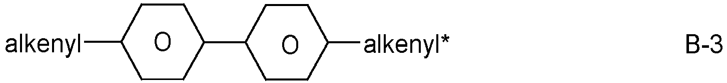 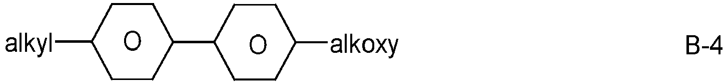 dans lesquels
alkyl et alkyl* représentent dans chaque cas, de manière indépendante l'un de l'autre, un radical alkyle en chaîne droite qui comporte de 1 à 6 atome(s) de C,
alkenyl et alkenyl* représentent dans chaque cas, de manière indépendante l'un de l'autre, un radical alkényle en chaîne droite qui comporte de 2 à 6 atomes de C, et
alkoxy représente un radical alcoxy en chaîne droite qui comporte de 1 à 6 atome(s) de C.

8. Milieu cristallin liquide selon une ou plusieurs des revendications 1 à 7, dans lequel le milieu comprend un ou plusieurs composé(s) des formules O-1 à O-17 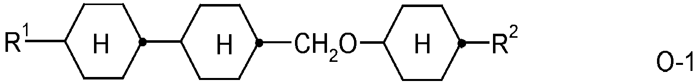 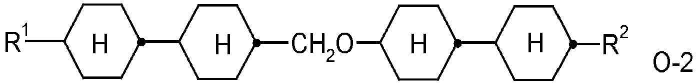 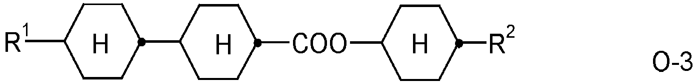 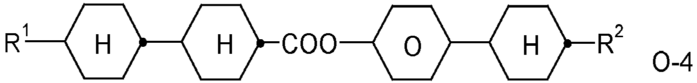 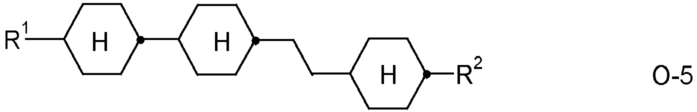 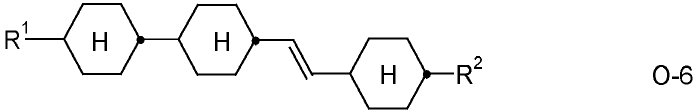 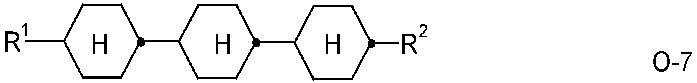 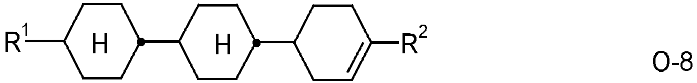 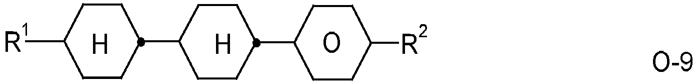 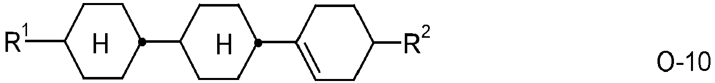 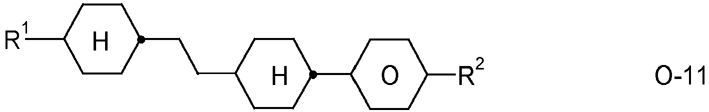 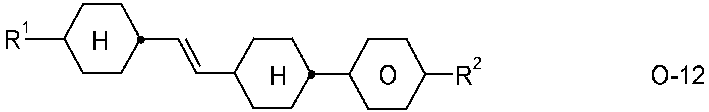 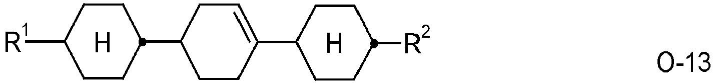 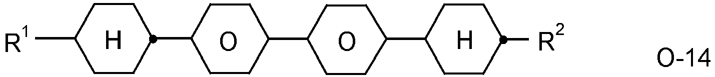 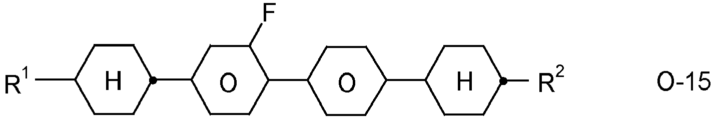 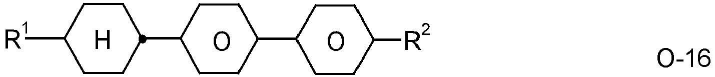 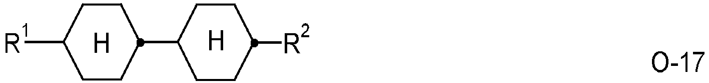 dans lesquelles R¹ et R² présentent les significations qui ont été indiquées pour R^{2A} pour la formule IIA selon la revendication 5.

9. Milieu cristallin liquide selon une ou plusieurs des revendications 1 à 8, dans lequel la concentration totale des un ou plusieurs composés de la formule EY va de 2 % à 15 % en poids.

10. Milieu cristallin liquide selon une ou plusieurs des revendications 1 à 9, dans lequel la concentration totale des un ou plusieurs composés des formules EY et IA et/ou IB va de 5 % à 35 % en poids.

11. Milieu cristallin liquide selon une ou plusieurs des revendications 1 à 10, dans lequel le milieu comprend au moins un composé polymérisable (mésogène réactif).

12. Milieu cristallin liquide selon une ou plusieurs des revendications 1 à 11, **caractérisé en ce que** le milieu comprend un ou plusieurs additif(s) qui est/sont sélectionné(s) parmi le groupe qui est constitué par les piégeurs de radicaux libres, les antioxydants et les stabiliseurs UV.

13. Procédé pour la préparation d'un milieu cristallin liquide selon une ou plusieurs des revendications 1 à 12, **caractérisé en ce que**, dans chaque cas, un composé de la formule IA ou IB est mélangé avec au moins un composé de la formule EY et avec au moins un autre composé cristallin liquide, et en option, un ou plusieurs additif(s) et en option, au moins un composé polymérisable (mésogène réactif) sont ajoutés.

14. Utilisation du milieu cristallin liquide selon une ou plusieurs des revendications 1 à 12 dans les affichages électrooptiques.

15. Affichage électrooptique comportant un adressage par matrice active, **caractérisé en ce qu'**il contient, en tant que diélectrique, un milieu cristallin liquide selon une ou plusieurs des revendications 1 à 12.

16. Affichage électrooptique selon la revendication 15, **caractérisé en ce qu'**il s'agit d'un affichage VA, PSA, PS-VA, PM-VA, SS-VA, PALC, IPS, PS-IPS, FFS ou PS-FFS.
